# EUROPEAN PATENT SPECIFICATION

(11) **EP 2 061 115 B1**
(45) Date of publication and mention of the grant of the patent: **01.04.2015**
(21) Application number: 07792892.7
(22) Date of filing: 22.08.2007
(51) Int. Cl.: H01M 10/0525, H01M 10/0568, C01B 25/455, H01M 10/052, H01M 10/0569, H01M 4/131, H01M 4/133, H01M 4/134, H01M 4/485, H01M 4/505, H01M 4/525, H01M 4/58, H01M 4/587, H01M 4/02, H01M 10/0567

(54) **LITHIUM DIFLUOROPHOSPHATE, ELECTROLYTIC SOLUTION CONTAINING LITHIUM DIFLUOROPHOSPHATE, PROCESS FOR PRODUCING LITHIUM DIFLUOROPHOSPHATE, PROCESS FOR PRODUCING NONAQUEOUS ELECTROLYTIC SOLUTION, NONAQUEOUS ELECTROLYTIC SOLUTION, AND NONAQUEOUS-ELECTROLYTIC-SOLUTION SECONDARY CELL EMPLOYING THE SAME**
LITHIUMDIFLUORPHOSPHAT, LITHIUMDIFLUORPHOSPHAT ENTHALTENDE ELEKTROLYTLÖSUNG, PROZESS ZUR HERSTELLUNG VON LITHIUMDIFLUORPHOSPHAT, PROZESS ZUR HERSTELLUNG EINER WASSERFREIEN ELEKTROLYTLÖSUNG, WASSERFREIE ELEKTROLYTLÖSUNG UND SEKUNDÄRZELLE MIT WASSERFREIER ELEKTROLYTLÖSUNG
LITHIUM DIFLUOROPHOSPHATE DE LITHIUM, SOLUTION ÉLECTROLYTIQUE CONTENANT DU DIFLUOROPHOSPHATE DE LITHIUM, PROCÉDÉ POUR PRODUIRE DU DIFLUOROPHOSPHATE DE LITHIUM, PROCÉDÉ POUR PRODUIRE UNE SOLUTION ÉLECTROLYTIQUE NON AQUEUSE, SOLUTION ÉLECTROLYTIQUE NON AQUEUSE, ET CELLULE SECON

(30) Priority: 22.08.2006 JP 2006225409; 02.11.2006 JP 2006299360
(43) Date of publication of application: 20.05.2009
(73) Proprietor: Mitsubishi Chemical Corporation, Chiyoda-ku Tokyo 100-8251 (JP)
(72) Inventor: TAKEHARA, Masahiro, Ibaraki 300-0332 (JP)
(74) Representative: Hoffmann Eitle
(86) International application number: PCT/JP2007/066306
(87) International publication number: WO 2008/023744

(56) References cited:
- JP-A- 2004 031 079
- JP-A- 2004 063 432
- JP-A- 2005 053 727
- JP-A- 2005 219 994
- JP-A- 2005 219 994
- JP-A- 2005 306 619
- JP-A- 2006 143 572
- JP-B2- 2 983 580
- JP-B2- 3 439 085
- OMAR FAROOQ ET AL: "Alkali metal salts of perfluorinated complex anions. Effective reagents for nucleophilic fluorination", THE JOURNAL OF ORGANIC CHEMISTRY, vol. 59, no. 8, 1 April 1994 (1994-04-01), pages 2122-2124, XP55004735, ISSN: 0022-3263, DOI: 10.1021/jo00087a031
- FAROOQ O: "Nucleophilic fluorination of alkoxysilane with alkali metal hexafluorophosphate--part 1", JOURNAL OF FLUORINE CHEMISTRY, ELSEVIER, NL, vol. 86, no. 2, 5 December 1997 (1997-12-05), pages 189-197, XP004107220, ISSN: 0022-1139, DOI: 10.1016/S0022-1139(97)00112-7
- VAST P ET AL: "Systematic study of the synthesis of metal phosphorodifluoridates from diphosphoryl fluoride", JOURNAL OF FLUORINE CHEMISTRY, ELSEVIER, NL, vol. 38, no. 3, 1 January 1988 (1988-01-01), pages 297-302, XP002605963, ISSN: 0022-1139

## Description

### Technical Field

The present invention relates to nonaqueous electrolytes containing lithium difluorophosphate and nonaqueous electrolyte secondary batteries containing the nonaqueous electrolytes.

The term "difluorophosphate salt" used herein generically includes salts consisting of difluorophosphate anions and any cations, and the term "hexafluorophosphate salt" generically includes salts consisting of hexafluorophosphate anions and any cations.

### Background Art

Difluorophosphate salts are commercially useful compounds, which have been used as, for example, stabilizers for chloroethylene polymers (see Patent Document 1), catalysts for reactive lubricants (see Patent Document 2), antibacterials used in dentifrice formulations (see Patent Document 3), and timber preservatives (see Patent Document 4).

Examples of processes for producing difluorophosphate salts include known reactions represented by the following formulae (i) and (ii) below (see Nonpatent Documents 1 and 2). In the formulae (i) to (v), M represents a metal atom, and L represents a ligand.
[Chemical Formula 1]

**P₂O₃F₄ + ML → MPO₂F₂ + LPOF₂** (i)

[Chemical Formula 2]

**P₂O₃F₄ + MO→ 2MPO₂F₂** (ii)

The reaction represented by the following formula (iii) is also known (see Nonpatent Document 3).
[Chemical Formula 3]

**HPO₂F₂ + MOH → MPO₂F₂ + H₂O** (iii)

The reaction represented by the following formula (iv) is also known (see Nonpatent Documents 1, 4, and 5).
[Chemical Formula 4]

**P₂O₅ + NH₄F→ NH₄PO₂F₂ + (NH₄)₂POF₃** (iv)

In addition, the reaction represented by the formula (v) is known (see Nonpatent Document 6).
[Chemical Formula 5]

**MPF₆ + MPO₃ → MPO₂F₂** (v)

In recent years, size and weight reduction of electrical appliances has propelled the development of nonaqueous electrolyte secondary batteries with high energy density, for example, lithium-ion secondary batteries. Further improvements in battery property have been required with expansion of the application fields of such lithium-ion secondary batteries.

Nonaqueous solvents and electrolytes have been extensively examined in order to enhance battery properties of such lithium-ion secondary batteries, such as load, cycle, storage, and low-temperature characteristics. For instance, in Patent Document 5, electrolytes containing ethylene vinylcarbonate compounds provide batteries with superior storage and cycle characteristics due to minimal degradation of the solution. In Patent Document 6, electrolytes containing propane sultone can provide batteries with increased recovery capacity after preservation.

While these electrolytes containing such compounds can enhance storage and cycle characteristics of batteries to some extent, they have disadvantages of forming a high-resistance membrane on the negative electrode in the battery, which impairs low-temperature discharge and heavy-current discharge characteristics of the battery.

Patent Document 7 discloses that electrolytes containing additional compounds represented by formula (1) in this Document can provide batteries with enhanced cycle characteristics, in addition to current characteristics.

Patent Document 8 also discloses that electrolytes containing predetermined compounds can provide batteries with enhanced low-temperature discharge characteristics.
[Patent Document 1] U.S. Patent No. 2846412
[Patent Document 2] Japanese Unexamined Patent Application Publication No. 5-255133
[Patent Document 3] National Publication of Translated Version of PCT Application No. 10-503196
[Patent Document 4] National Publication of Translated Version of PCT Application No. 2002-501034
[Patent Document 5] Japanese Unexamined Patent Application Publication No. 2001-006729
[Patent Document 6] Japanese Unexamined Patent Application Publication No. 10-050342
[Patent Document 7] Japanese Unexamined Patent Application Publication No. 08-078053
[Patent Document 8] Japanese Unexamined Patent Application Publication No. 11-185804
[Nonpatent Document 1] Journal of Fluorine Chemistry (1988), 38(3), 297
[Nonpatent Document 2] Inorganic Chemistry (1967), 6(10), 1915 [Nonpatent Document 3] Inorganic Nuclear Chemistry Letters (1969), 5(7), 581
[Nonpatent Document 4] Berichte der Deutschen Chemischen Gesellschaft zu Berlin (1929), 62, 786
[Nonpatent Document 5] Bulletion de la Societe Chimique de France (1968), 1675
[Nonpatent Document 6] Zhurnal Neorganicheskoi Khimii (1966), 11(12), 2694.

### Disclosure of Invention

### Problems to be solved by the Invention

As described above, difluorophosphate salts can be used in different applications and are of great utility. Also, such processes for producing these difluorophosphate salts as described above are known. However, the processes have the following issues.

The processes of production through the reactions represented by the formulae (i) and (ii) require a certain non-stable and highly toxic gas that is not readily industrially available, for example,

[Chemical Formula 6] **P₂O₃F₄**

as a starting material.

For the process of production through the reactions represented by the formula (iii), highly pure starting materials are not readily available, and the formed difluorophosphate salts may be hydrolyzed with water as a by-product.

In the process of production through the reactions represented by the formula (iv), only one particular compound (that is,

[Chemical Formula 7] **NH₄PO₂F₂ and (NH₄)₂POF₃**

) can be produced.

The production process through the reactions represented by the formula (v) requires elevated temperatures in order to melt solid materials to react, and special equipment and techniques in order to yield highly pure products.

If any by-products are formed in this process, their removal will entail additional cost. In fact, their complete removal is difficult, which requires complicated purifying steps.

These issues can hardly allow the conventional processes to readily produce highly pure difluorophosphate salts at low costs.

The present invention has been made in consideration of the issues. That is, an object of the present invention is to provide a process for producing a difluorophosphate salt comprising producing the difluorophosphate salt, which would otherwise be expensive and difficult to obtain, readily and efficiently from inexpensive and readily available materials, wherein the resultant difluorophosphate salt has a high purity.

Furthermore, the present invention has been made in consideration of such background arts, and another object thereof is to provide a nonaqueous electrolyte for secondary batteries that are excellent both in low-temperature discharge and heavy-current discharge characteristics, and in high-temperature preservation and cycle characteristics, and are free from safety problems.

### Means for solving the Problem

As a result of extensive study, the inventors have discovered the following fact and accomplished the present invention: A general-purpose hexafluorophosphate salt that is relatively readily available in the form of a highly pure product can react with a compound having the bond represented by the following formula (1) in its molecule (hereinafter referred to as "particular structural compound") that is inexpensive and readily available in the form of a highly pure product in order to produce a difluorophosphate salt advantageously on industrial scale in view of cost and production efficiency.
[Chemical Formula 8]

**Si-O-Si** (1)

As a result of extensive study based on these findings, the inventors have discovered the following fact that when a hexafluorophosphate salt, for example, LiPF₆ salt for the lithium-ion secondary battery, various nonaqueous solvents, and a compound having the bond represented by the following formula (1) (hereinafter abbreviated as "particular structural compound") are combined, the particular structural compound that should be present significantly decreases or disappears, but instead lithium difluorophosphate and any compound having a boiling point higher than that of the combined particular structural compound (hereinafter abbreviated as "low-boiling component") are newly formed.
[Chemical Formula 9]

**Si-O-Si** (1)

The low-boiling component is inflammable and has a low boiling point. Therefore, electrolytes containing such components may have increased volatility and inflammability and have impaired safety. For this reason, the inventors have discovered the following fact and accomplished the present invention: A nonaqueous electrolyte secondary battery that is excellent both in low-temperature discharge and heavy-current discharge characteristics, and in high-temperature preservation and cycle characteristics can be produced without impairing the battery safety by removing part or all of the low-boiling component, and using the resultant mixture as an electrolyte to fabricate a nonaqueous electrolyte secondary battery.

Furthermore, the inventors have discovered the following fact and accomplished the present invention: For a nonaqueous electrolyte containing lithium difluorophosphate, secondary batteries having particularly excellent cycle characteristics can be produced when a nonaqueous electrolyte is prepared with lithium difluorophosphate that has, when dissolved in a nonaqueous solvent, an amount of (1/nMⁿ⁺) F⁻ in the nonaqueous electrolyte, or is prepared with a nonaqueous electrolyte containing an amount of (1/nMⁿ⁺)F⁻.

That is, an aspect of the present invention consists in nonaqueous electrolyte comprising lithium difluorophosphate and one or more solvents and having a concentration of (1/nMⁿ⁺) F⁻ of equal to or less than 1.0 × 10⁻² mol·kg⁻¹, wherein M represents a cation other than H; and n represents an integer from one through ten, wherein the lithium difluorophosphate is produced by a reaction of a hexafluorophosphate salt with a compound having a bond represented by the following formula (1) in the molecule (claim 1).
[Chemical Formula 11]

**Si-O-Si** (1)

Also, the electrolyte is preferably produced by mixing a nonaqueous solvent, a hexafluorophosphate salt, and a compound having a bond represented by the following formula (1), and removing, from the mixture, low-boiling components having a lower boiling point than that of the compound having the bond represented by the formula (1) (claim 2).
[Chemical Formula 12]

**Si-O-Si** (1)

In the present invention, the compound having the bond represented by the formula (1) is a compound represented by the following formula (2): 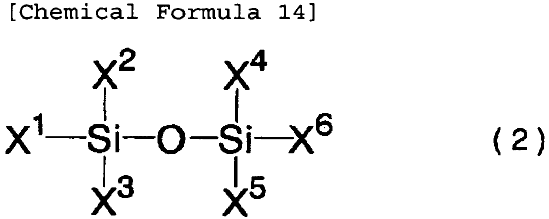 wherein X¹ to X⁶ each independently represent an optionally substituted hydrocarbon group or a group represented by the following formula (3), wherein any two or more of X¹ to X⁶ may be linked with each other to form a ring structure: 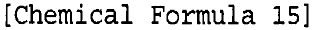 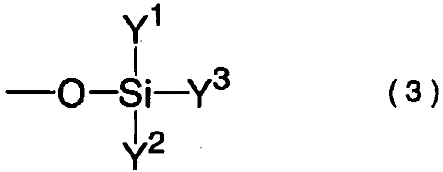 wherein Y¹ to Y³ each independently represent an optionally substituted hydrocarbon group, or one or more groups of Y¹ to Y³ may further be substituted by a group represented by the formula (3) to form a structure where a plurality of groups represented by the formula (3) are linked together. Any groups of identical signs each may be the same or different.

The compound represented by the formula (2) is preferably compounds represented by any one of the following formulae (4), (5), and (6) : 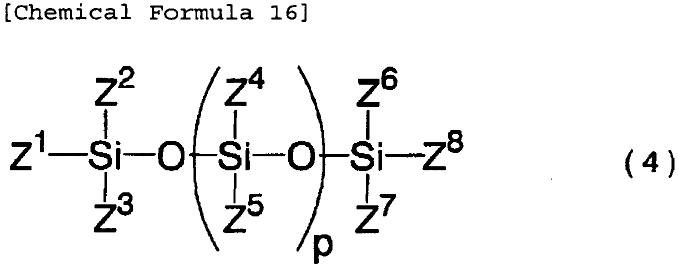 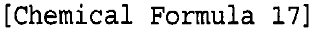 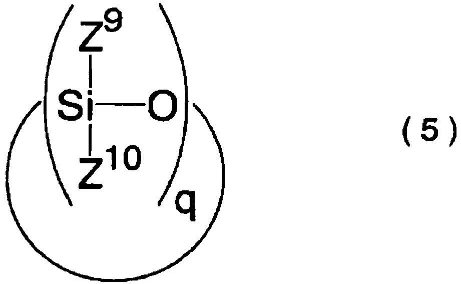 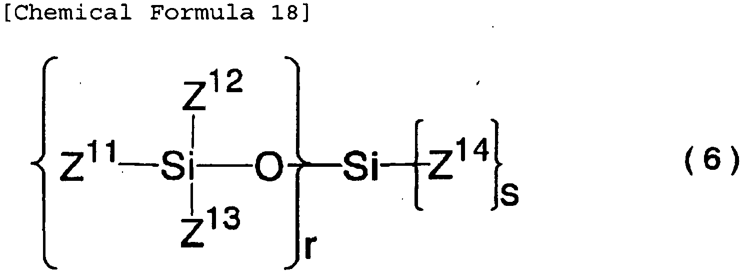 wherein Z¹ to Z¹⁴ each independently represent an optionally substituted hydrocarbon group; in each of the group consisting of Z¹ to Z⁸, the group consisting of Z⁹ to Z¹⁰, and the group consisting of Z¹¹ to Z¹⁴, any two or more groups may be linked with each other to form a ring structure; p and s represent an integer of 0 or more, r represents an integer of 1 or more, and q represents an integer of 2 or more; and r + s = 4 ; wherein any substituents of identical signs in the same molecule may be the same or different.

Furthermore, Z¹ to Z⁸ in the formula (4), Z⁹ to Z¹⁰ in the formula (5), and Z¹¹ to Z¹⁴ in the formula (6) preferably each independently represent any one of methyl group, ethyl group, and n-propyl group.

The hexafluorophosphate salt is preferably at least one salt of metals selected from Groups 1, 2, and 13 of the periodic table, and/or at least one quaternary onium salt.

Preferably, the lithium difluorophosphate is produced through deposition from the solvent.

The ratio of the molar number of the bond in the compound having the bond represented by the formula (1) to the molar number of the hexafluorophosphate salt used in the reaction is preferably four or more.

Preferably, the rate of the molar number of the hexafluorophosphate salt to the volume of the solvent is 2 mol kg⁻¹ or more.

Preferably, at least one of a carbonic ester and a carboxylic ester is used as the solvent.

Another aspect of the present invention consists in a nonaqueous electrolyte used for nonaqueous electrolyte secondary batteries comprising a negative electrode and a positive electrode that can occlude and discharge ions, and a nonaqueous electrolyte, the nonaqueous electrolyte being prepared from a mixture obtained by mixing a nonaqueous solvent, a hexafluorophosphate salt, and a compound having a bond represented by the following formula (1), and removing, from the mixture, low-boiling components having a lower boiling point than that of the compound having the bond represented by the formula (2) as defined above.

The ratio of the total of weight of O atoms in the bonds represented by the formula (1) of the compound having the bond represented by the formula (1) to the weight of the nonaqueous electrolyte preferably ranges from 0.00001 to 0.02.

The nonaqueous electrolyte preferably contains a carbonic ester having at least one of an unsaturated bond and a halogen atom in a concentration of 0.01% by weight to 70% by weight.

The carbonic ester having at least one of an unsaturated bond and a halogen atom is preferably at least one carbonic ester selected from the group consisting of vinylene carbonate, vinylethylene carbonate, fluoroethylene carbonate, and difluoroethylene carbonate, and derivatives thereof.

The nonaqueous electrolyte preferably contains a cyclic ester compound.

The nonaqueous electrolyte preferably contains a linear ester compound.

Another aspect of the present invention consists in a nonaqueous electrolyte secondary battery comprising a negative electrode and a positive electrode that can occlude and discharge ions, and a nonaqueous electrolyte, wherein the nonaqueous electrolyte is the above-mentioned nonaqueous electrolyte (claim 3).

### Advantages

The process for producing lithium difluorophosphate used in the present invention can produce lithium difluorophosphate, which would otherwise be expensive and difficult to obtain, readily and efficiently from inexpensive and readily available materials, and the resultant lithium difluorophosphate is highly pure even before purification.

The nonaqueous electrolyte according to the present invention can provide a nonaqueous electrolyte secondary battery that is excellent both in low-temperature discharge and heavy-current discharge characteristics, and in high-temperature preservation and cycle characteristics, and is free from safety issues, and a nonaqueous electrolyte thereof.

In addition, when dissolved in an electrolyte, the lithium difluorophosphate used in the present invention can provide a nonaqueous electrolyte that is excellent in cycle characteristics, and the lithium difluorophosphate-containing electrolyte according to the present invention can provide a nonaqueous electrolyte that is excellent in cycle characteristics.

### Best Mode for Carrying Out the Invention

The present invention will now be described in detail by reference to preferred embodiments; however, the following description on elements of the invention is only for illustration of (representative) embodiments of the invention, and the present invention is not intended to be limited to these embodiments unless departing from the spirit of the invention.

### [1. Lithium Difluorophosphate]

When used in preparation of a nonaqueous electrolyte for use in a nonaqueous electrolyte secondary battery, the lithium difluorophosphate used in the present invention has a concentration of (1/nMⁿ⁺)F⁻ of 1.0 × 10⁻² mol·kg⁻1 or less in the nonaqueous electrolyte, wherein M represents a cation other than H; and n represents an integer from one through ten. The lithium difluorophosphate used in the present invention will now be described.

### <<1-1. Lithium Difluorophosphate>>

The lithium difluorophosphate used in the present invention may be one produced by reaction of a hexafluorophosphate salt with a compound having a bond represented by the following formula (1) in the molecule (hereinafter referred to as "particular structural compound"). In particular, it is preferred to react according to the process described in [3. Production process of Lithium Difluorophosphate].
[Chemical Formula 27]

Si-O-Si (1)

Examples of the difluorophosphate salt include LiPO₂F₂, NaPO₂F₂, Mg(PO₂F₂)₂, KPO₂F₂, and Ca(PO₂F₂)₂. Among these salts preferred are LiPO₂F₂ and NaPO₂F₂, and especially preferred is LiPO₂F₂ that contains ionic species involving the operation of a lithium ion battery.

When the lithium difluorophosphate is used in preparing a nonaqueous electrolyte for nonaqueous electrolyte secondary batteries, the above-mentioned lithium difluorophosphates may be used either alone or in any combination of two or more kinds thereof at any proportion.

### <<1-2. The Compound Expressed as (1/nMⁿ⁺)F⁻>>

Upon the dissolution of the lithium difluorophosphate in a nonaqueous solvent, the nonaqueous electrolyte contains 1.0 × 10⁻² mol·kg ⁻¹ or less of (1/nMⁿ⁺)F⁻.

The unit "mol·kg⁻¹" used herein means, in solid, the concentration of the substance of interest per kilogram of the solid, and in solution, the molar concentration of the solute per kilogram of the solution, not per kilogram of the solvent.

M in (1/nMⁿ⁺)F⁻ represents a cation other than H, including alkali metals, alkaline earth metals, and transition metals, such as Li, Na, K, Mg, Ca, Al, Co, Mn, Ni, and Cu. n in (1/nMⁿ⁺)F⁻ represents an integer from one through ten.

Examples of (1/nMⁿ⁺)F⁻ include LiF, NaF, (1/2Mg) F, KF, and (1/2Ca) F. Among these salts preferred are LiF, NaF, and KF because their cationic species do not cause desirable reactions, and especially preferred is LiF that contains ionic species involving the operation of a lithium ion battery because the salt does not cause any unexpected reactions.

### <<1-3. (1/nMⁿ⁺)F⁻ Content>>

Upon the dissolution of the lithium difluorophosphate in a nonaqueous solvent, the concentration of (1/nMⁿ⁺)F⁻ in the nonaqueous electrolyte is typically 1.0 × 10⁻⁶ mol·kg⁻¹ or more, preferably 1.0 × 10⁻⁵ mol·kg⁻¹ or more, and further preferably 1.0 × 10⁻⁴ mol·kg⁻¹ or more, and typically 1.0 × 10⁻² mol·kg⁻¹ or less, and preferably 5.0 × 10⁻³ mol·kg⁻¹ or less. Below the lower limit, the characteristics of the first charge and discharge cycles may be impaired. Above the upper limit, the cycle characteristics may be adversely affected.

### <<1-4. Measurement of (1/nMⁿ⁺)F⁻ Content>>

The content of (1/nMⁿ⁺)F⁻ can be measured by any known method and is defined as follows:
First, the concentration of the F⁻ anions is determined by ion chromatography. Then, the concentration of the protonic acids is determined by acid-base titration. Assuming that all of the protonic acids are HF, the concentration of the protonic acids is subtracted from the concentration of F⁻ anions. The remainder is defined as the concentration of F⁻ in the (1/nMⁿ⁺)F⁻.

### [2. Lithium Difluorophosphate-Containing Electrolyte]

The lithium difluorophosphate-containing electrolyte according to the present invention is a nonaqueous electrolyte containing lithium difluorophosphate that has a concentration of (1/nMⁿ⁺) F⁻ of 1.0 × 10⁻² mol·kg⁻¹ or less wherein M represents a cation other than H, and n represents an integer from one through ten. The lithium difluorophosphate-containing electrolyte according to the present invention will now be described.

### <<2-1. Lithium Difluorophosphate>>

The lithium difluorophosphate-containing electrolyte according to the present invention can contain any lithium difluorophosphate that has the above-mentioned features, and can be similar to as described in [1. Lithium Difluorophosphate] . Among lithium difluorophosphates preferred are those produced by a reaction of a hexafluorophosphate salt with a compound having a bond represented by the following formula (1) in the molecule (particular structural compound). In particular, it is preferred to react according to the process described in [3. Production Process of Lithium Difluorophosphate].
[Chemical Formula 28]

**Si-O-Si** (1)

### [[2-2. Lithium Difluorophosphate-Containing Electrolyte]]

The lithium difluorophosphate-containing electrolyte according to the present invention contains lithium difluorophosphate and a nonaqueous electrolyte, and has a concentration of (1/nMⁿ⁺)F⁻ of 1.0 × 10⁻² mol·kg⁻¹ or less. It is preferably produced by mixing a nonaqueous solvent, a hexafluorophosphate salt, and a compound having a bond represented by the formula (1) (particular structural compound), and removing, from the mixture, low-boiling components having a lower boiling point than that of the compound having the bond represented by the formula (1) (particular structural compound).

### [2-2-1. Nonaqueous Solvent]

The nonaqueous solvents used in the lithium difluorophosphate-containing electrolyte according to the present invention can be similar to as described in <<4-1. Nonaqueous Solvent>>.

The nonaqueous solvents may be used either alone or in any combination of two or more kinds thereof at any proportion.

### <2-2-2. Hexafluorophosphate Salt>

The hexafluorophosphate salts used in the lithium difluorophosphate-containing electrolyte according to the present invention can be similar to as described in <<3-1. Hexafluorophosphate Salt>>.

Although the hexafluorophosphate salts may be used either alone or in any combination of two or more kinds thereof at any proportion, one hexafluorophosphate salt is used from the viewpoint of efficient operation of secondary batteries.

Although the hexafluorophosphate salt has any molecular weight that does not significantly impair the advantages of the present invention, the molecular weight is typically 150 or more, and typically 1000 or less, and preferably 500 or less because in this range, the reactivity with a particular structural compound is increased.

The hexafluorophosphate salt can be produced by any known method.

### <2-2-3. Particular Structural Compound>

The particular structural compounds used in the lithium difluorophosphate-containing electrolyte according to the present invention can be similar to as described in «3-2. Particular Structural Compound».

The particular structural compounds may be used either alone or in any combination of two or more kinds thereof at any proportion.

### <2-2-4. Production Process of Lithium

### Difluorophosphate-containing Electrolyte>

The lithium difluorophosphate-containing electrolyte can be produced by any method that does not significantly impair the advantages of the present invention, preferably by a method described in «4-5. Production Process of Nonaqueous Electrolyte».

### <<2-3. Additives>>

The additives used in the lithium difluorophosphate-containing electrolyte according to the present invention can be similar to those described in <<4-4. Additives>>.

The Additives may be used either alone or in any combinationof two or more kinds thereof at any proportion.

### <<2-4. Compound Expressed as (1/nMⁿ⁺)F⁻>>

The lithium difluorophosphate-containing electrolyte according to the present invention contains 1.0 × 10⁻² mol·kg⁻¹ or less of (1/nMⁿ⁺)F⁻.

M in (1/nMⁿ⁺F⁻ represents a cation other than H. Examples of such a cation include alkali metals, alkaline earth metals, and transition metals, such as Li, Na, K, Mg, Ca, Al, Co, Mn, Ni, and Cu. n in (1/nMⁿ⁺)F⁻ represents an integer from one through ten.

Examples of (1/nMⁿ⁺)F⁻ include LiF, NaF, (1/2Mg)F, KF, and (1/2Ca)F. Among these salts preferred are LiF, NaF, and KF, and especially preferred is LiF that contains ionic species involving the operation of a lithium ion battery because the salt does not cause any unexpected reactions.

### <<2-5. (1/nMⁿ⁺)F⁻ Content>>

The concentration of (1/nMⁿ⁺)F⁻ in the lithium difluorophosphate-containing electrolyte according to the present invention is typically 1.0 × 10⁻⁴ mol·kg⁻¹ or more, preferably 1.0 × 10⁻³ mol·kg⁻¹ or more, and typically 1 mol·kg⁻¹ or less, preferably 5.0 × 10⁻¹ mol·kg⁻¹ or less. Below the lower limit, the characteristics of the first charge and discharge cycles may be impaired. Above the upper limit, the cycle characteristics may be adversely affected.

### <<2-6. Measurement of (1/nMⁿ⁺)F⁻ Content>>

The (1/nMⁿ⁺) F⁻ content can be measured by any known method, for example, the method described in <<1-4. Measurement of (1/nMⁿ⁺)F⁻ Content>>.

### [3. Production Process of Lithium Difluorophosphate]

The production process of the lithium difluorophosphate used in the present invention (hereinafter referred to as "production process of the lithium difluorophosphate used in the present invention") involves a reaction of a hexafluorophosphate salt with a compound having a bond represented by the formula (1) in the molecule (particular structural compound).

The production process of the lithium difluorophosphate used in the present invention will now be described in detail following the description of the hexafluorophosphate salt and particular structural compound used in this process.

### <<3-1. Hexafluorophosphate Salt>>

The hexafluorophosphate salt used in production process of the lithium difluorophosphate according to the present invention (hereinafter abbreviated as "hexafluorophosphate salt in the present invention") can be any salt that consists of one or more hexafluorophosphate anions and cations. From the viewpoint of utility of a lithium difluorophosphate produced by the reaction, the hexafluorophosphate salt in the present invention is preferably salts consisting of one or more hexafluorophosphate anions and one or more metals selected from Groups 1, 2, and 13 of the periodic table (hereinafter referred to as "particular metal"), and/or salts consisting of one or more hexafluorophosphate anions and quaternary oniums.

### <3-1-1. Metal Hexafluorophosphate Salt>

First, the hexafluorophosphate salt in the present invention that consists of hexafluorophosphate anions and particular metal cations (hereinafter referred to as "metal hexafluorophosphate salt") will be described.

In the particular metals used for the metal hexafluorophosphate salt in the present invention, examples of metals from Group 1 of the periodic table include lithium, sodium, potassium, and cesium. Among these metals preferred are lithium and sodium, and most preferred is lithium.

Examples of metals from Group 2 of the periodic table include magnesium, calcium, strontium, and barium. Among these metals preferred are magnesium and calcium, and most preferred is magnesium.

Examples of metals from Group 13 of the periodic table include aluminium, gallium, indium, and thallium. Among these metals preferred are aluminium and gallium, and most preferred is aluminium.

One molecule of the metal hexafluorophosphate salt in the present invention may contain a single particular metal atom or two or more particular metal atoms.

When the metal hexafluorophosphate salt in the present invention contains two or more particular metal atoms in one molecule, these particular metal atoms may be the same or different. In addition to such particular metals, the salt may contain one or more metal atoms other than these particular metals.

Examples of metal hexafluorophosphate salt include lithium hexafluorophosphate, sodium hexafluorophosphate, magnesium hexafluorophosphate, calcium hexafluorophosphate, aluminum hexafluorophosphate, and gallium hexafluorophosphate. Among these salts preferred are lithium hexafluorophosphate, sodium hexafluorophosphate, magnesium hexafluorophosphate, and aluminum hexafluorophosphate.

### <3-1-2. Quaternary Onium Salt of Hexafluorophosphoric Acid>

Next, the hexafluorophosphate salt in the present invention that consists of hexafluorophosphate anions and quaternary oniums (hereinafter referred to as "quaternary onium salt of hexafluorophosphoric acid") will be described.

Quaternary oniums used for the quaternary onium salt of hexafluorophosphoric acid in the present invention are typically cations, including such as those represented by the following formula (X) : 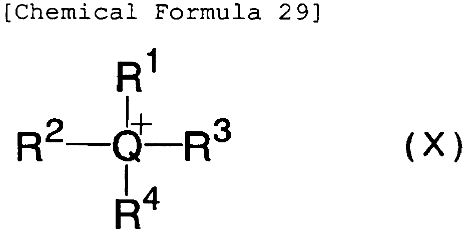 wherein R¹ to R⁴ each independently represent any hydrocarbon group. That is, the hydrocarbon group can be an aliphatic or aromatic group, or combinations thereof. Such aliphatic hydrocarbon group can be in the linear or cyclic structure, or combinations thereof. Such linear hydrocarbon group can be straight or branched, or saturated or unsaturated.

Examples of the hydrocarbon groups R¹ to R⁴ include alkyl, cycloalkyl, aryl, and aralkyl groups.

Examples of the alkyl groups include methyl group,
ethyl group,
n-propyl group,
1-methylethyl group,
n-butyl group,
1-methylpropyl group,
2-methylpropyl group, and
1,1-dimethylethyl group.

Among these groups preferred are methyl group,
ethyl group,
n-propyl group, and
n-butyl group.

Examples of the cycloalkyl group include cyclopentyl group,
2-methylcyclopentyl group,
3-methylcyclopentyl group,
2,2-dimethylcyclopentyl group,
2,3-dimethylcyclopentyl group,
2,4-dimethylcyclopentyl group,
2,5-dimethylcyclopentyl group,
3,3-dimethylcyclopentyl group,
3,4-dimethylcyclopentyl group,
2-ethylcyclopentyl group,
3-ethylcyclopentyl group,
cyclohexyl group,
2-methylcyclohexyl group,
3-methylcyclohexyl group,
4-methylcyclohexyl group,
2,2-dimethylcyclohexyl group,
2,3-dimethylcyclohexyl group,
2,4-dimethylcyclohexyl group,
2,5-dimethylcyclohexyl group,
2,6-dimethylcyclohexyl group,
3,4-dimethylcyclohexyl group,
3,5-dimethylcyclohexyl group,
2-ethylcyclohexyl group,
3-ethylcyclohexyl group,
4-ethylcyclohexyl group,
bicyclo[3,2,1]oct-1-yl group, and
bicyclo[3,2,1]oct-2-yl group.

Among these groups preferred are
cyclopentyl group,
2-methylcyclopentyl group,
3-methylcyclopentyl group,
cyclohexyl group,
2-methylcyclohexyl group,
3-methylcyclohexyl group, and
4-methylcyclohexyl group.

Examples of the aryl group include phenyl group (which may be unsubstituted or substituted), 2-methylphenyl group,
3-methylphenyl group,
4-methylphenyl group, and
2,3-dimethylphenyl group.

Among these aryl groups preferred is phenyl group.

Examples of the aralkyl group include
phenylmethyl group,
1-phenylethyl group,
2-phenylethyl group,
diphenylmethyl group, and
triphenylmethyl group.

Among these aralkyl groups preferred are phenylmethyl group and 2-phenylethyl group.

The hydrocarbon groups R¹ to R⁴ may be substituted by one or more substituents. The substituents may be any group that does not significantly impair the advantages of the present invention, including, for example, halogen atoms, hydroxyl, amino, nitro, cyano, carboxyl, ether, and aldehyde groups. When the hydrocarbon groups R¹ to R⁴ have two or more substituents, these substituents may be each the same or different.

Any two or more of the hydrocarbon groups R¹ to R⁴ may be each the same or different. When the hydrocarbon groups R¹ to R⁴ are substituted, these substituted hydrocarbon groups may be each the same or different.

Furthermore, any two or more of the hydrocarbon groups R¹ to R⁴ may be linked with each other to form a ring structure.

The hydrocarbon groups R¹ to R⁴ typically have a carbon number of 1 or more, and typically 20 or less, preferably 10 or less, and more preferably 5 or less. Above the upper limit, the molar number per weight of the quaternary onium salt of hexafluorophosphoric acid will decrease. This tends to impair various advantages of the secondary battery. When the hydrocarbon groups R¹ to R⁴ are substituted, these substituted hydrocarbon groups have a carbon number that meets the above-mentioned range.

Q in the formula (X) represents an atom belonging to Group 15 of the periodic table. Among the atoms preferred is nitrogen or phosphorus atom.

From these reasons, examples of the quaternary onium represented by the formula (X) include linear aliphatic quaternary oniums, and alicyclic ammoniums, alicyclic phosphoniums, and nitrogen-containing heterocyclic aromatic cations.

In particular, preferred examples of the linear aliphatic quaternary oniums include tetraalkylammoniums and tetraalkylphosphoniums.

Examples of the tetraalkylammoniums include tetramethylammonium,
ethyltrimethylammonium,
diethyldimethylammonium,
triethylmethylammonium,
tetraethylammonium, and
tetra-n-butylammonium.

Examples of the tetraalkylphosphoniums include tetramethylphosphonium,
ethyltrimethylphosphonium,
diethyldimethylphosphonium,
triethylmethylphosphonium,
tetraethylphosphonium, and
tetra-n-butylphosphonium.

In particular, preferred examples of the alicyclic ammoniums include pyrrolidiniums, morpholiniums, imidazoliniums, tetrahydropyrimidiniums, piperadiniums, and piperidiniums.

Examples of the pyrrolidiniums include N,N-dimethylpyrolidinium,
N-ethyl -N-methylpyrolidinium, and
N,N-diethylpyrolidinium.

Examples of the morpholiniums include N,N-dimethylmorpholinium, N-ethyl-N-methylmorpholinium, and N,N-diethylmorpholinium.

Examples of the imidazoliniums include N,N'-dimethylimidazolinium,
N-ethyl-N'-methylimidazolinium, N,N'-diethylimidazolinium, and
1,2,3-trimethylimidazolinium.

Examples of the tetrahydropyrimidiniums include N,N'-dimethyltetrahydropyrimidinium, N-ethyl-N'-methyltetrahydropyrimidinium, N,N'-diethyltetrahydropyrimidinium, and 1,2,3-trimethyltetrahydropyrimidinium.

Examples of the piperadiniums include N,N,N',N'-tetramethylpiperadinium, N-ethyl-N,N',N'-trimethylpiperadinium, N,N-diethyl-N',N'-dimethylpiperadinium, N,N,N'-triethyl-N'-methylpiperadinium, and N,N,N',N'-tetraethylpiperadinium.

Examples of the piperidiniums include N,N-dimethylpiperidinium, N-ethyl-N-methylpiperidinium, and N,N-diethylpiperidinium.

In particular, preferred examples of the nitrogen-containing heterocyclic aromatic cations include pyridiniums and imidazoliums.

Examples of the pyridiniums include
N-methylpyridinium,
N-ethylpyridinium,
1,2-dimethylpyridinium,
1,3-dimethylpyridinium,
1,4-dimethylpyridinium, and
1-ethyl-2-methylpyridinium.

Examples of the imidazoliums include
N,N'-dimethylimidazolium,
N-ethyl-N'-methylimidazolium,
N,N'-diethylimidazolium, and
1,2,3-trimethylimidazolium.

That is, the above-mentioned salts consisting of a quaternary onium and a hexafluorophosphate ion are preferred examples of the quaternary onium salt of hexafluorophosphoric acid in the present invention.

### <3-1-3. Other Conditions>

In the production process of the lithium difluorophosphate according to the present invention, the hexafluorophosphate salts may be used alone, or in any combination of two or more kinds thereof at any proportion. One hexafluorophosphate salt is typically used from the viewpoint of production of a single lithium difluorophosphate. On the other hand, two or more hexafluorophosphate salts may be used together for production of the lithium difluorophosphate according to the present invention from the viewpoint of simultaneous production of two or more lithium difluorophosphates for use in applications where these two or more lithium difluorophosphates are employed.

The hexafluorophosphate salt has any molecular weight that does not significantly impair the advantages of the present invention, but typically has a molecular weight of 150 or more. The molecular weight has no upper limit, but in consideration of reactivity of the present reaction, is typically 1000 or less, and preferably 500 or less due to its practical use.

The hexafluorophosphate salt can be produced by any known method.

### <<3-2. Particular Structural Compound>>

The particular structural compound used for production process of the lithium difluorophosphate according to the present invention has a structure represented by the following formula (1).
[Chemical Formula 30]

**Si-O-Si** (1)

The particular compound is a compound that has a bond represented by the formula (1) in the molecule, and in particular is a compound represented by the following formula (2): 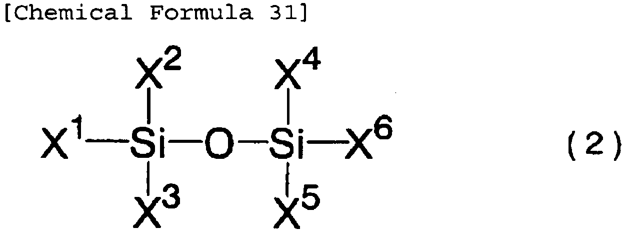 wherein X¹ to X⁶ each independently represent an optionally substituted hydrocarbon group or a group represented by the following formula (3), and wherein any two or more of X¹ to X⁶ may be linked with each other to form a ring structure: 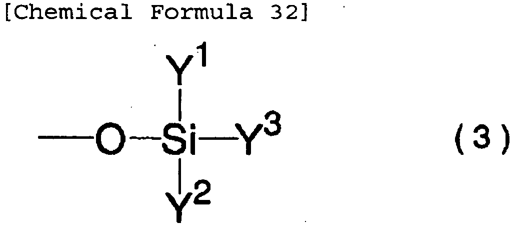 wherein Y¹ to Y³ each independently represent an optionally substituted hydrocarbon group, or one or more groups of Y¹ to Y³ may further be substituted by a group represented by the formula (3) to form a structure where a plurality of groups represented by the formula (3) are linked together. Any groups of identical signs may be each the same or different.

Among the compounds represented by the formula (2) especially preferred are compounds represented by the formulae (4), (5), or (6) :

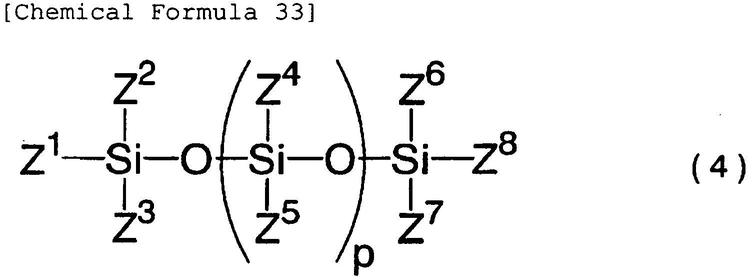

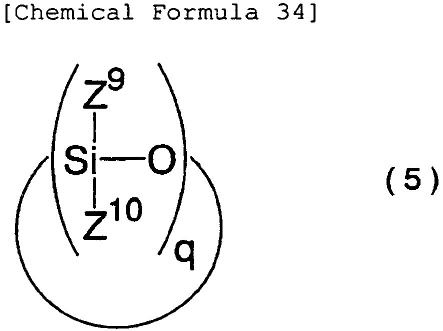

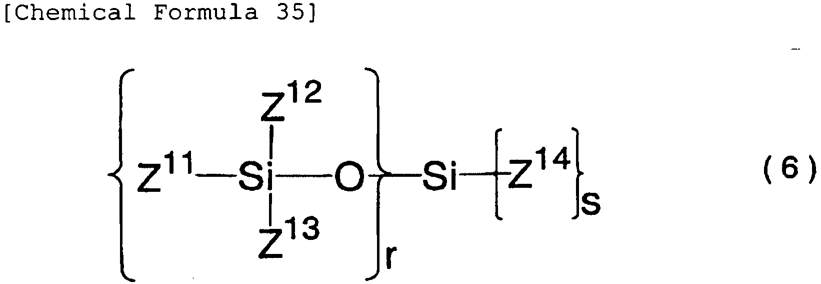

wherein Z¹ to Z¹⁴ each independently represent an optionally substituted hydrocarbon group, p and s represent an integer of 0 or more, r represents an integer of 1 or more, and q represents an integer of 2 or more; and r + s = 4; wherein any substituents of identical signs in the same molecule may be each the same or different.

The particular structural compound will now be described in detail. X¹ to X⁶ in the formula (2), Y¹ to Y³ in the formula (3), and Z¹ to Z¹⁴ in the formulae (4) to (6) may be any hydrocarbon group. That is, the hydrocarbon group can be an aliphatic or aromatic group, or combinations thereof. Such a aliphatic hydrocarbon group can be in the linear or cyclic structure, or combinations thereof. Such a linear hydrocarbon group can be straight or branched, or saturated or unsaturated.

The hydrocarbon groups X¹ to X⁶, Y¹ to Y³, and Z¹ to Z¹⁴ may be substituted by one or more substituents. The substituents may be any group that does not significantly impair the advantages of the present invention, including, for example, hydroxyl, amino, nitro, cyano, carboxyl, ether, and aldehyde groups. When the hydrocarbon groups X¹ to X⁶, Y¹ to Y³, and Z¹ to Z¹⁴ have two or more substituents, these substituents may be each the same or different.

Any two or more of the hydrocarbon groups X¹ to X⁶, Y¹ to Y³, and Z¹ to Z¹⁴ may be each the same or different. When the hydrocarbon groups X¹ to X⁶, Y¹ to Y³, and Z¹ to Z¹⁴ are substituted, these substituted hydrocarbon groups may be each the same or different.

Furthermore, any two or more of the hydrocarbon groups X¹ to X⁶, Y¹ to Y³, and Z¹ to Z¹⁴ in the same molecule may be linked with each other to form a ring structure.

Among the hydrocarbon groups X¹ to X⁶, Y¹ to Y³, and Z¹ to Z¹⁴ preferred are optionally substituted alkyl or aryl groups.

X¹ to X⁶, Y¹ to Y³, and Z¹ to Z¹⁴ may be any alkyl group. The alkyl group may have any structure, such as linear, cyclic, and cage-shaped structures. The alkyl group in a linear structure may be straight or branched. The alkyl group in a cyclic or cage-shaped structure may have any number of rings and any number of each ring members. A plurality of the rings may be fused, and these fused rings may be linked with each other.

The alkyl groups X¹ to X⁶, Y¹ to Y³, and Z¹ to Z¹⁴ may be substituted by one or more substituents. Examples of these substituents include halogen atoms, and alkyl and aryl groups. When the alkyl group has two or more substituents, these substituents may be each the same or different.

The alkyl groups X¹ to X⁶, Y¹ to Y³, and Z¹ to Z¹⁴ have any number of carbon atoms, but typically one or more, and typically 50 or less and preferably 25 or less. Above the upper limit of the carbon number of the alkyl groups, the reactivity with a hexafluorophosphate salt decreases. When the alkyl group has an alkyl or aryl group as a substituent, the carbon number of such a substituted alkyl group preferably meets the range.

Examples of the unsubstituted or alkyl-substituted alkyl groups X¹ to X⁶, Y¹ to Y³, and Z¹ to Z¹⁴ in a linear structure include methyl group,
ethyl group,
n-propyl group,
1-methylethyl group,
n-butyl group,
1-methylpropyl group,
2-methylpropyl group,
1,1-dimethylethyl group,
n-pentyl group,
1-methylbutyl group,
1-ethylpropyl group,
2-methylbutyl group,
3-methylbutyl group,
2,2-dimethylpropyl group,
1,1-dimethylpropyl group,
1,2-dimethylpropyl group,
n-hexyl group,
1-methylpentyl group,
1-ethylbutyl group,
2-methylpentyl group,
3-methylpentyl group,
4-methylpentyl group,
2-ethylbutyl group,
2,2-dimethylbutyl group,
2,3-dimethylbutyl group,
3,3-dimethylbutyl group,
1,1-dimethylbutyl group,
1,2-dimethylbutyl group,
1,1,2-trimethylpropyl group,
1,2,2-trimethylpropyl group,
1-ethyl-2-methylpropyl group,
1-ethyl-l-methylpropyl group,
n-octyl group, and
n-decyl group.

Examples of the aryl-substituted alkyl groups X¹ to X⁶, Y¹ to Y³, and Z¹ to Z¹⁴ in a linear structure include phenylmethyl group,
diphenylmethyl group,
triphenylmethyl group,
1-phenylethyl group,
2-phenylethyl group,
(1-fluorophenyl)methyl group,
(2-fluorophenyl)methyl group,
(3-fluorophenyl)methyl group, and
(1,2-difluorophenyl)methyl group.

Examples of the halogen atom-substituted alkyl groups X¹ to X⁶, Y¹ to Y³, and Z¹ to Z¹⁴ in a linear structure include fluorine atom-substituted alkyl groups such as
fluoromethyl group,
difluoromethyl group,
trifluoromethyl group,
1-fluoroethyl group,
2-fluoroethyl group,
1,1-difuoroethyl group,
1,2-difuoroethyl group,
2,2-difuoroethyl group, and
1,1,2-trifluoroethyl group; and
chlorine atom-substituted alkyl group such as chloromethyl group,
dichloromethyl group,
trichloromethyl group,
1-chloroethyl group,
2-chloroethyl group,
1,1-dichloroethyl group,
1,2-dichloroethyl group,
2,2-dichloroethyl group, and
1,1,2-trichloroethyl group.

Examples of the unsubstituted or alkyl-substituted alkyl groups X¹ to X⁶, Y¹ to Y³, and Z¹ to Z¹⁴ in a cyclic structure, or alkyl groups in a cyclic structure that is formed by any two or more of X¹ to X⁶, Y¹ to Y³, and Z¹ to Z¹⁴ in the same molecule being linked with each other include
cyclopentyl group,
2-methylcyclopentyl group,
3-methylcyclopentyl group,
2,2-dimethylcyclopentyl group,
2,3-dimethylcyclopentyl group,
2,4-dimethylcyclopentyl group,
2,5-dimethylcyclopentyl group,
3,3-dimethylcyclopentyl group,
3,4-dimethylcyclopentyl group,
2-ethylcyclopentyl group,
3-ethylcyclopentyl group,
cyclohexyl group,
2-methylcyclohexyl group,
3-methylcyclohexyl group,
4-methylcyclohexyl group,
2,2-dimethylcyclohexyl group,
2,3-dimethylcyclohexyl group,
2,4-dimethylcyclohexyl group,
2,5-dimethylcyclohexyl group,
2,6-dimethylcyclohexyl group,
3,4-dimethylcyclohexyl group,
3,5-dimethylcyclohexyl group,
2-ethylcyclohexyl group,
3-ethylcyclohexyl group,
4-ethylcyclohexyl group,
bicyclo[3,2,1]oct-1-yl group, and
bicyclo[3,2,1]oct-2-yl group.

Examples of the unsubstituted or alkyl-substituted alkyl groups X¹ to X⁶, Y¹ to Y³, and Z¹ to Z¹⁴ in a cage-shaped structure, or alkyl groups in a cage-shaped structure that is formed by any two or more of X¹ to X⁶, Y¹ to Y³, and Z¹ to Z¹⁴ in the same molecule being linked with each other include
2-phenylcyclopentyl group,
3-phenylcyclopentyl group,
2,3-diphenylcyclopentyl group,
2,4-diphenylcyclopentyl group,
2,5-diphenylcyclopentyl group,
3,4-diphenylcyclopentyl group,
2-phenylcyclohexyl group,
3-phenylcyclohexyl group,
4-phenylcyclohexyl group,
2,3-diphenylcyclohexyl group,
2,4-diphenylcyclohexyl group,
2,5-diphenylcyclohexyl group,
2,6-diphenylcyclohexyl group,
3,4-diphenylcyclohexyl group,
3,5-diphenylcyclohexyl group,
2-(2-fluorophenyl)cyclohexyl group,
2-(3-fluorophenyl)cyclohexyl group,
2-(4-fluorophenyl)cyclohexyl group,
3-(2-fluorophenyl)cyclohexyl group,
4-(2-fluorophenyl)cyclohexyl group, and
2,3-bis(2-fluorophenyl)cyclohexyl group.

Examples of the halogen atom-substituted cyclic alkyl groups X¹ to X⁶, Y¹ to Y³, and Z¹ to Z¹⁴ include
2-fluorocyclopentyl group,
3-fluorocyclopentyl group,
2,3-difluorocyclopentyl group,
2,4-difluorocyclopentyl group,
2,5-difluorocyclopentyl group,
3,4-difluorocyclopentyl group,
2-fluorocyclohexyl group,
3-fluorocyclohexyl group,
4-fluorocyclohexyl group,
2,3-difluorocyclohexyl group,
2,4-difluorocyclohexyl group,
2,5-difluorocyclohexyl group,
2,6-difluorocyclohexyl group,
3,4-difluorocyclohexyl group,
3,5-difluorocyclohexyl group,
2,3,4-trifluorocyclohexyl group,
2,3,5-trifluorocyclohexyl group,
2,3,6-trifluorocyclohexyl group,
2,4,5-trifluorocyclohexyl group,
2,4,6-trifluorocyclohexyl group,
2,5,6-trifluorocyclohexyl group,
3,4,5-trifluorocyclohexyl group,
2,3,4,5-tetrafluorocyclohexyl group,
2,3,4,6-tetrafluorocyclohexyl group,

2,3,5,6-tetrafluorocyclohexyl group, and pentafluorocyclohexyl group.

Among the above-mentioned unsubstituted or substituted alkyl groups X¹ to X⁶, Y¹ to Y³, and Z¹ to Z¹⁴ preferred are unsubstituted, or fluorine or chlorine-substituted alkyl groups, and especially preferred are unsubstituted or fluorine-substituted alkyl groups, which cause significantly reduced amounts of byproducts.

On the other hand, X¹ to X⁶, Y¹ to Y³, and Z¹ to Z¹⁴ may be any aryl group. The aryl group may be monocyclic or polycyclic, or have any number of rings and any number of each ring members. A plurality of the rings may be fused.

The aryl groups X¹ to X⁶, Y¹ to Y³, and Z¹ to Z¹⁴ may be substituted by one or more substituents. Examples of these substituents include halogen atoms, and alkyl and aryl groups. When the aryl group has two or more substituents, these substituents may be the same or different.

Furthermore, the aryl groups X¹ to X⁶, Y¹ to Y³, and Z¹ to Z¹⁴ have any number of carbon atoms, but typically 6 or more, and typically 30 or less and preferably 12 or less. Above the upper limit of the carbon number of the aryl groups, the reactivity with a hexafluorophosphate salt decreases. When the aryl group has an alkyl or aryl group as a substituent, the total carbon number including that of such a substituent should meet the range.

Examples of the unsubstituted or alkyl-substituted aryl groups X¹ to X⁶, Y¹ to Y³, and Z¹ to Z¹⁴ include phenyl group,
2-methylphenyl group,
3-methylphenyl group,
4-methylphenyl group,
2,3-dimethylphenyl group,
2,4-dimethylphenyl group,
2,5-dimethylphenyl group,
2,6-dimethylphenyl group,
2,3,4-trimethylphenyl group,
2,3,5-trimethylphenyl group,
2,3,6-trimethylphenyl group,
2,4,5-trimethylphenyl group,
2,3,6-trimethylphenyl group,
2,5,6-trimethylphenyl group,
3,4,5-trimethylphenyl group,
2,3,4,5-tetramethylphenyl group,
2,3,4,6-tetramethylphenyl group,
2,4,5,6-tetramethylphenyl group,
pentamethylphenyl group,
1-naphthyl group, and
2-naphthyl group.

Examples of the aryl-substituted aryl groups X¹ to X⁶, Y¹ to Y³, and Z¹ to Z¹⁴ include
2-phenylphenyl group, 3-phenylphenyl group, and 4-phenylphenyl group.

Examples of the halogen atom-substituted aryl groups X¹ to X⁶, Y¹ to Y³, and Z¹ to Z¹⁴ include
2-fluorophenyl group,
3-fluorophenyl group,
4-fluorophenyl group,
2,3-difluorophenyl group,
2,4-difluorophenyl group,
2,5-difluorophenyl group,
2,6-difluorophenyl group,
2,3,4-trifluorophenyl group,
2,3,5-trifluorophenyl group,
2,3,6-trifluorophenyl group,
2,4,5-trifluorophenyl group,
2,4,6-trifluorophenyl group,
2,5,6-trifluorophenyl group,
3,4,5-trifluorophenyl group,
2,3,4,5-tetrafluorophenyl group,
2,3,4,6-tetrafluorophenyl group,
2,4,5,6-tetrafluorophenyl group, and
pentafluorophenyl group.

Among the above-mentioned unsubstituted or substituted aryl groups X¹ to X⁶, Y¹ to Y³, and Z¹ to Z¹⁴ preferred are unsubstituted, or fluorine or chlorine-substituted aryl groups, and especially preferred are unsubstituted or fluorine-substituted aryl groups, which cause significantly reduced amounts of byproducts.

The particular structural compound has preferably a structure such that when the lithium difluorophosphate is produced by the production process of the lithium difluorophosphate according to the present invention, byproducts can be readily removed.

Particularly, in the particular structural compound in the present invention, substituents represented by Z¹ to Z⁸ in the formula (4), Z⁹ to Z¹⁰ in the formula (5), or Z¹¹ to Z¹⁴ in the formula (6) each is preferably any of methyl, ethyl, n-propyl, n-hexyl, n-octyl, n-decyl, vinyl, and phenyl groups from the viewpoint of reactivity and ready availability. Among these groups preferred are methyl, ethyl, n-propyl, and vinyl groups, and especially preferred are methyl, ethyl, and n-propyl groups.

Examples of the particular structural compound are preferably compounds having the structures described below. When such compounds having the following structures have an asymmetric center, the compounds can have any optical isomer form.

### [Chemical Formula 36]

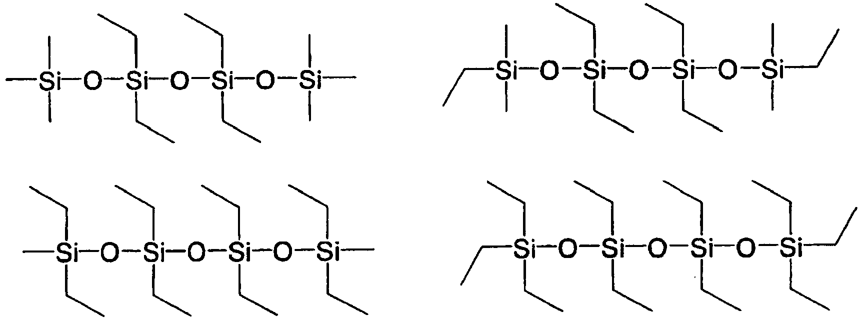

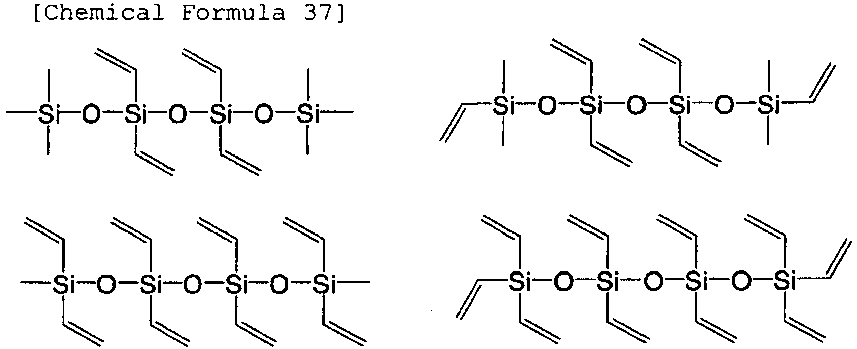

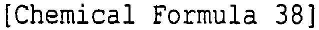

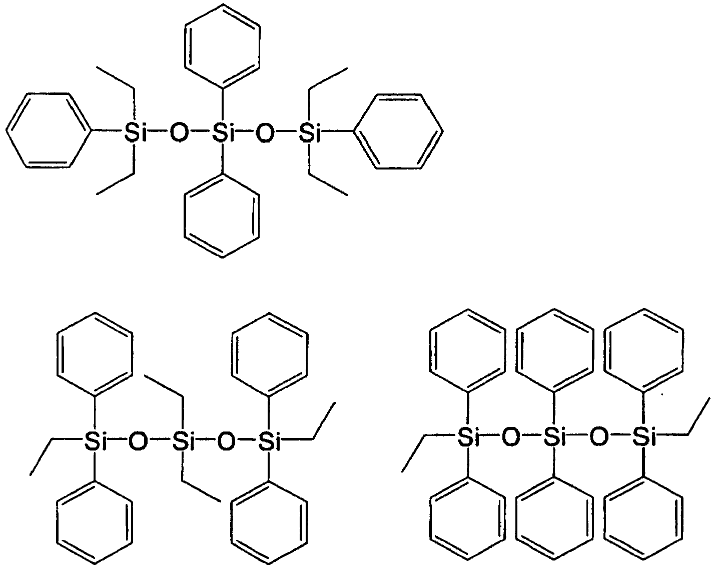

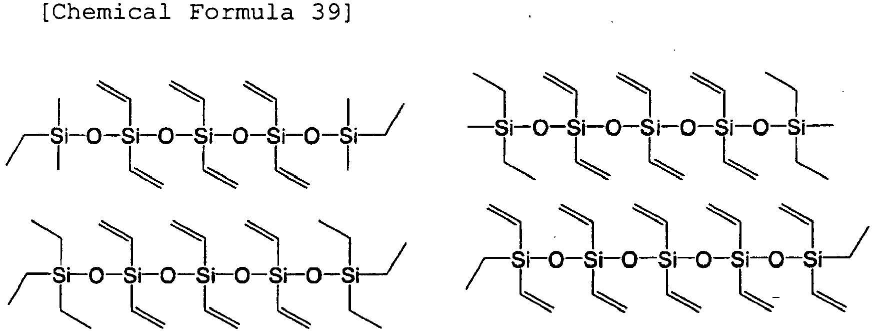

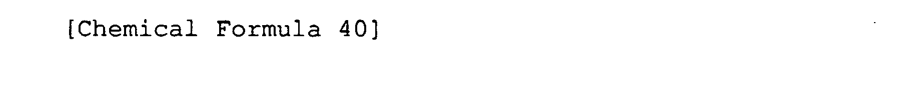

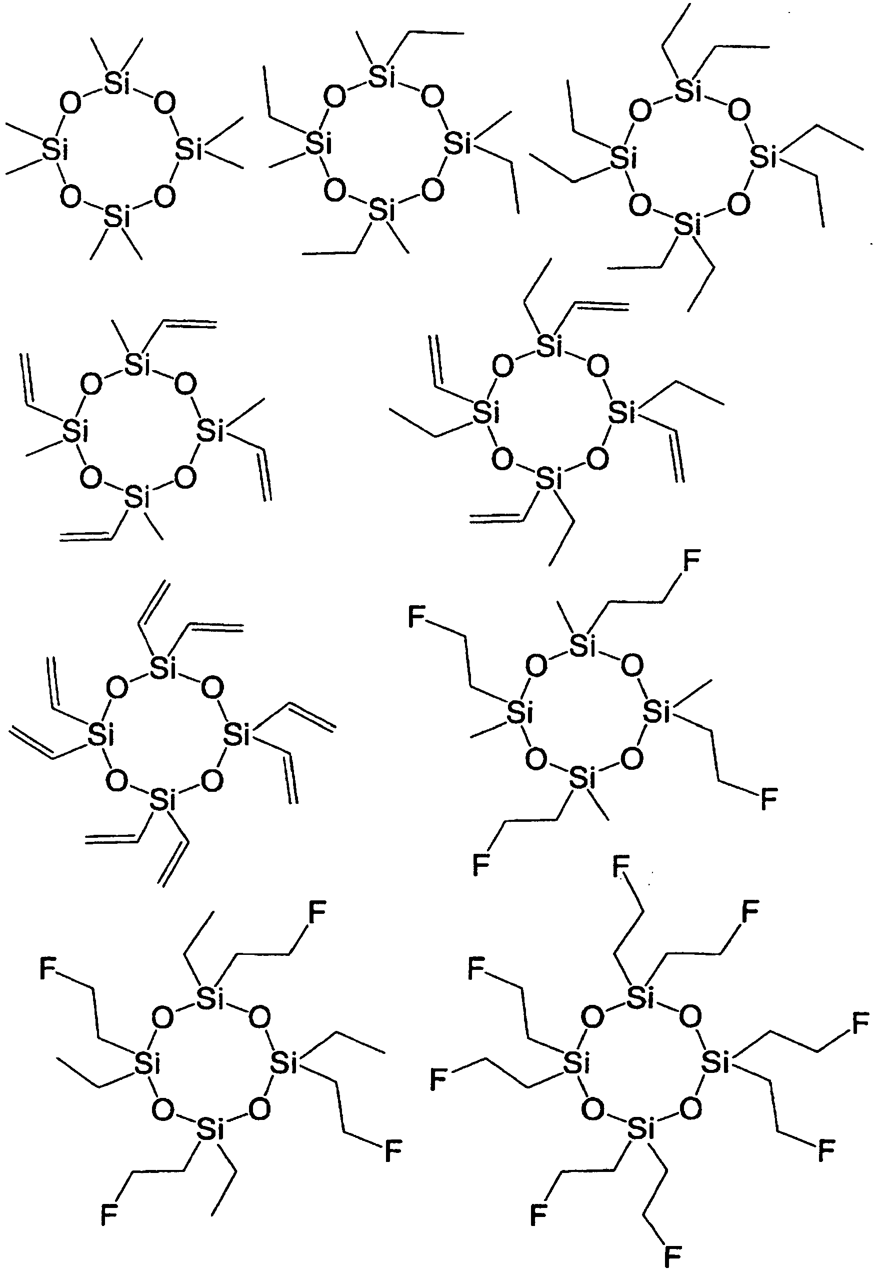

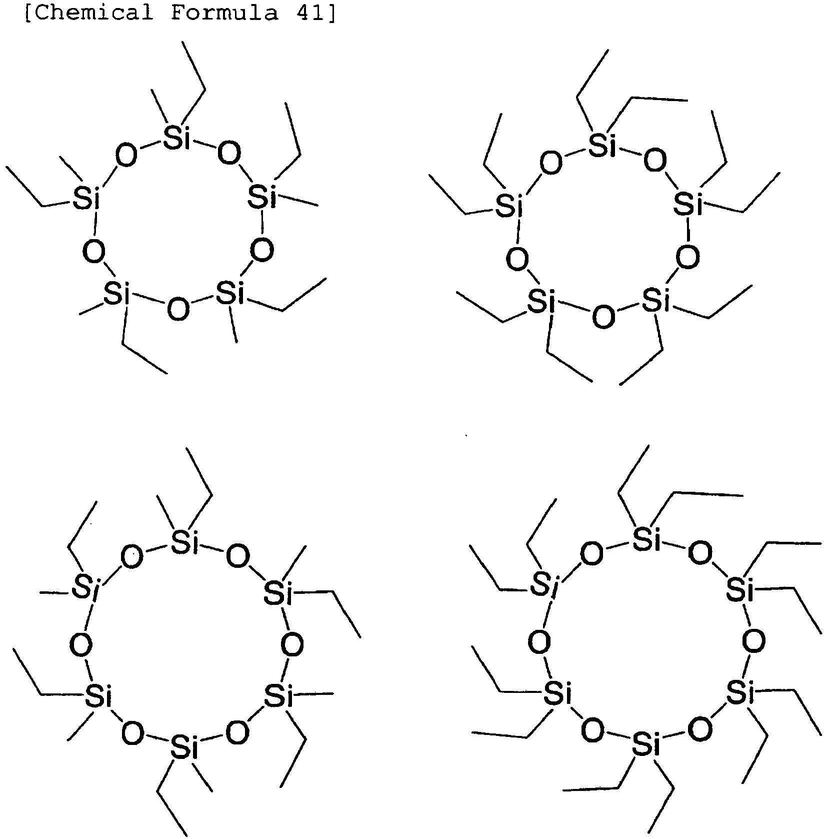

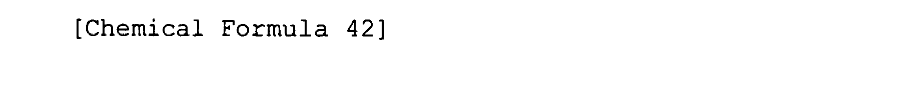

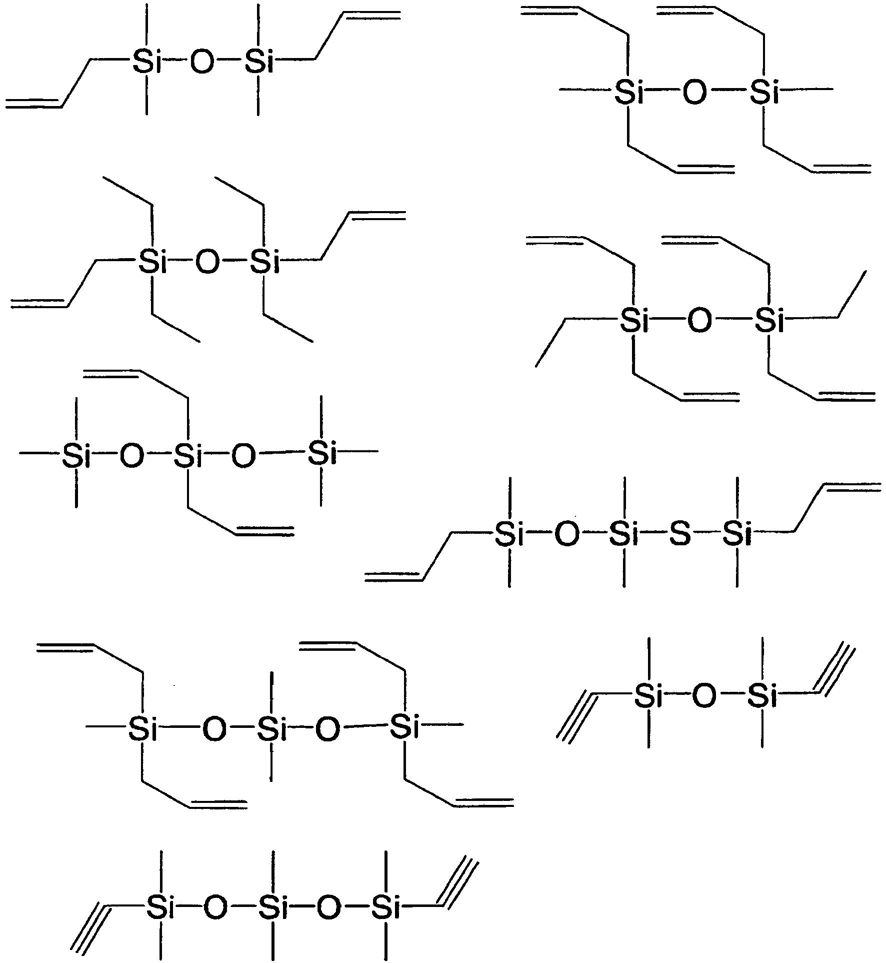

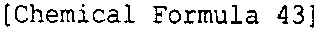

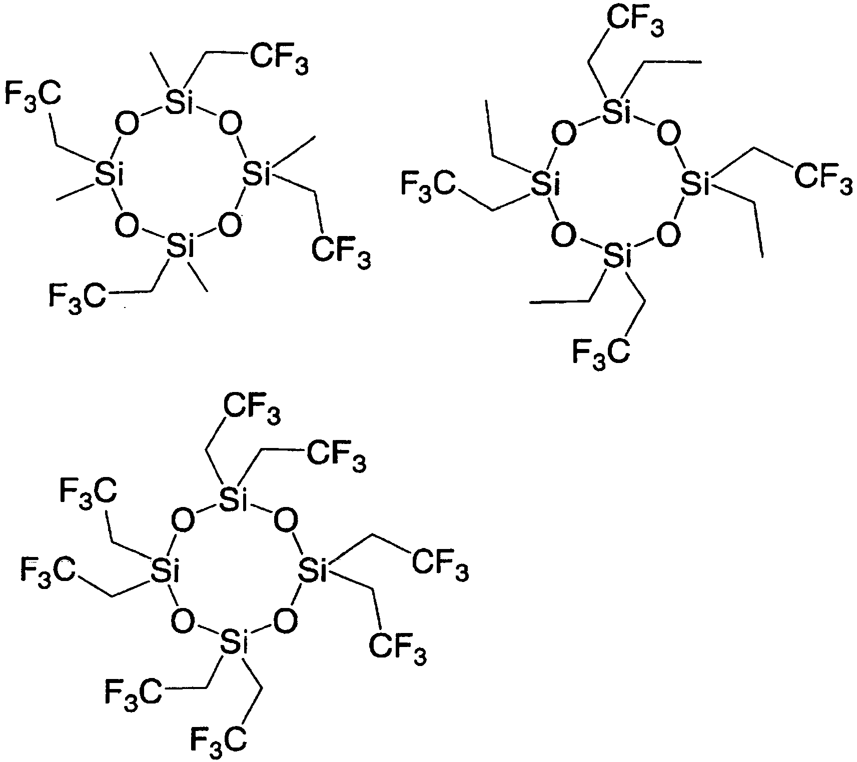

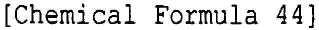

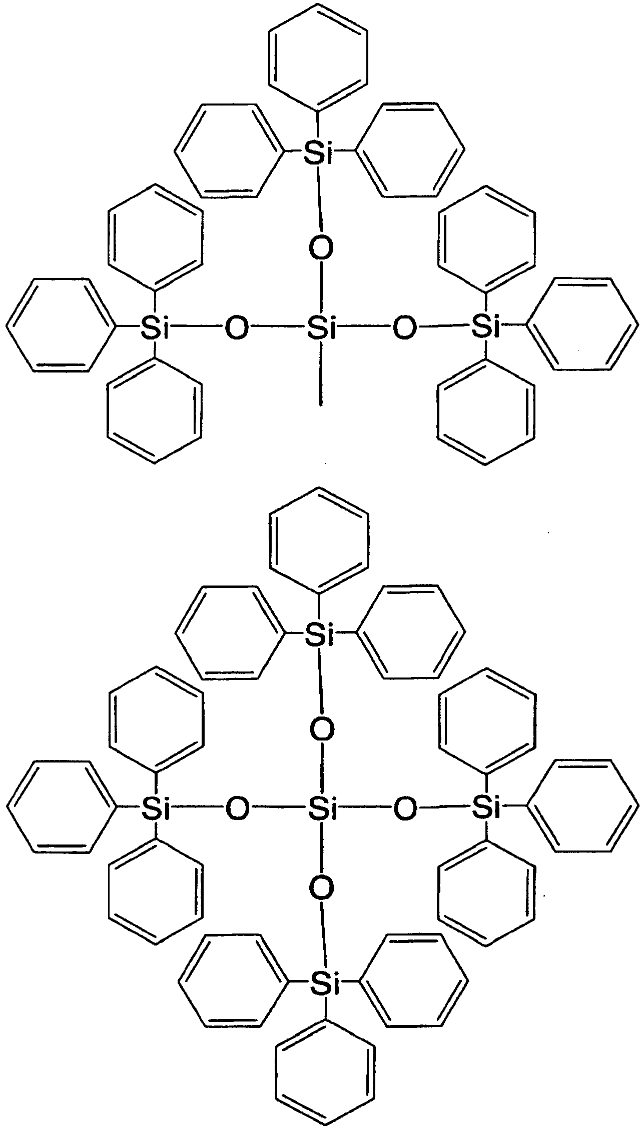

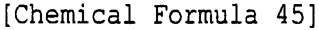

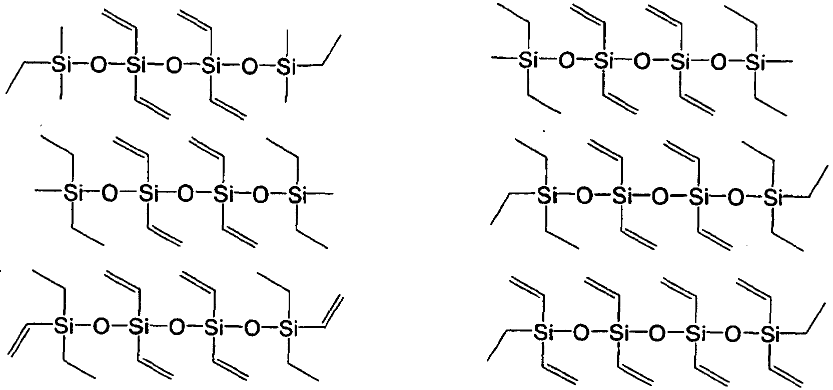

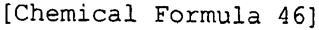

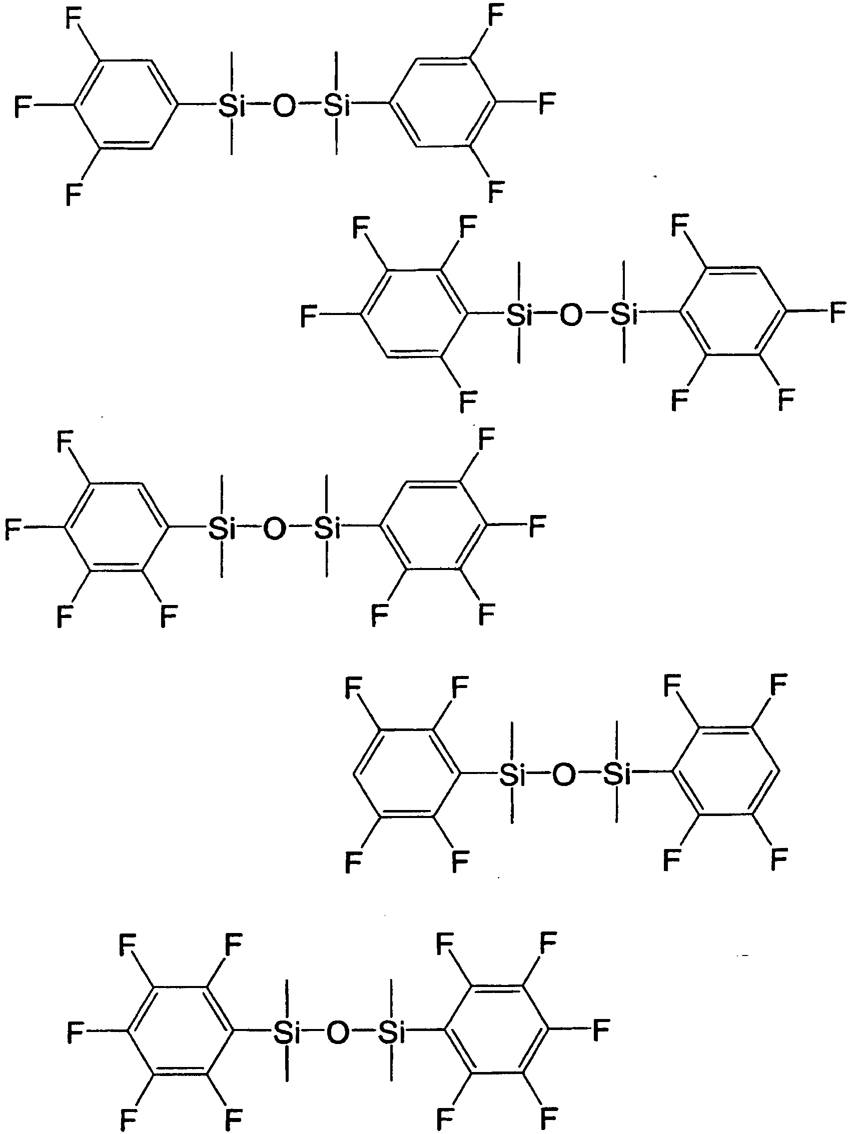

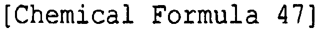

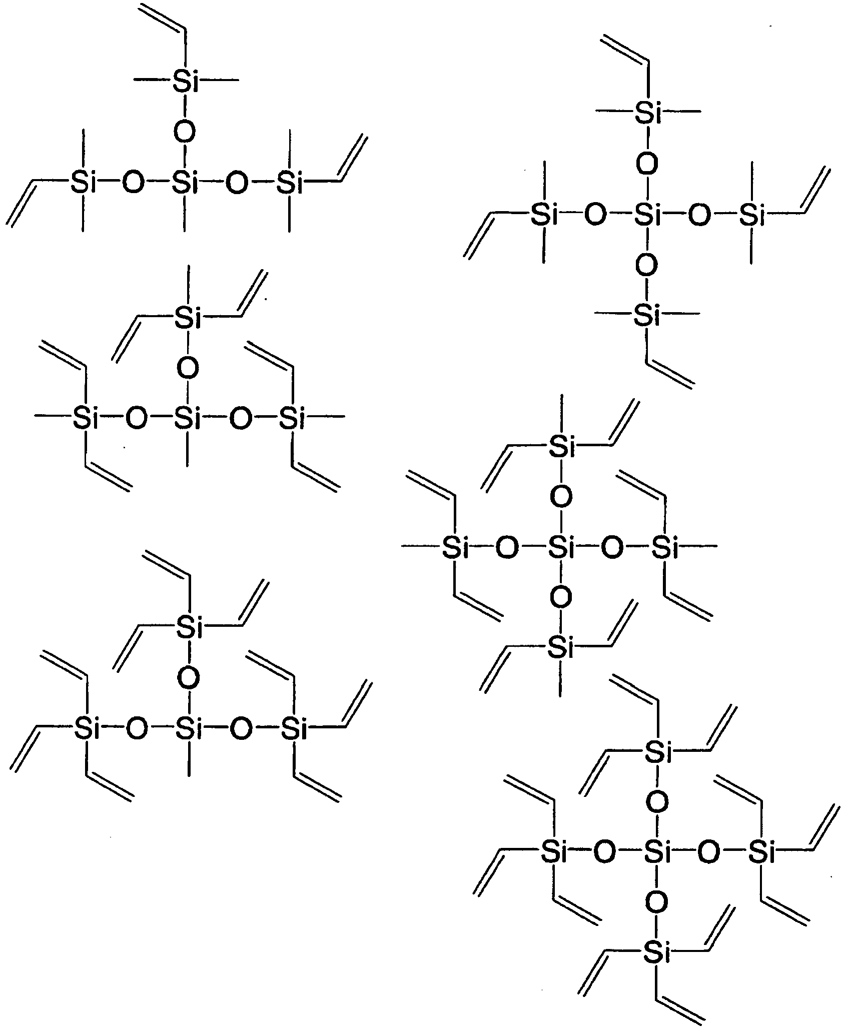

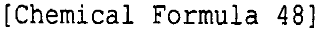

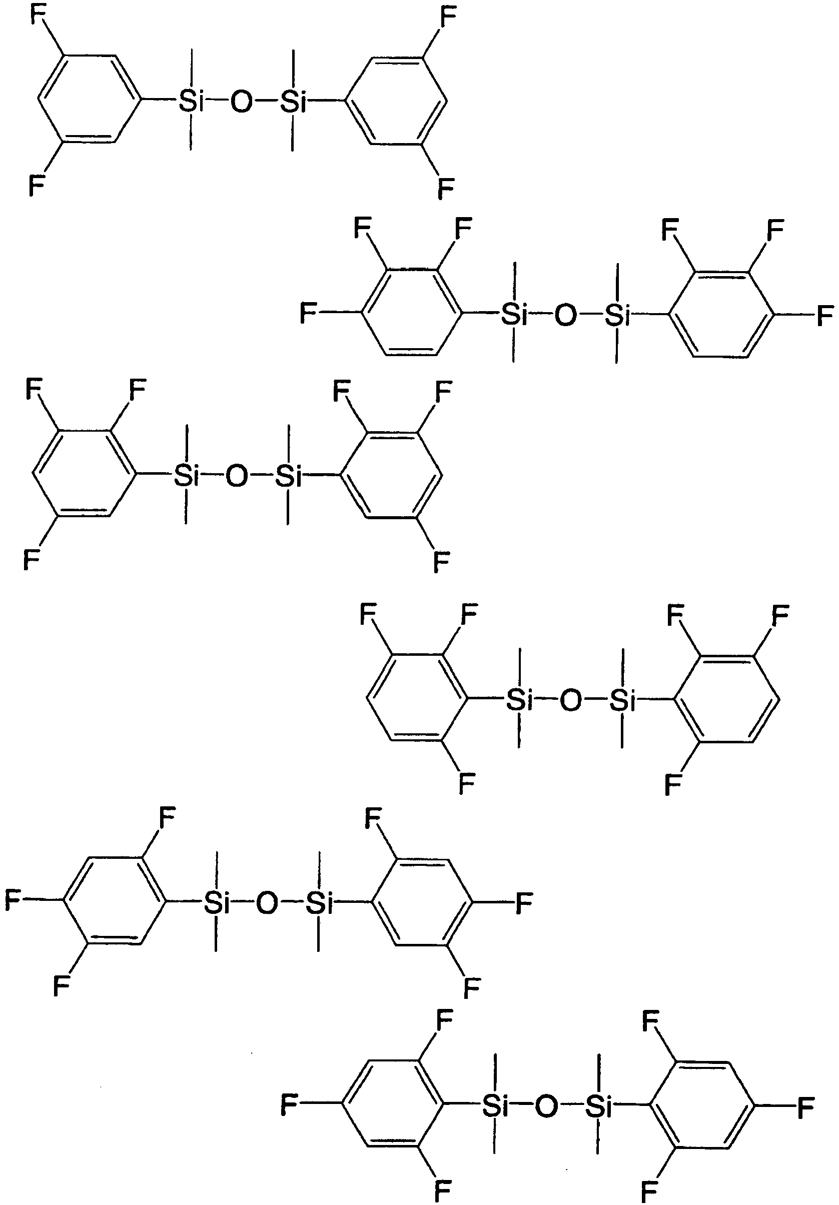

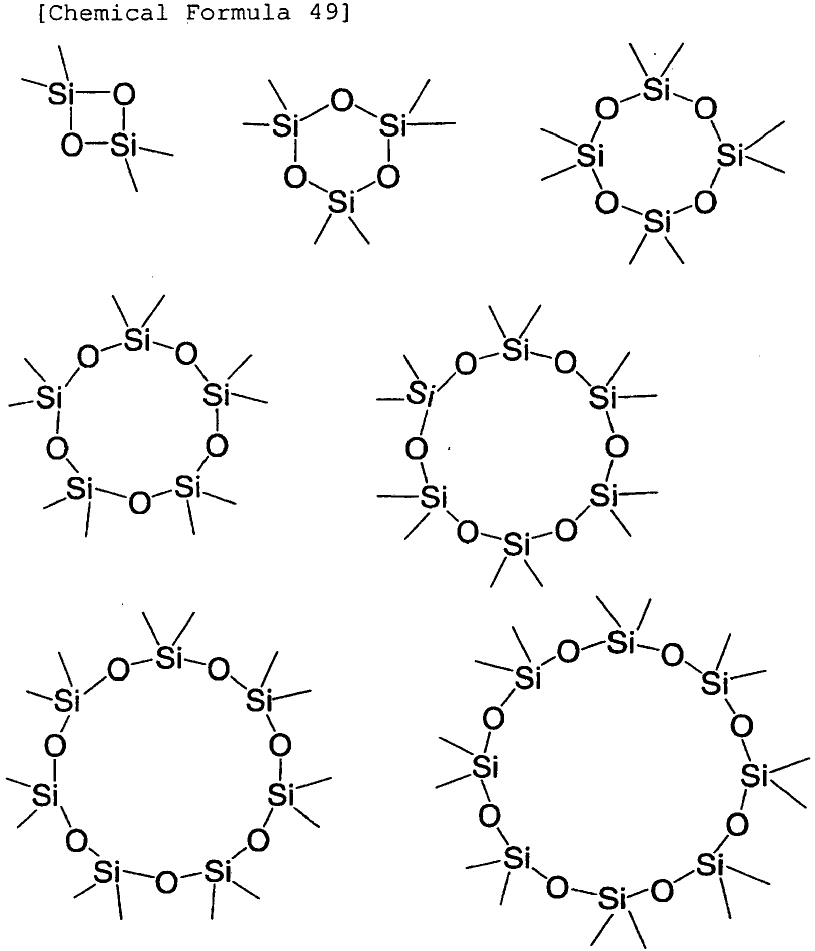

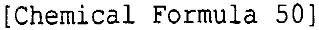

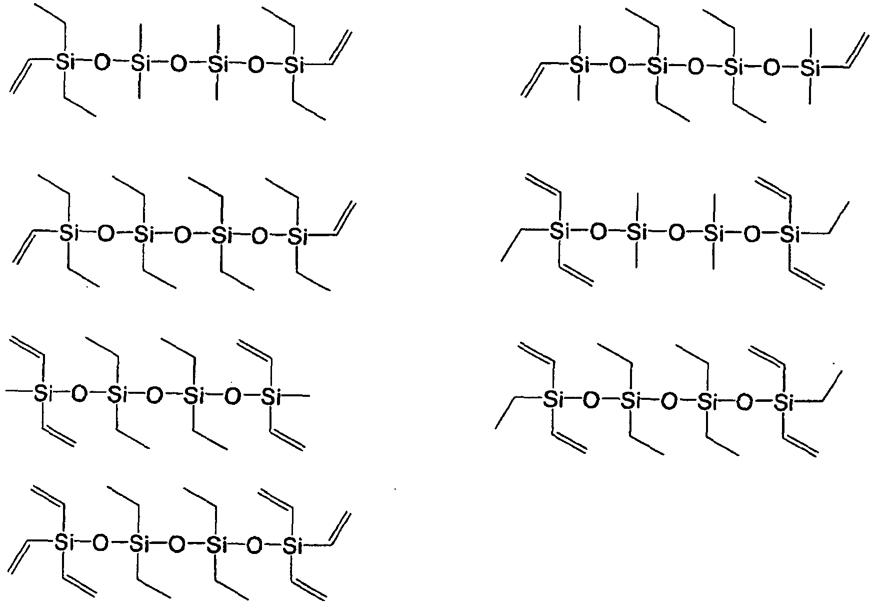

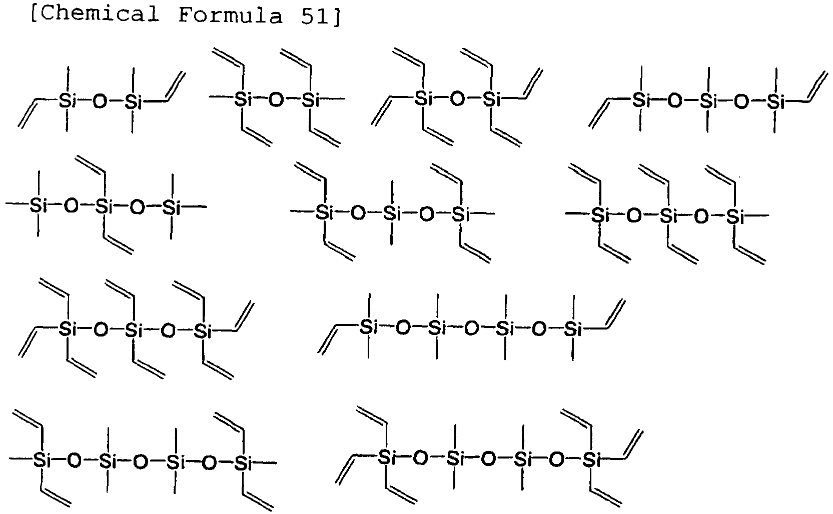

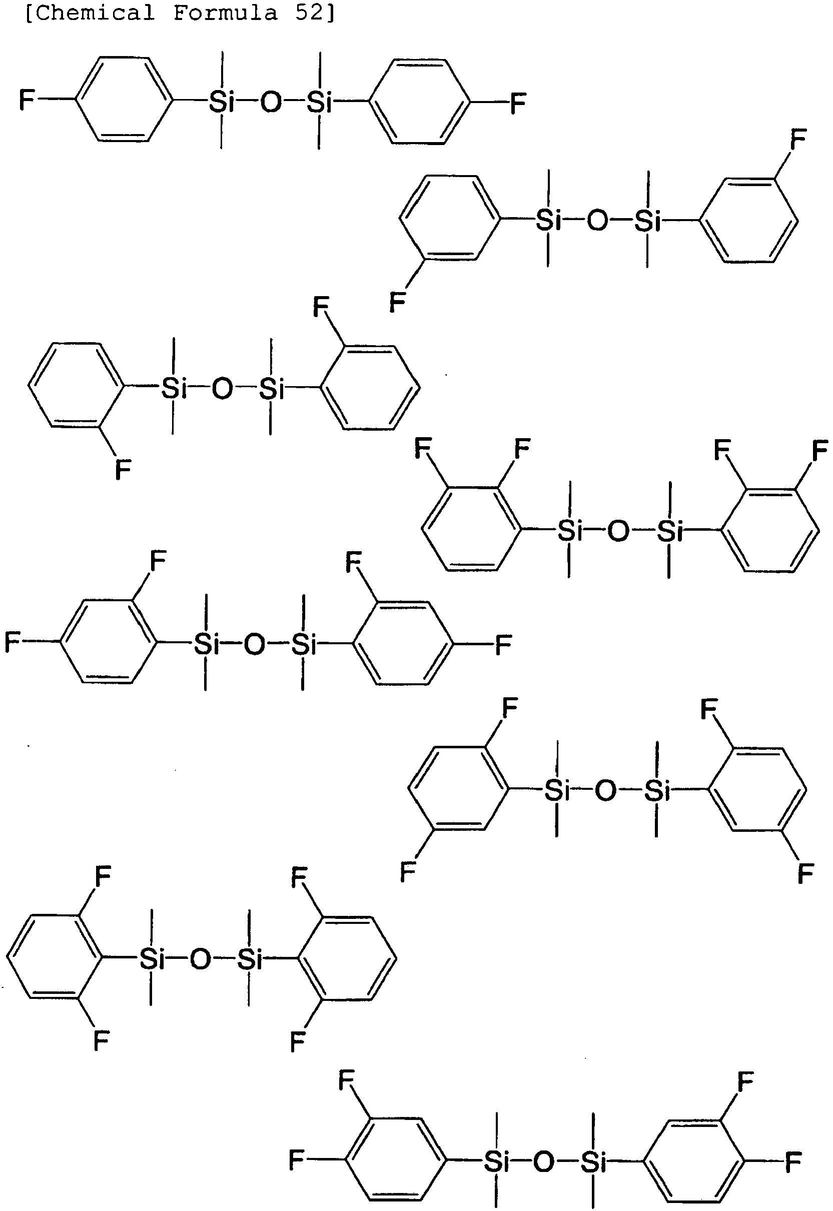

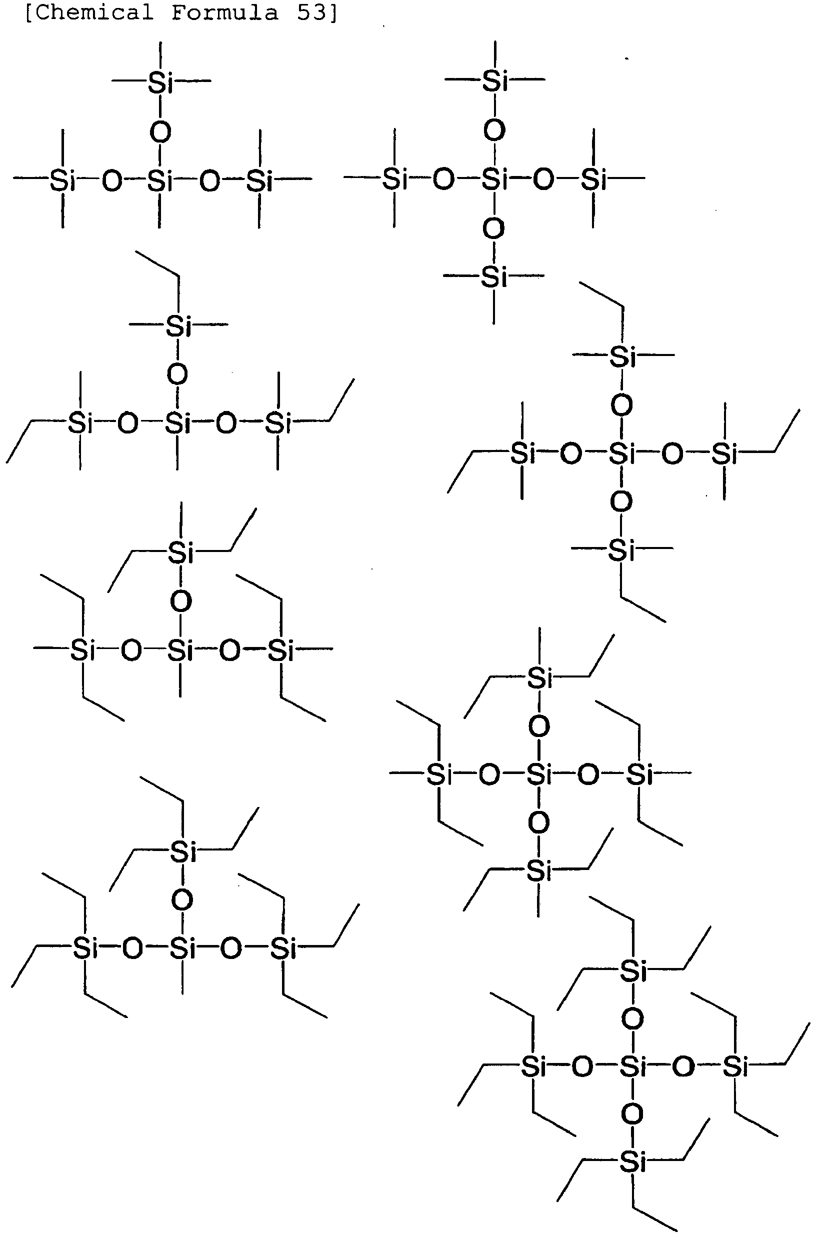

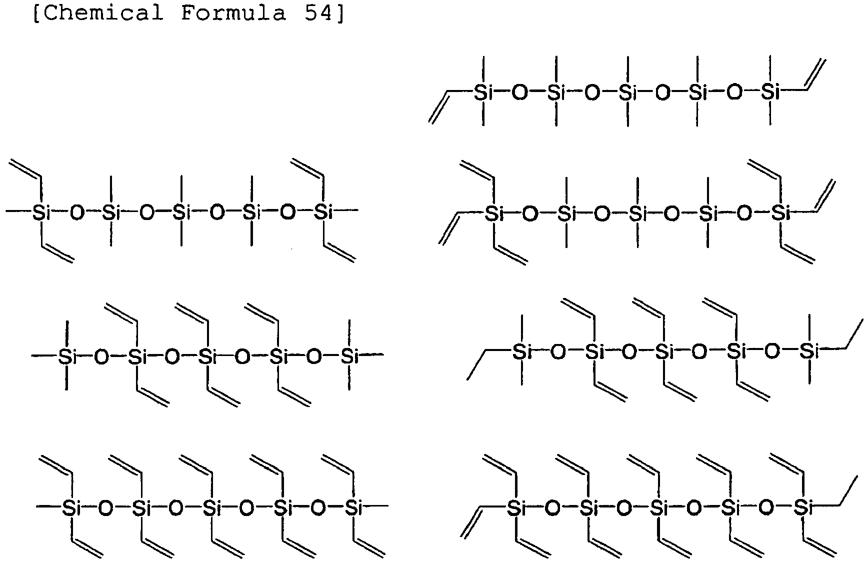

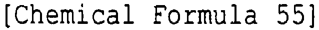

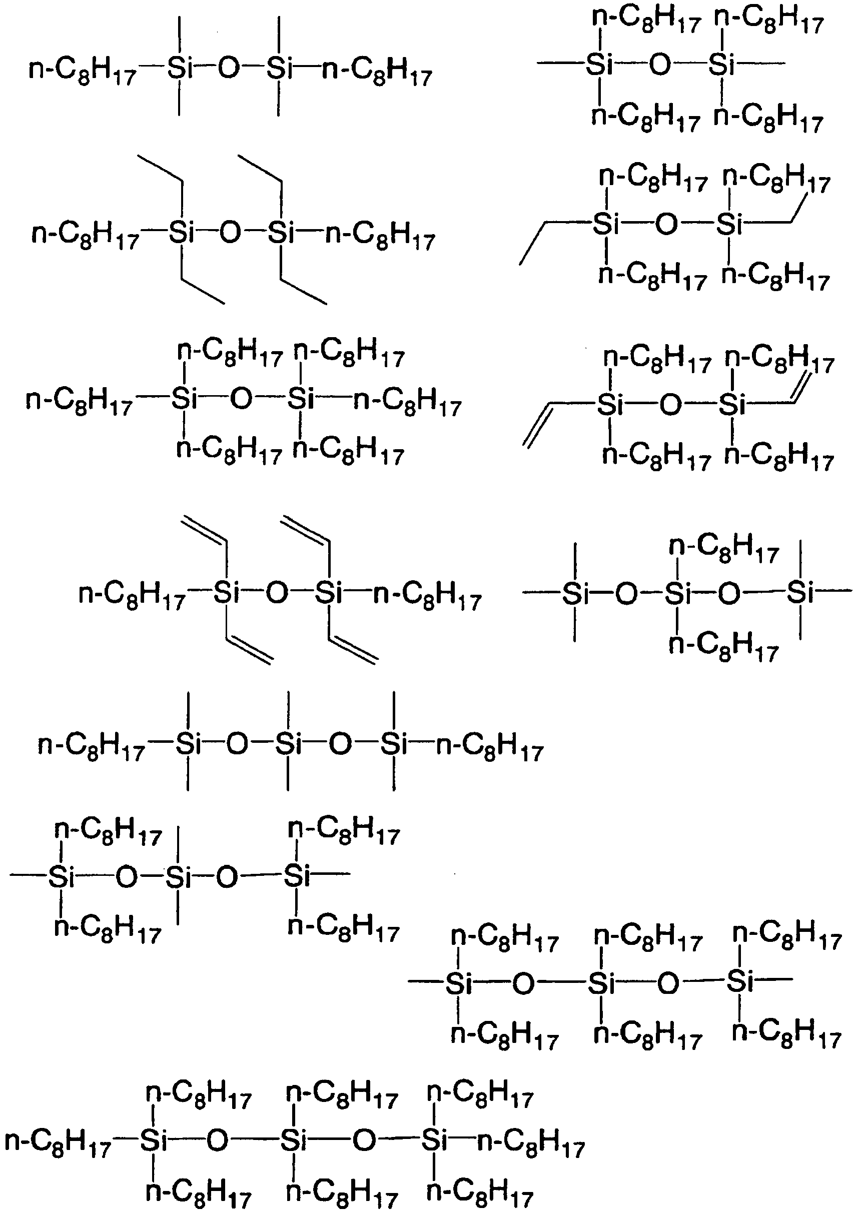

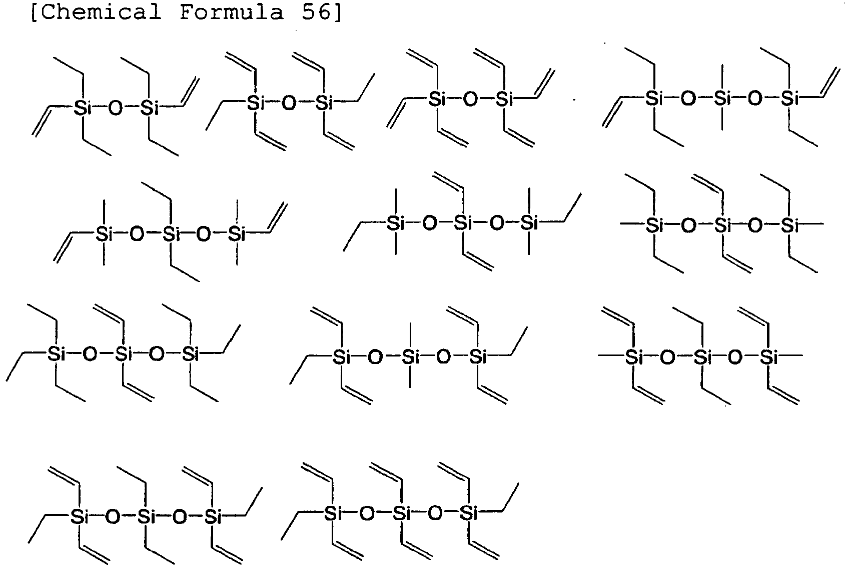

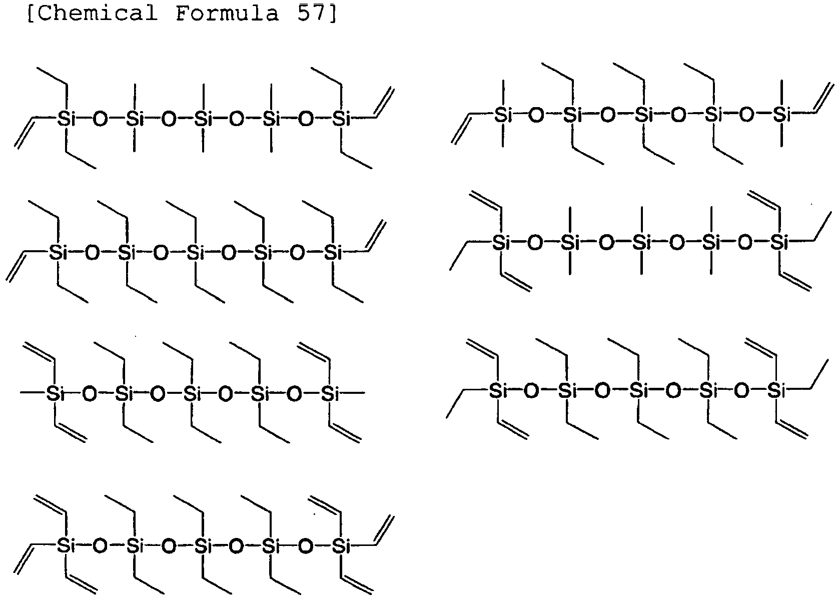

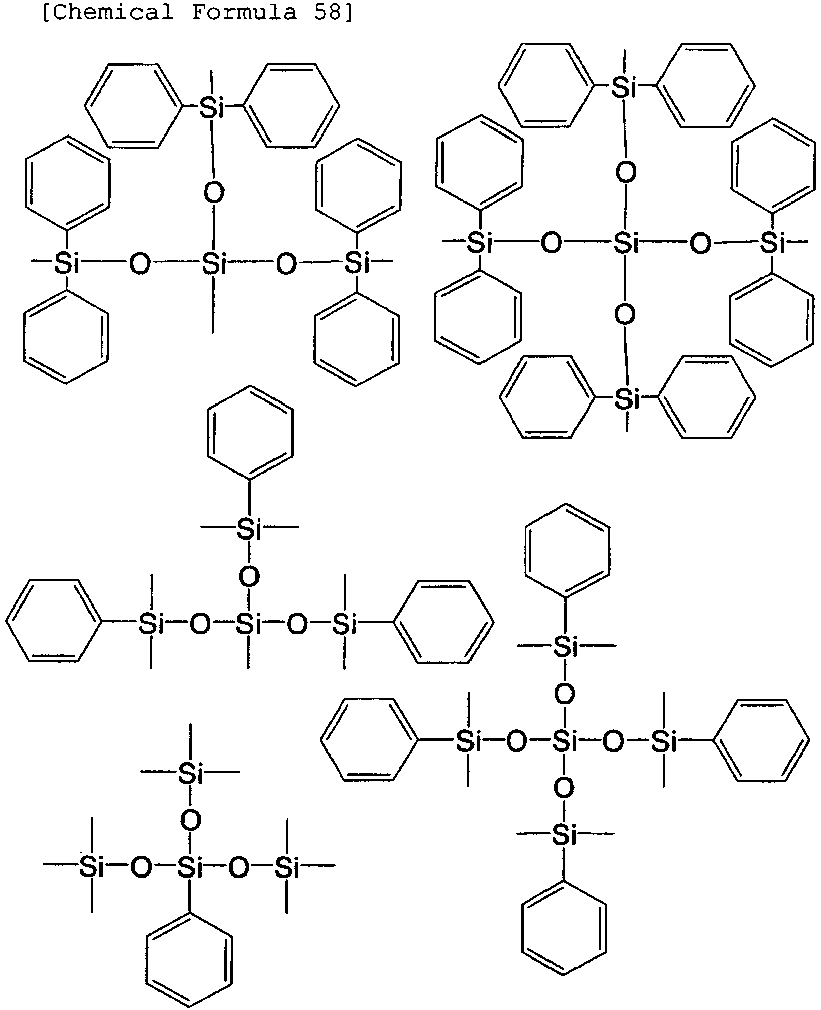

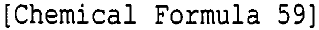

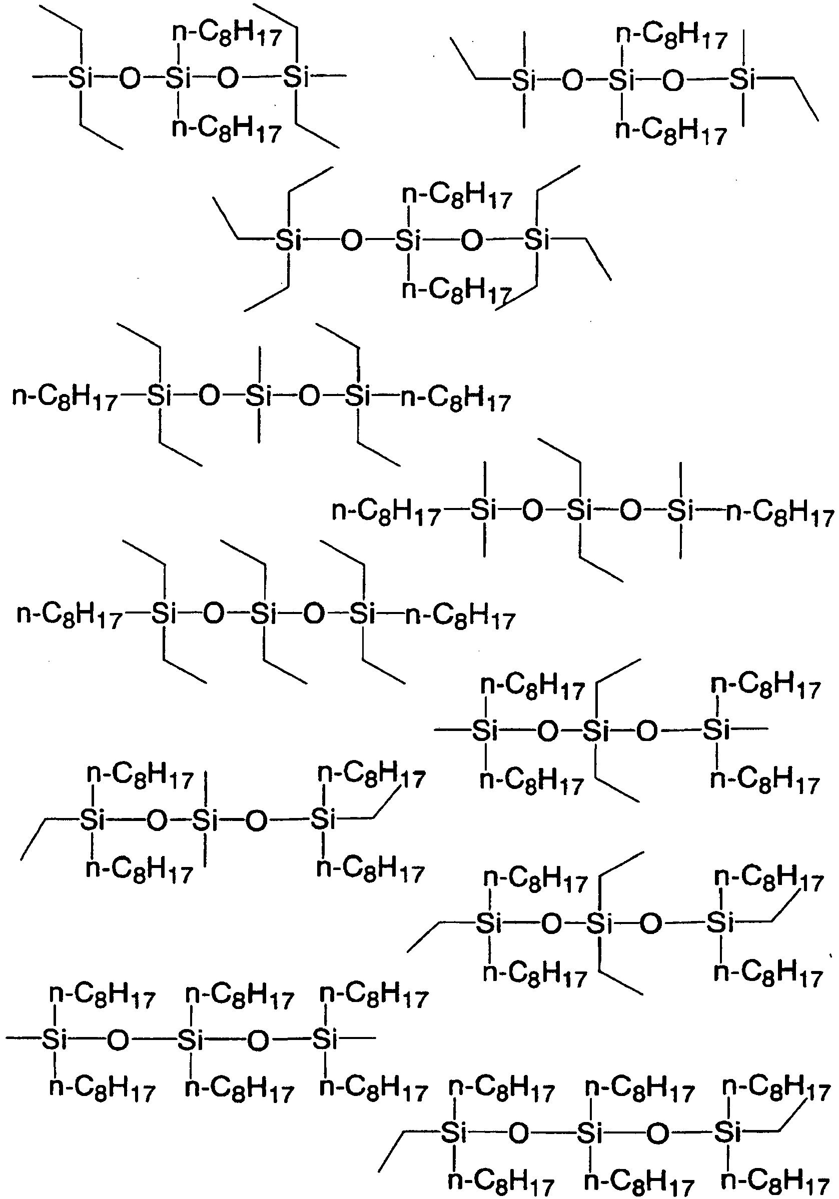

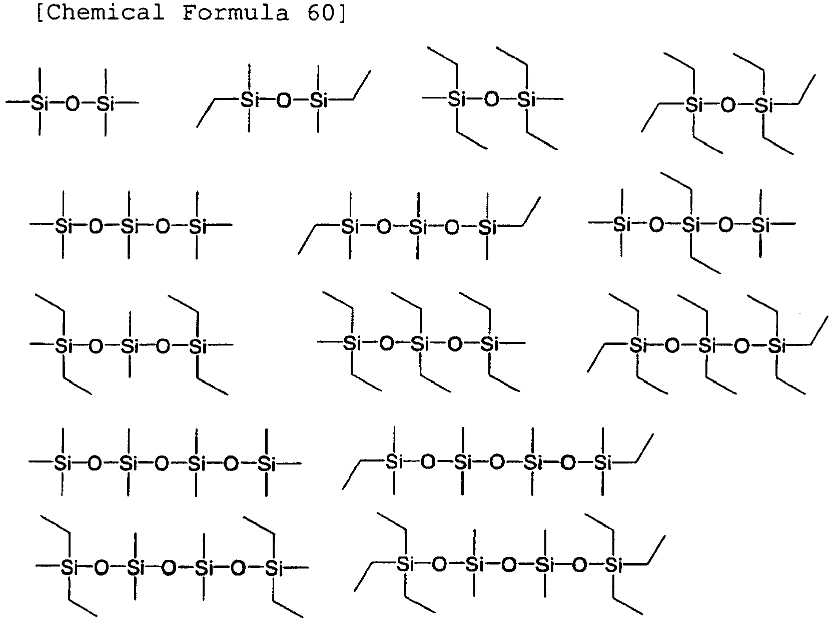

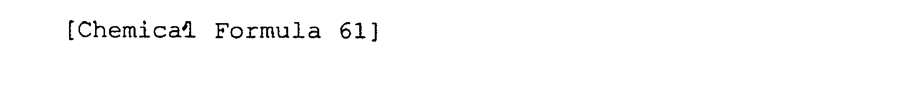

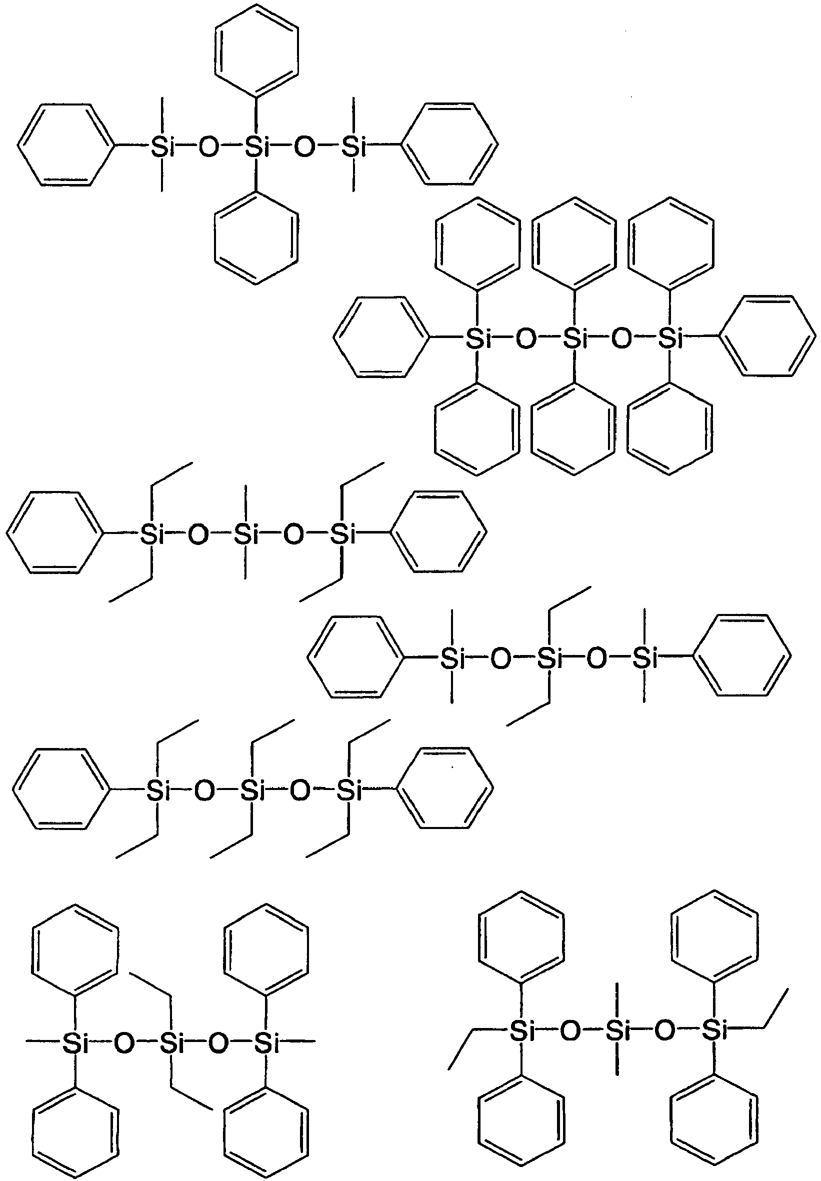

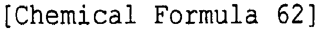

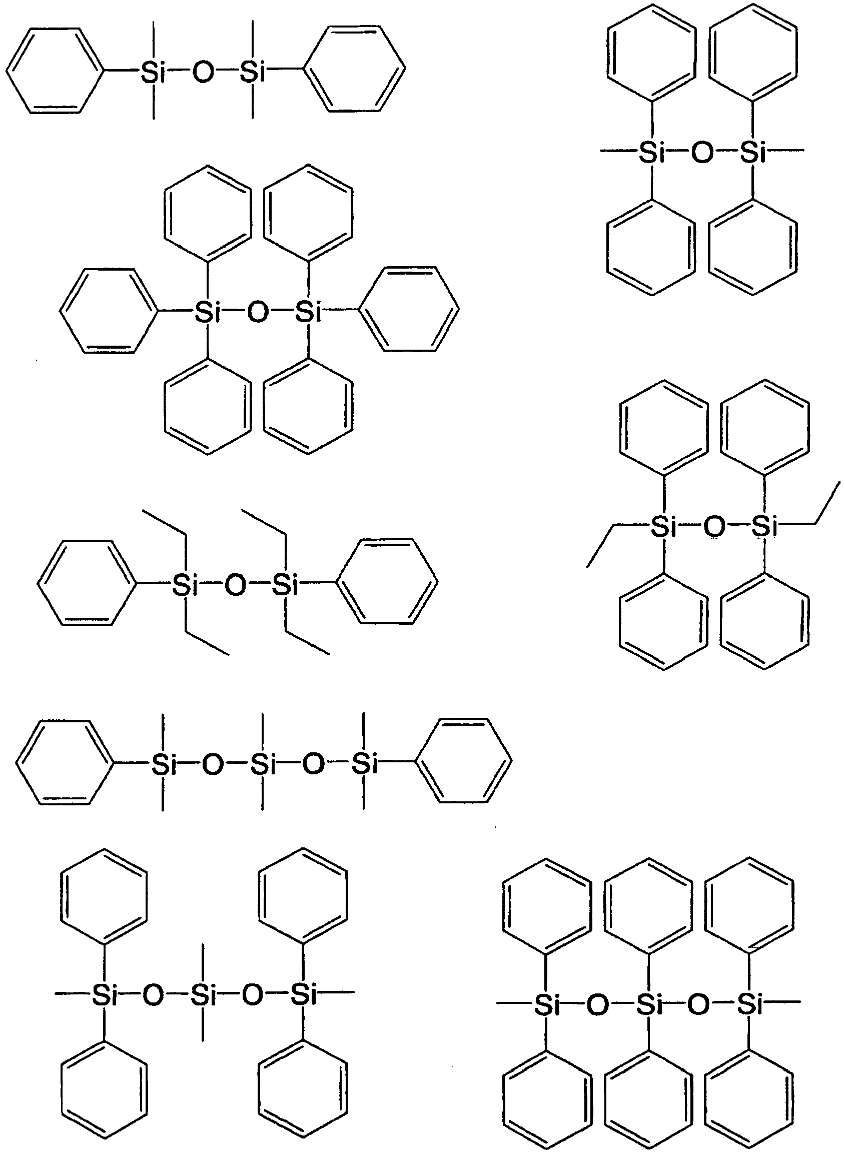

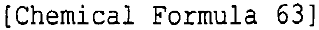

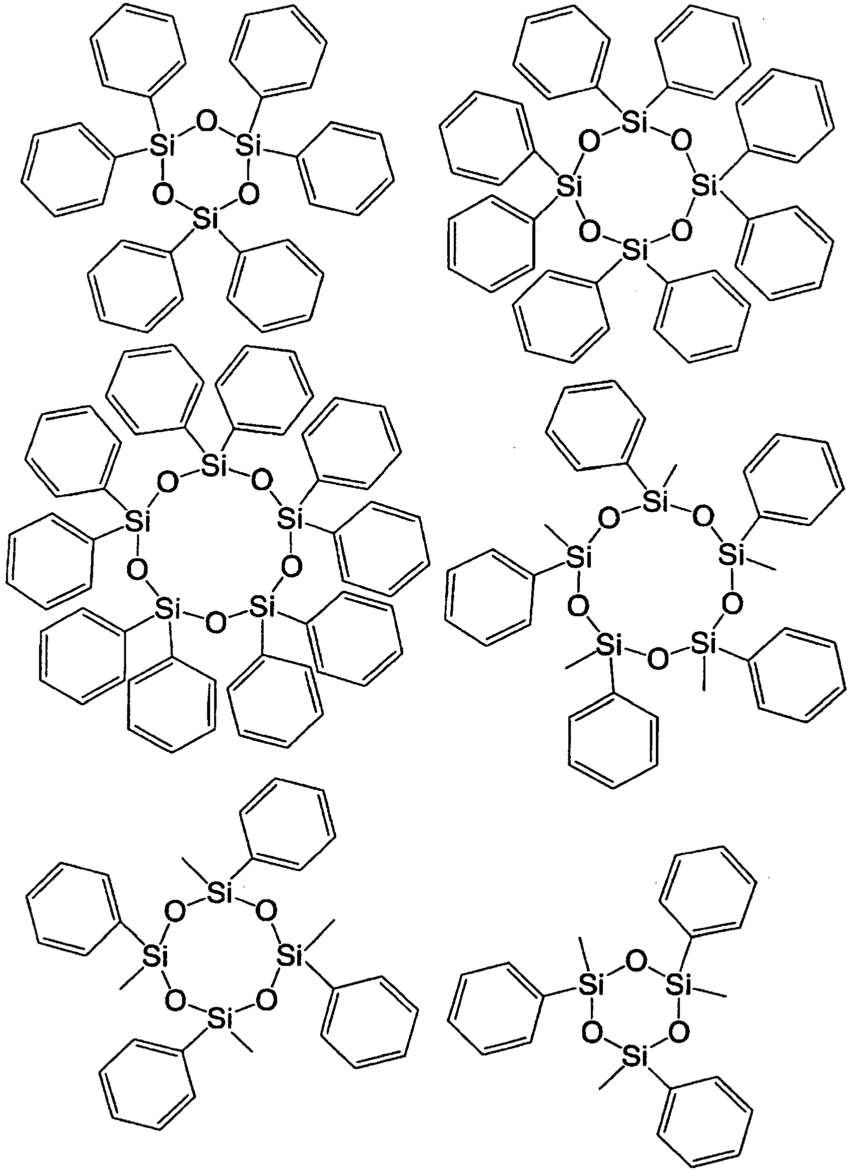

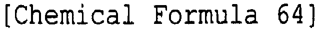

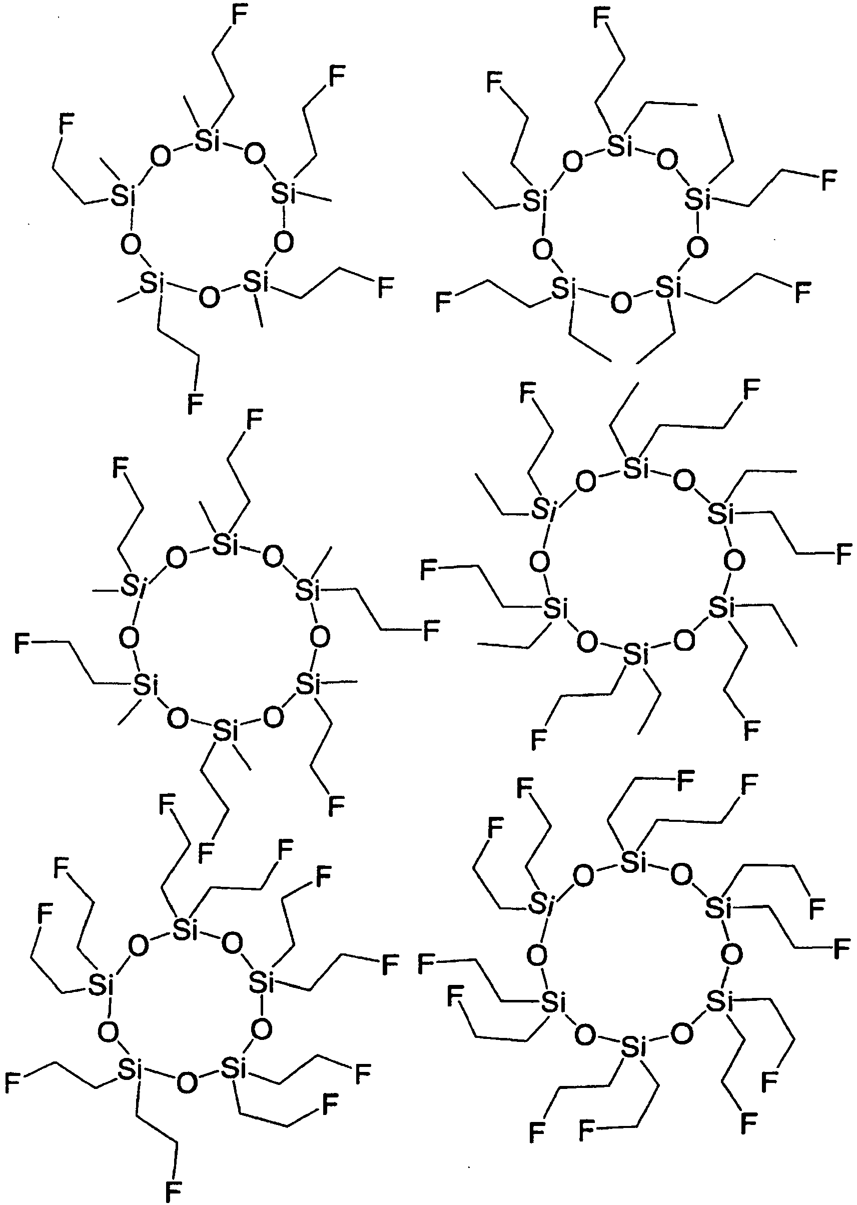

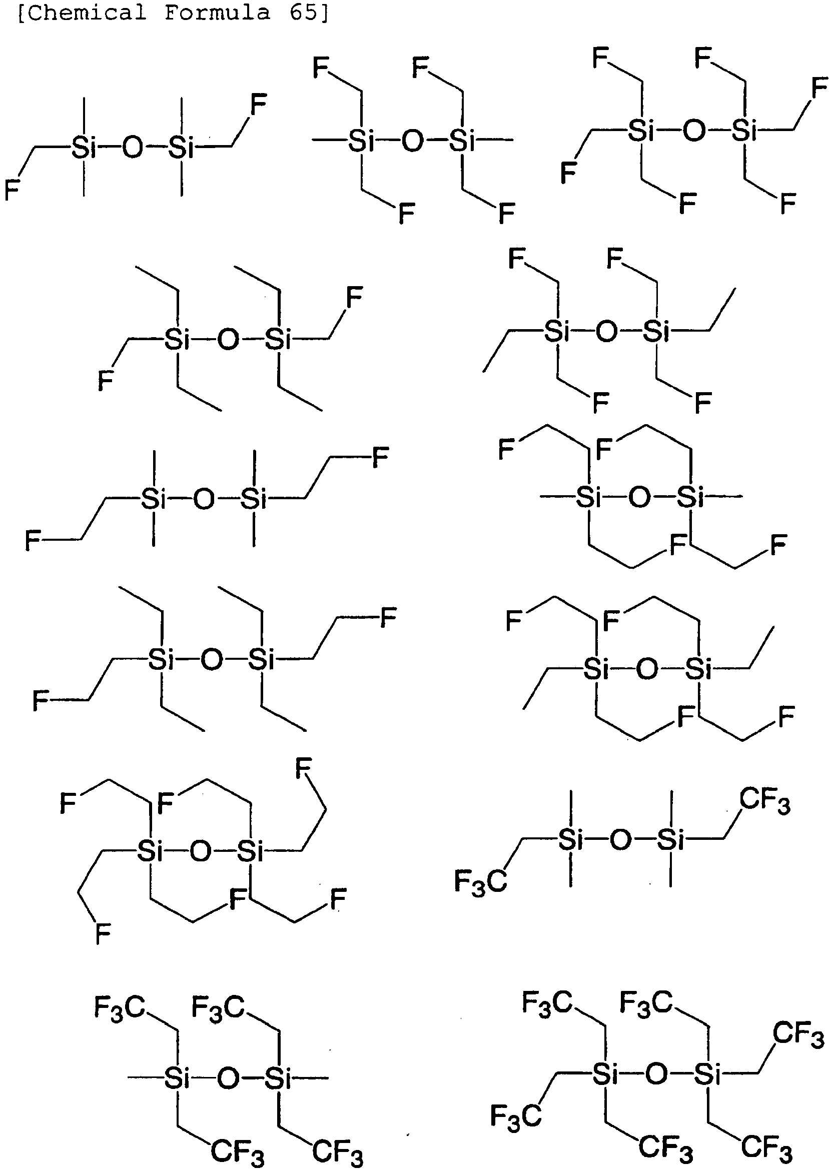

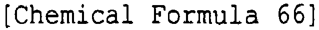

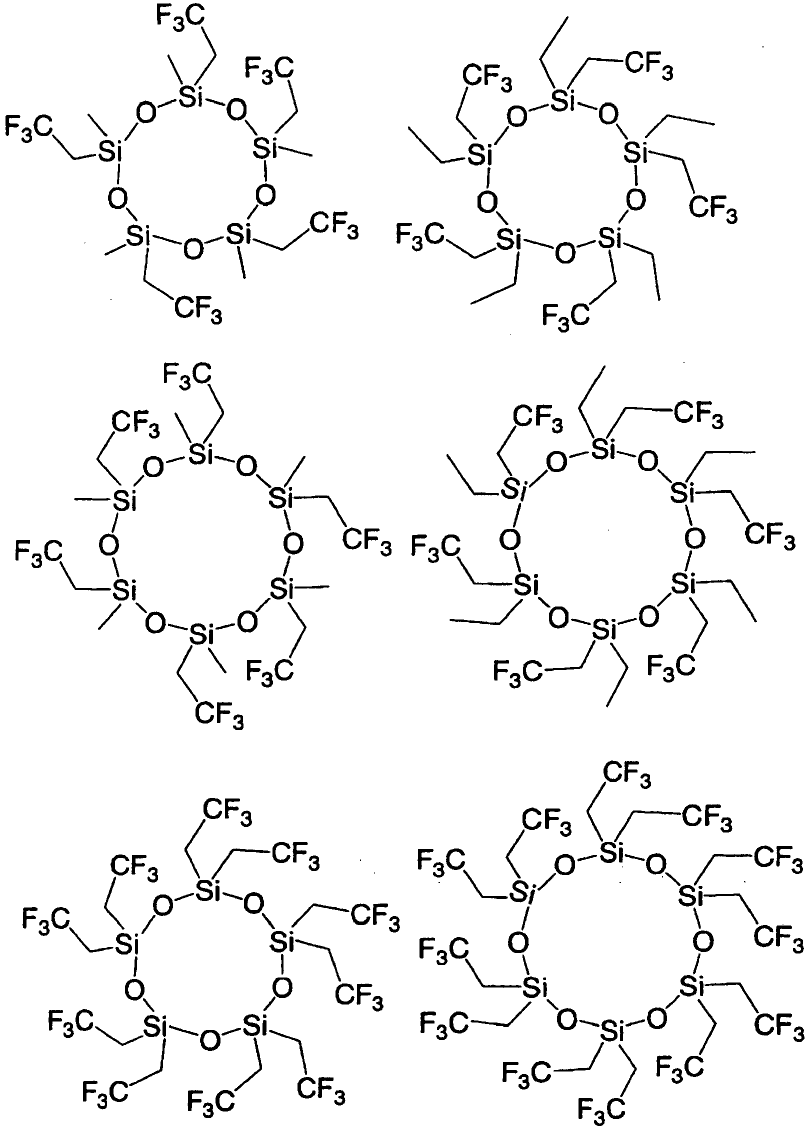

Among these compounds preferred are compounds described below.

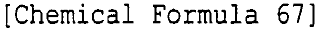

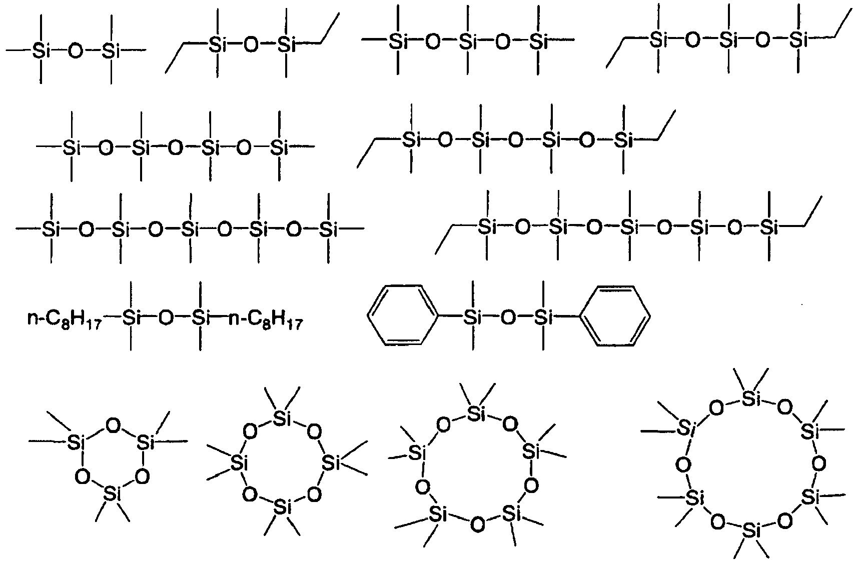

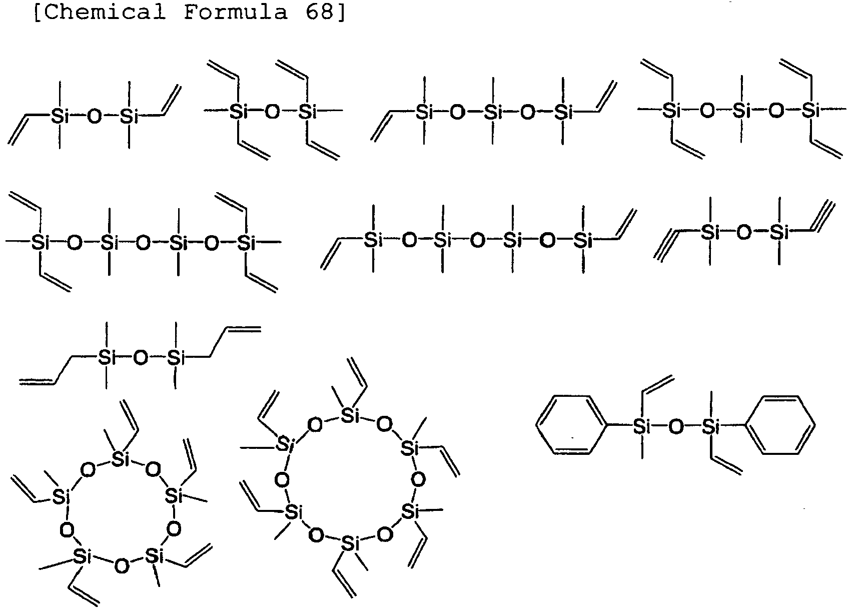

Among these compounds especially preferred are compounds described below.

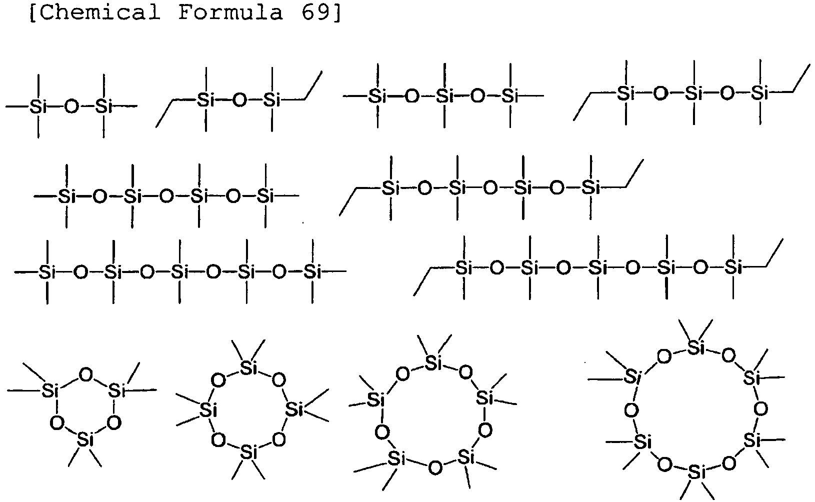

The particular structural compound has any molecular weight within the scope that does not significantly impair the advantages of the present invention, but typically 150 or more and preferably 160 or more. The molecular weight has no upper limit, but is typically 1000 or less, and preferably 500 or less due to its practical use. Above the upper limit of the molecular weight, the viscosity often increases.

The particular structural compound can be produced by any selected known method.

The above-mentioned particular structural compounds may be used alone or in any combination of two or more kinds thereof at any proportion in production process of the lithium difluorophosphate according to the present invention.

### «3-3. Production Process of Lithium Difluorophosphate»

The production process of the lithium difluorophosphate involves bringing the above-mentioned hexafluorophosphate salt in contact with a particular structural compound to form lithium difluorophosphate. This reaction of a hexafluorophosphate salt with a particular structural compound may be hereinafter referred to as "the reaction in the present invention".

While the mechanism of the reaction in the present invention is not clear, it is believed that the reaction represented by the following scheme (I) takes place when a compound represented by the formula (2) as a particular structural compound wherein all of the groups X¹ to X⁶ are hydrocarbon groups, for example, is used.

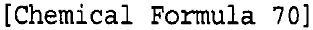

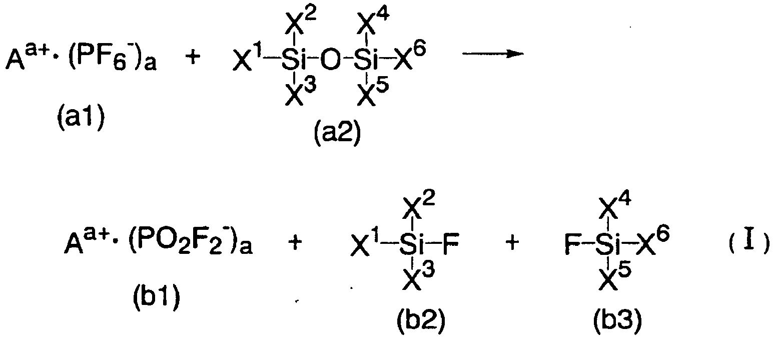

In the scheme (I), (a1) represents a hexafluorophosphate salt, (a2) a compound represented by the formula (2) (particular structural compound), (b1) a resultant lithium difluorophosphate, and (b2) and (b3) byproducts produced by the reaction. In the following description, the compounds shown in the scheme (I) may be represented with their signs in the scheme (I), such as "byproduct (b2) ".

In the scheme (I), A^{a+} represents a cation that binds with the hexafluorophosphate anion to form a salt, and a represents the valency of the cation A^{a+}, such as an integer from 1 through 4.

As shown in the scheme (I), it is believed that reaction with the hexafluorophosphate salt (a1) takes place at the binding site represented by the formula (1) in the structure of the particular structural compound (a2) as a reactive site, resulting in formation of the lithium difluorophosphate (b1). This reaction also produces byproducts (b2) and (b3) in addition to the lithium difluorophosphate (b1).

The reaction of the hexafluorophosphate salt with the particular structural compound may be carried out by any procedure under any reaction condition. Preferred examples of the procedure and condition are as follows.

The hexafluorophosphate salts are described above, and may be used alone or in any combination of two or more kinds thereof at any proportion.

The particular structural compounds are also described above, and may be used alone or in any combination of two or more kinds thereof at any proportion.

The hexafluorophosphate salt and the particular structural compound may be used in any proportion, but the preferred range is as follows.

That is, in production of the lithium difluorophosphate alone, the ratio of the molar number of the reactive site in the particular structural compound (the bond represented by the formula (1)) to the molar number of the hexafluorophosphate salt is typically one or more, preferably two or more, and more preferably four or more, and typically one hundred or less, preferably ten or less, and more preferably five or less. Below the lower limit of the ratio of the particular structural compound, the excess hexafluorophosphate salt is left unreacted, resulting in a reduction in reaction efficiency. Above the upper limit of the ratio of the particular structural compound, the excess particular structural compound is also left unreacted, resulting in a reduction in reaction efficiency.

When two or more hexafluorophosphate salts and/more two or more particular structural compounds are used together so that a total amount of substance of the salts and/or the compounds meets the above-mentioned range.

The hexafluorophosphate salt may be brought in contact with the particular structural compound in a solid phase or liquid phase. For homogeneous progression of the reaction, the reaction is preferably performed in a liquid phase. In particular, it is preferred that the hexafluorophosphate salt be reacted with the particular structural compound each in solution in a suitable solvent (hereinafter referred to as "reaction solvent"). When the solvent, and the hexafluorophosphate salt and/or the particular structural compound are separated into layers, the reaction is preferably performed in dispersion of these materials in the solvent by agitation.

Use of the reaction solvent will now be described as a premise for convenience of explanation, but is not limiting.

Any reaction solvent can be used that does not significantly impair the advantages of the present invention. The term "solvent that significantly impairs the advantages of the present invention" includes, for example, solvents that significantly inhibit the reaction of the hexafluorophosphate salt with the particular structural compound, and solvents that cause unfavorable reactions with the raw materials, i.e., hexafluorophosphate salt and particular structural compound, the target reaction product lithium difluorophosphate, and byproducts produced during the reaction process.

Among the reaction solvent preferred is a solvent that can dissolve at least the hexafluorophosphate salt for achieving homogeneous reaction.

Examples of the reaction solvent also includes, but not limited to, low-dielectric constant solvents. High-dielectric constant reaction solvents tend to inhibit the reaction of the hexafluorophosphate salt with the particular structural compound.

Preferred examples of the reaction solvent include ethers, nitriles, carboxylic esters, carbonic esters, sulfurous esters, sulfuric esters, and sulfonic esters.

Examples of the ethers include diethyl ether, dipropyl ether, t-butyl methyl ether, 1,1-dimethoxyethane, and
1,2-dimethoxyethane.

Examples of the nitriles include acetonitrile and propionitrile.

Examples of the sulfurous esters include ethylene sulfite, dimethyl sulfite, and diethyl sulfite.

Examples of the sulfuric esters include ethylene sulfate, dimethyl sulfite, and diethyl sulfate.

Examples of the sulfonic esters include methyl methanesulfonate, ethyl methanesulfonate, and methyl ethanesulfonate.

Examples of the carboxylic esters include methyl acetate, ethyl acetate, and methyl propionate.

Examples of the carbonic esters include dimethyl carbonate, diethyl carbonate, ethyl methyl carbonate, and ethylene carbonate.

Among these carbonic esters preferred are low-dielectric constant solvents such as solvents having a dielectric constant of 30 or less. Examples of the low-dielectric constant solvents include diethyl ether, dipropyl ether, t-butyl methyl ether, 1,1-dimethoxyethane, 1,2-dimethoxyethane, methyl acetate, ethyl acetate, methyl propionate, dimethyl carbonate, diethyl carbonate, and ethyl methyl carbonate.

Any of these reaction solvents may be used alone or in any combination of two or more kinds thereof at any proportion.

The reaction solvent is used in any amount, but for example, when the hexafluorophosphate salt is dissolved in the reaction solvent, in the following amount.

That is, it is preferred that the ratio of the molar number of the hexafluorophosphate salt to the volume of the reaction solvent be typically 0.01 mol/L or more, preferably 0.1 mol/L or more, more preferably 1 mol/L or more, more preferably 1.5 mol/L or more, and especially preferably 2 mol/L or more, and typically 10 mol/L or less and preferably 5 mol/L or less. Above the upper limit of the ratio of the reaction solvent compared to the hexafluorophosphate salt, the hexafluorophosphate salt may be saturated to become insoluble in the reaction solution, or, if dissolved, cause an increase in the viscosity of the reaction solution. Below the lower limit of the ratio of the reaction solvent compared to the hexafluorophosphate salt, the production efficiency or reaction rate may be reduced.

The reaction may be performed in any manner, for example, a batch, semi-batch, or flow manner.

Also any reactor can be used, for example, a microreactor capable of readily controlling heat transfer. However, a reactor that allows the reaction to progress under an air-tight condition, for example, a reactor equipped with a hermetic reaction tank is preferred that can prevent the raw material, hexafluorophosphate salt and the resultant lithium difluorophosphate from being decomposed by moisture. For homogeneous reaction, reactors equipped with a stirrer inside the reaction tank are preferred.

Any reaction procedure can be performed, but the reaction is typically started by bringing a hexafluorophosphate salt in contact with a particular structural compound and an optional reaction solvent within a reactor. The hexafluorophosphate salt, the particular structural compound, and the reaction solvent may be loaded in any order, that is, simultaneously or separately in a discretionary order, but preferably in such a way that the hexafluorophosphate salt is mixed with the reaction solvent in advance to prepare a mixture of part or all of the hexafluorophosphate salt dissolved in the reaction solvent, and this mixture is loaded and brought in contact with the particular structural compound in a reactor.

Any atmosphere may be employed during the reaction. However, the reaction is preferably performed in such an atmosphere that the atmospheric air is shut off, and more preferably in an inert atmosphere such as nitrogen or argon atmosphere since the raw material hexafluorophosphate salt and the resultant lithium difluorophosphate can be decomposed by moisture.

The reaction may be performed at any temperature, but typically at 0°C or higher, preferably 25°C or higher, and more preferably 30°C or higher, and typically 200°C or lower, preferably 150°C or lower, and more preferably 100°C or lower. Below the lower limit of the temperature during the reaction, the reaction does not progress, or if progresses, the reaction rate will decrease. This is not favorable from industrial viewpoint. Above the upper limit of the temperature during the reaction, reactions other than intended ones can occur, which can lead to a reduction in reaction efficiency or purity of the resultant lithium difluorophosphate.

The reaction may be performed under any pressure, but typically at atmospheric pressure or more, and typically 10 MPa or less, and preferably 1 MPa or less. Above the upper limit of the pressure during the reaction, the reactor tends to suffer from overload despite no advantages in the reaction. This cannot be industrially favorable.

The reaction time is not limited, but typically 30 minutes or more and preferably one hour or more, and typically 100 hours or less and preferably 75 hours or less. Below the lower limit of the reaction time, the reaction may not be completed. Above the upper limit of the reaction time, the products and by-products may be decomposed.

During the reaction, the hexafluorophosphate salt may be completely dissolved in the reaction solvent, or partially or completely separated. For enhanced reactivity, it is preferred that the substantially entire hexafluorophosphate salt be dissolved in the reaction solvent.

The particular structural compound may also be completely dissolved in the reaction solvent, or partially or completely separated.

The lithium difluorophosphate produced by the reaction may also be completely dissolved in the reaction solvent, or partially or completely separated. The solubility of the difluorophosphate salt may be designed such that the salt is formed in the preferred mode for the applications of the lithium difluorophosphate produced by the production process of the difluorophosphate according to the present invention, such as in the state of solid or solution.

After the reaction, the lithium difluorophosphate and by-products (for example, by-products (b2) and (b3) in the scheme (I)) are present in the reaction mixture. The lithium difluorophosphate and by-products may be dissolved in the reaction solvent after the reaction, or partially or completely deposited as a solid depending on various conditions such as their physical properties, the reaction temperature and the reaction solvent.

These by-products that may unfavorably affect the applications of the lithium difluorophosphate produced by the production process of the difluorophosphate according to the present invention are preferably removed to prevent the lithium difluorophosphate from being contaminated with these by-products.

When the lithium difluorophosphate is deposited from the reaction solvent, the by-products can be removed by distillation, or separation from the deposited lithium difluorophosphate during the filtration of the lithium difluorophosphate in the solvent. When the lithium difluorophosphate is dissolved in the solvent, the by-products can be distilled off from the reaction mixture. The by-products are distilled off at a normal pressure or reduced pressure. To prevent thermal decomposition of the lithium difluorophosphate, the distilled temperature is preferably lower than or equal to the temperature during the reaction. During distillation, part of the solvent used may be distilled off depending on its boiling point. In this case, the concentration of the distilland may be controlled by addition of the solvent. Alternatively, the concentration of the distilland can be made higher than that during the reaction by distilling off part of the solvent intentionally.

The by-products produced by the reaction in the present invention have often low boiling points especially when the compounds represented by the formula (2), in particular compounds represented by the formulae (4) to (6) are used as the particular structural compound. For this reason, the by-products can be vaporized through distillation, and removed from the reaction solvent. Therefore, distillation at a lower temperature than that during the reaction can readily remove the by-products from the reaction solvent without decomposing the lithium difluorophosphate.

That is, after the reaction by the production process of the lithium difluorophosphate in the present invention, the reaction solvent and the by-products are distilled off to yield a highly pure lithium difluorophosphate that can be often used without further purification processes. In applications that require purer lithium difluorophosphate, the product may be purified by known purification processes determined from physical properties of the product, as necessary.

For use of the lithium difluorophosphate produced in the present invention in desired applications, when the product lithium difluorophosphate in solution is preferred, the reaction can be performed in the reaction solvent to yield the reaction mixture that can be used as produced or purified, if necessary, in the desired applications. Even when the lithium difluorophosphate may be produced in saturated solution in the reaction solvent to be partially deposited, the reaction mixture can also be used as produced in desired applications.

In this case, the lithium difluorophosphate solution may contain certain by-products. However, the by-products need not to be removed unless they affect the desired applications. That is, the reaction can simply be performed in the reaction solvent, and the resultant reaction mixture can be used as produced in desired applications of the lithium difluorophosphate.

When unfavorably affecting desired applications of the lithium difluorophosphate, the by-products are preferably removed by the above-mentioned methods.

The solubility of the lithium difluorophosphate in the reaction solvent depends on physical properties of the lithium difluorophosphate and the type of the reaction solvent. Cations originated from the hexafluorophosphate salt determine the physical properties of the lithium difluorophosphate.
The reaction solvent may be any of the above-mentioned solvents, but should be selected in consideration of the desired applications of the lithium difluorophosphate when the reaction mixture is used as produced in such applications.

On the other hand, when the product lithium difluorophosphate is preferably deposited in solid for use in the desired applications, the lithium difluorophosphate is taken out of the reaction solvent. When the lithium difluorophosphate is deposited in solid, this is simply filtered out. This filtration can also separate the lithium difluorophosphate from the by-products. The filtration can be carried out by any known method, depending on physical properties and size of the deposited solid.

When the lithium difluorophosphate is not deposited in solid, or if deposited, only in a small amount, which leads to low recovery of the lithium difluorophosphate, it is preferred that the difluorophosphate be deposited in solid by distilling off the solvent. The reaction solvent is preferably distilled off by any method similar to that of distilling off the by-products because heating can cause thermal decomposition of the lithium difluorophosphate. In the middle stage of the distillation, the by-products can be vaporized to be separated from the lithium difluorophosphate.

In summary, the lithium difluorophosphate deposited in solid by any of the methods can be a highly pure product that has been separated from the by-products.

### [4. Nonaqueous Electrolyte]

The nonaqueous electrolyte according to the present invention is a nonaqueous electrolyte used for nonaqueous electrolyte secondary batteries comprising a negative electrode and a positive electrode that can occlude and discharge ions, and a nonaqueous electrolyte wherein the reaction mixture produced by the production process of the lithium difluorophosphate is used.

That is, the production process of the nonaqueous electrolyte according to the present invention can be, by way of example, any production process similar to that of the lithium difluorophosphate.

Like conventional nonaqueous electrolytes, typically, the nonaqueous electrolyte according to the present invention essentially contains electrolytes and nonaqueous solvents in which the electrolytes are dissolved.
Also, the nonaqueous electrolyte according to the present invention is characterized by being prepared from a mixture obtained by mixing at least one nonaqueous solvent, a hexafluorophosphate salt, and a compound having a bond represented by the following formula (1) followed by removing low-boiling components from the system.
[Chemical Formula 71]

Si-O-Si (1)

The production process of the nonaqueous electrolyte according to the present invention is a process for preparing the nonaqueous electrolyte according to the present invention, that is, by preparing an electrolyte from a mixture obtained by mixing at least one nonaqueous solvent, a hexafluorophosphate salt, and a particular structural compound and removing low-boiling components therefrom.

The nonaqueous electrolyte according to the present invention may contain other components in an electrolyte prepared by the production process of the nonaqueous electrolyte according to the present invention in order to achieve desired characteristics.

Nonaqueous solvents, hexafluorophosphate salts, and particular structural compounds for use in the nonaqueous electrolyte according to the present invention, and then the production process of the nonaqueous electrolyte according to the present invention will be described. In the production process of the nonaqueous electrolyte according to the present invention, preparation treatment may be carried out after the mixing process of the materials. Thus, electrolytes, nonaqueous solvents, and additives that may be used for the preparation treatment will also be described.

### <<4-1. Nonaqueous Solvent>>

The nonaqueous electrolyte according to the present invention may contain any nonaqueous solvents that do not adversely affect battery characteristics, but preferably one or more of the solvents described below that are used for the nonaqueous electrolyte. Furthermore, it is preferred to use solvents having a relatively low-dielectric constant, such as a dielectric constant at room temperature of less than 20, and preferably less than 10. This can decrease the treating time associated with the decrease and disappearance of the particular structural compound in the mixing step described below, although the reason is not clear.

In the mixing process, the nonaqueous solvent may be used alone or in any combination of two or more kinds thereof at any proportion. Also in any combination of two or more solvents at any proportion, the mixed solvents preferably have a dielectric constant of less than 20, and preferably less than 10 from the above-mentioned same reason.

Examples of the nonaqueous solvents that are commonly used include
linear and cyclic carbonic esters,
linear and cyclic carboxylic esters,
linear and cyclic ethers,
phosphorus-containing organic solvents, and
sulfur-containing organic solvents.

Examples of the linear carbonic esters that are commonly used include, but not limited to,
dimethyl carbonate,
ethyl methyl carbonate,
diethyl carbonate,
methyl n-propyl carbonate,
ethyl n-propyl carbonate, and
di-n-propyl carbonate.

Among these linear carbonic esters preferred are dimethyl carbonate, ethyl methyl carbonate, and diethyl carbonate because of their superior industrial availability and various characteristics for the nonaqueous electrolyte secondary batteries.

Examples of the cyclic carbonic esters that are commonly used include, but not limited to,
ethylene carbonate,
propylene carbonate, and
butylene carbonates (2-ethyl ethylene carbonate, cis- and trans-2,3-dimethyl ethylene carbonate).

Among these cyclic carbonic esters preferred are ethylene carbonate and propylene carbonate because of their various superior characteristics for the nonaqueous electrolyte secondary batteries.

Examples of the linear carboxylic esters that are commonly used include, but not limited to,
methyl acetate,
ethyl acetate,
n-propyl acetate,
i-propyl acetate,
n-butyl acetate,
i-butyl acetate,
t-butyl acetate,
methyl propionate,
ethyl propionate,
n-propyl propionate,
i-propyl propionate,
n-butyl propionate,
i-butyl propionate, and
t-butyl propionate.

Among these linear carboxylic esters preferred are ethyl acetate, methyl propionate, and ethyl propionate because of their superior industrial availability and various characteristics for the nonaqueous electrolyte secondary batteries.

Examples of the cyclic carboxylic esters that are commonly used include, but not limited to,
γ-butyrolactone,
γ-valerolactone, and
δ-valerolactone.

Among these cyclic carboxylic esters preferred is γ -butyrolactone because of its superior industrial availability and various characteristics for the nonaqueous electrolyte secondary batteries.

Examples of the linear ethers that are commonly used include, but not limited to,
dimethoxymethane,
dimethoxyethane,
diethoxymethane,
diethoxyethane,
ethoxymethoxymethane, and
ethoxymethoxyethane.

Among these linear ethers preferred are dimethoxyethane and diethoxyethane because of their superior industrial availability and various characteristics for the nonaqueous electrolyte secondary batteries.

Examples of the cyclic ethers that are commonly used include, but not limited to, tetrahydrofuran and 2-methyltetrahydrofuran.

Examples of the phosphorus-containing organic solvents that are commonly used include, but not limited to,
phosphate esters such as
trimethyl phosphate,
triethyl phosphate, and
triphenyl phosphate;
phosphite esters such as
trimethyl phosphite,
triethyl phosphite, and
triphenyl phosphite; and
phosphine oxides such as
trimethylphosphine oxide,
triethylphosphine oxide, and
triphenylphosphine oxide.

Examples of the sulfur-containing organic solvents that are commonly used include, but not limited to,
ethylene sulfite,
1,3-propane sultone,
1,4-butane sultone,
methyl methanesulfonate,
busulfan,
sulfolane,
sulfolene,
dimethyl sulfone,
diphenyl sulfone,
methyl phenyl sulfone,
dibutyl disulfide,
dicyclohexyl disulfide,
tetramethylthiuram monosulfide,
N,N-dimethylmethanesulfonamide, and
N,N-diethylmethanesulfonamide.

Among these sulfur-containing organic solvents preferred are linear and cyclic carbonic esters or linear and cyclic carboxylic esters because of their various characteristics for the nonaqueous electrolyte secondary batteries. More preferred are ethylene carbonate, propylene carbonate, dimethyl carbonate, ethyl methyl carbonate, diethyl carbonate, ethyl acetate, methyl propionate, ethyl propionate, and γ-butyrolactone.

Among the above-mentioned nonaqueous solvents most preferred are dimethyl carbonate, ethyl methyl carbonate, diethyl carbonate, ethyl acetate, methyl propionate, and ethyl propionate.

The amount of the nonaqueous solvent used for producing the nonaqueous electrolyte according to the present invention will be described in the section <4-5-1. Mixing Treatment>

### «4-2. Hexafluorophosphate Salt»

A hexafluorophosphate salt for use in the nonaqueous electrolyte according to the present invention are the same as the above-mentioned hexafluorophosphate salt in the present invention, and may be any hexafluorophosphate salt that consists of one or more hexafluorophosphate anions and cations, but is selected given that nonaqueous electrolytes eventually produced are required to be usable as electrolytes for nonaqueous electrolyte secondary batteries.

Therefore, the hexafluorophosphate salt in the present invention consists of one or more hexafluorophosphate anions and one or more metal cations selected from Groups 1, 2, and 13 of the periodic table (hereinafter referred to as "particular metal"), and/or consists of one or more hexafluorophosphate anions and quaternary oniums.

### <4-2-1. Metal Hexafluorophosphate Salt>

When the hexafluorophosphate salt for use in the nonaqueous electrolyte according to the present invention consists of hexafluorophosphate anions and particular metal ions (metal hexafluorophosphate salts), compounds similar to those mentioned in <3-1-1. Metal Hexafluorophosphate Salt> can be used.

### <4-2-2. Quaternary Onium Salt of Hexafluorophosphoric Acid>

When the hexafluorophosphate salt for used in the nonaqueous electrolyte according to the present invention consists of hexafluorophosphate anions and quaternary oniums (quaternary onium salt of hexafluorophosphoric acid), compounds similar to the above-mentioned quaternary onium salts of hexafluorophosphoric acid.

### <4-2-3. Other Conditions>

Although the hexafluorophosphate salts may be used alone or in any combination thereof at any proportion in the nonaqueous electrolyte according to the present invention, a single hexafluorophosphate salt is typically used from the viewpoint of efficient operation of secondary batteries.

The hexafluorophosphate salt has any molecular weight that does not significantly impair the advantages of the present invention, but typically has a molecular weight of 150 or more. The molecular weight has no upper limit, but in consideration of reactivity of the present reaction, is typically 1000 or less, and preferably 500 or less due to its practical use.

Although one hexafluorophosphate salt is typically used alone, a combination of two or more hexafluorophosphate salts may be used when such a combination is preferred for the nonaqueous electrolyte.

The hexafluorophosphate salt can be produced by any known method.

The amount of the nonaqueous electrolyte used for producing the nonaqueous electrolyte according to the present invention will be described in the section <4-5-1. Mixing Treatment>.

### «4-3. Particular Structural Compound»

The particular structural compound for use in the nonaqueous electrolyte according to the present invention has a structure represented by the following formula (1), and is particular structural compounds as those mentioned in <3-2. Particular Compound>.
[Chemical Formula 72]

**Si-O-Si** (1)

The particular structural compound can be produced by any known method.

The particular structural compounds may be used alone or in any combination of two or more kinds thereof at any proportion.

The amount of the particular structural compound used for producing the nonaqueous electrolyte according to the present invention will be described in the section <4-5-1. Mixing Treatment>.

### «4-4. Additives»

The nonaqueous electrolyte according to the present invention may contain various additives to an extent that does not significantly impair the advantages of the present invention. The preparation treatment can be carried out by adding any known conventional additives. The additives can be used alone, or in any combination of two or more kinds thereof at any proportion.

Examples of the additives include overcharge protection agents and aids for improving capacity retention or cycle characteristics after storage at elevated temperatures. Among these additives, carbonic esters having at least one of an unsaturated bond and a halogen atom (hereinafter abbreviated to as "particular carbonic ester") are preferably added as the aid for improving capacity retention or cycle characteristics after storage at elevated temperatures. The particular carbonic ester and other additives will now be described separately.

### <4-4-1. Particular Carbonic Ester>

The particular carbonic ester according to the present invention is a carbonic ester that has at least one of an unsaturated bond and a halogen atom. That is, the particular carbonic ester according to the present invention may have only an unsaturated bond or only a halogen atom, or both the unsaturated bond and the halogen atom.

The particular carbonic ester has any molecular weight that does not significantly impair the advantages of the present invention, but typically has a molecular weight of 50 or more, preferably 80 or more, and typically 250 or less, preferably 150 or less.

Above the upper limit of the molecular weight, the solubility of the particular carbonic ester in nonaqueous electrolyte decreases so that the advantages of the present invention cannot be fully utilized.

The particular carbonic ester can be produced by any known method.

The nonaqueous electrolyte according to the present invention may contain any one of the particular carbonic esters alone or in any combination of two or more kinds thereof at any proportion.

The nonaqueous electrolyte according to the present invention may contain the particular carbonic ester in any ratio that does not significantly impair the advantages of the present invention, but desirably at a concentration of typically 0.01% by weight or more, preferably 0.1% by weight or more, and more preferably 0.3% by weight or more, and typically 70% by weight or less, preferably 50% by weight or less, and more preferably 40% by weight or less based on the nonaqueous electrolyte according to the present invention.

Below the lower limit, nonaqueous electrolyte secondary batteries that contain the nonaqueous electrolyte according to the present invention can hardly produce sufficient effects of improving cycle characteristics. Above the upper limit of the ratio of the particular carbonic ester, nonaqueous electrolyte secondary batteries that contain the nonaqueous electrolyte according to the present invention often have deteriorated high-temperature preservation and trickle charge characteristics, and particularly may generate more gases and decrease the capacity retention rate.

### (4-4-1-1. Unsaturated Carbonic Ester)

Among the particular carbonic esters according to the present invention, the carbonic esters having an unsaturated bond (hereinafter abbreviated to as "unsaturated carbonic ester") can be any unsaturated carbonic esters that have a carbon-carbon unsaturated bond such as a carbon-carbon double bond or a carbon-carbon triple bond. The carbonic esters having an unsaturated bond can include carbonic esters having an aromatic ring.

Examples of the unsaturated carbonates include vinylene carbonate derivatives, ethylene carbonate derivatives substituted by a substituent having an aromatic ring or a carbon-carbon unsaturated bond, phenyl carbonates, vinyl carbonates, and allyl carbonates.

Examples of the vinylene carbonate derivatives include vinylene carbonate,
methylvinylene carbonate,
4,5-dimethyl vinylene carbonate,
phenyl vinylene carbonate, and
4,5-diphenyl vinylene carbonate.

Examples of the ethylene carbonate derivatives substituted by a substituent having an aromatic ring or a carbon-carbon unsaturated bond include
vinyl ethylene carbonate,
4,5-divinyl ethylene carbonate,
phenyl ethylene carbonate, and
4,5-diphenyl ethylene carbonate.

Examples of the phenyl carbonates include diphenyl carbonate,
ethyl phenyl carbonate,
methyl phenyl carbonate, and
t-butyl phenyl carbonate.

Examples of the vinyl carbonates include
divinyl carbonate and
methyl vinyl carbonate.

Examples of the allyl carbonates include
diallyl carbonate and
allyl methyl carbonate.

Among these unsaturated carbonic esters, vinylene carbonate derivatives, ethylene carbonate derivatives substituted by a substituent having an aromatic ring or a carbon-carbon unsaturated bond are preferably used as the particular carbonic esters, and vinylene carbonate, 4,5-diphenyl vinylene carbonate, 4,5-dimethyl vinylene carbonate, and vinyl ethylene carbonate are more preferably used because of the formation of stable protective surface coating.

### (4-4-1-2. Halogenated Carbonic Ester)

Furthermore, among the particular carbonic esters according to the present invention, the carbonic esters having a halogen atom (hereinafter abbreviated to as "halogenated carbonic ester") can be any halogenated carbonic esters.

Examples of the halogen atom include fluorine, chlorine, bromine, and iodine atoms. Among these halogen atoms preferred are fluorine and chlorine atoms, and especially preferred is fluorine atom. The number of halogen atoms in a haloganated carbonic ester is any of one or more, but typically is 6 or less and preferably 4 or less. When the halogenated ester has a plurality of halogen atoms, the halogen atoms may be of the same type or different types.

Examples of the halogenated carbonic esters include ethylene carbonate derivatives, dimethyl carbonate derivatives, ethyl methyl carbonate derivatives, and diethyl carbonate derivatives.

Examples of the ethylene carbonate derivatives include fluoro ethylene carbonate,
chloro ethylene carbonate,
4,4-difluoro ethylene carbonate,
4,5-difluoro ethylene carbonate,
4,4-dichloro ethylene carbonate,
4,5-dichloro ethylene carbonate,
4-fluoro-4-methyl ethylene carbonate,
4-chloro-4-methyl ethylene carbonate,
4,5-difluoro-4-methyl ethylene carbonate,
4,5-dichloro-4-methyl ethylene carbonate,
4-fluoro-5-methyl ethylene carbonate,
4-chloro-5-methyl ethylene carbonate,
4,4-difluoro-5-methyl ethylene carbonate,
4,4-dichloro-5-methyl ethylene carbonate,
4-(fluoromethyl)-ethylene carbonate,
4-(chloromethyl)-ethylene carbonate,
4-(difluoromethyl)-ethylene carbonate,
4-(dichloromethyl)-ethylene carbonate,
4-(trifluoromethyl)-ethylene carbonate,
4-(trichloromethyl)-ethylene carbonate,
4-(fluoromethyl)-4-fluoro ethylene carbonate,
4-(chloromethyl)-4-chloro ethylene carbonate,
4-(fluoromethyl)-5-fluoro ethylene carbonate,
4-(chloromethyl)-5-chloro ethylene carbonate,
4-fluoro-4,5-dimethyl ethylene carbonate,
4-chloro-4,5-dimethyl ethylene carbonate,
4,5-difluoro-4,5-dimethyl ethylene carbonate,
4,5-dichloro-4,5-dimethyl ethylene carbonate,
4,4-difluoro-5,5-dimethyl ethylene carbonate, and
4,4-dichloro-5,5-dimethyl ethylene carbonate.

Examples of the dimethyl carbonate derivatives include fluoromethyl methyl carbonate,
difluoromethyl methyl carbonate,
trifluoromethyl methyl carbonate,
bis(fluoromethyl) carbonate,
bis(difluoro)methyl carbonate,
bis(trifluoro)methyl carbonate,
chloromethyl methyl carbonate,
dichloromethyl methyl carbonate,
trichloromethyl methyl carbonate,
bis(chloromethyl) carbonate,
bis(dichloro)methyl carbonate, and
bis(trichloro)methyl carbonate.

Examples of the ethyl methyl carbonate derivatives include
2-fluoroethyl methyl carbonate, ethyl
fluoromethyl carbonate,
2,2-difluoroethyl methyl carbonate,
2-fluoroethyl fluoromethyl carbonate,
ethyl difluoromethyl carbonate,
2,2,2-trifluoroethyl methyl carbonate,
2,2-difluoroethyl fluoromethyl carbonate,
2-fluoroethyl difluoromethyl carbonate,
ethyl trifluoromethyl carbonate,
2-chloroethyl methyl carbonate,
ethyl chloromethyl carbonate,
2,2-dichloroethyl methyl carbonate,
2-chloroethyl chloromethyl carbonate,
ethyl dichloromethyl carbonate,
2,2,2-trichloroethyl methyl carbonate,
2,2-dichloroethyl chloromethyl carbonate,
2-chloroethyl dichloromethyl carbonate, and
ethyl trichloromethyl carbonate.

Examples of the diethyl carbonate derivatives include
ethyl (2-fluoroethyl) carbonate,
ethyl (2,2-difluoroethyl) carbonate,
bis(2-fluoroethyl) carbonate,
ethyl (2,2,2-trifluoroethyl) carbonate,
2,2-difluoroethyl 2'-fluoroethyl carbonate,
bis(2,2-difluoroethyl) carbonate,
2,2,2-trifluoroethyl 2'-fluoroethyl carbonate,
2,2,2-trifluoroethyl 2',2'-difluoroethyl carbonate, bis(2,2,2-trifluoroethyl) carbonate,
ethyl (2-chloroethyl) carbonate,
ethyl (2,2-dichloroethyl) carbonate,
bis(2-chloroethyl) carbonate,
ethyl (2,2,2-trichloroethyl) carbonate,
2,2-dichloroethyl 2'-chloroethyl carbonate,
bis(2,2-dichloroethyl) carbonate,
2,2,2-trichloroethyl 2'-chloroethyl carbonate,
2,2,2-trichloroethyl 2',2'-dichloroethyl carbonate, and bis(2,2,2-trichloroethyl) carbonate.

Among these halogenated carbonic esters preferred are carbonic esters having a fluorine atom, and more preferred are ethylene carbonate derivatives having a fluorine atom. In Particular, fluoro ethylene carbonate, 4-(fluoromethyl)-ethylene carbonate, 4,4-difluoroethylene carbonate, and 4,5-difluoroethylene carbonate are more preferably used because of the formation of protective surface coating.

### (4-4-1-3. Halogenated Unsaturated Carbonic Ester)

Carbonic esters having both an unsaturated bond and a halogen atom (hereinafter abbreviated to as "halogenated unsaturated carbonic ester") can also be used as the particular carbonic ester. The halogenated unsaturated carbonic esters include any halogenated unsaturated carbonic esters that do not significantly impair the advantages of the present invention.

Examples of the halogenated unsaturated carbonic esters include vinylene carbonate derivatives, ethylene carbonate derivatives substituted by a substituent having an aromatic ring or a carbon-carbon unsaturated bond, and allyl carbonates.

Examples of the vinylene carbonate derivatives include fluorovinylene carbonate,
4-fluoro-5-methylvinylene carbonate,
4-fluoro-5-phenylvinylene carbonate,
chlorovinylene carbonate,
4-chloro-5-methylvinylene carbonate, and
4-chloro-5-phenylvinylene carbonate.

Examples of the ethylene carbonate derivatives substituted by a substituent having an aromatic ring or a carbon-carbon unsaturated bond include 4-fluoro-4-vinylethylene
carbonate,
4-fluoro-5-vinylethylene carbonate,
4,4-difluoro-4-vinylethylene carbonate,
4,5-difluoro-4-vinylethylene carbonate,
4-chloro-5-vinylethylene carbonate,
4,4-dichloro-4-vinylethylene carbonate,
4,5-dichloro-4-vinylethylene carbonate,
4-fluoro-4,5-divinylethylene carbonate,
4,5-difluoro-4,5-divinylethylene carbonate,
4-chloro-4,5-divinylethylene carbonate,
4,5-dichloro-4,5-divinylethylene carbonate,
4-fluoro-4-phenylethylene carbonate,
4-fluoro-5-phenylethylene carbonate,
4,4-difluoro-5-phenylethylene carbonate,
4,5-difluoro-4-phenylethylene carbonate,
4-chloro-4-phenylethylene carbonate,
4-chloro-5-phenylethylene carbonate,
4,4-dichloro-5-phenylethylene carbonate,
4,5-dichloro-4-phenylethylene carbonate,
4,5-difluoro-4,5-diphenylethylene carbonate, and
4,5-dichloro-4,5-diphenylethylene carbonate.

Examples of the phenyl carbonates include fluoromethyl phenyl carbonate,
2-fluoroethyl phenyl carbonate,
2,2-difluoroethyl phenyl carbonate,
2,2,2-trifluoroethyl phenyl carbonate,
chloromethyl phenyl carbonate,
2-chloroethyl phenyl carbonate,
2,2-dichloroethyl phenyl carbonate, and
2,2,2-trichloroethyl phenyl carbonate.

Examples of the vinyl carbonates include
fluoromethyl vinyl carbonate,
2-fluoroethyl vinyl carbonate,
2,2-difluoroethyl vinyl carbonate,
2,2,2-trifluoroethyl vinyl carbonate,
chloromethyl vinyl carbonate,
2-chloroethyl vinyl carbonate,
2,2-dichloroethyl vinyl carbonate, and
2,2,2-trichloroethyl vinyl carbonate.

Examples of the allyl carbonates include
fluoromethyl allyl carbonate,
2-fluoroethyl allyl carbonate,
2,2-difluoroethyl allyl carbonate,
2,2,2-trifluoroethyl allyl carbonate,
chloromethyl allyl carbonate,
2-chloroethyl allyl carbonate,
2,2-dichloroethyl allyl carbonate, and
2,2,2-trichloroethyl allyl carbonate.

Among the examples of the haloganated unsaturated carbonic esters, one or more esters selected from the group consisting of vinylene carbonate, vinylethylene carbonate, fluoroethylene carbonate, and 4,5-difluoroethylene carbonate, and derivatives thereof that have a great effect when used alone are especially preferably used as the particular carbonic ester.

### <4-4-2. Other Additives>

Additives other than the particular carbonic esters will now be described. The additives other than the particular carbonic esters include overcharge protection agents and aids for improving capacity retention or cycle characteristics after storage at elevated temperatures.

Examples of the overcharge protection agents include aromatic compounds such as
biphenyl,
alkylbiphenyls,
terphenyls,
partially hydrogenated terphenyls,
cyclohexylbenzene,
t-butylbenzene,
t-amylbenzene,
diphenyl ether,
dibenzofuran;
partially fluorinated substances of the aromatic compounds such as 2-fluorobiphenyl,
o-cyclohexylfluorobenzene,
p-cyclohexylfluorobenzene;
fluorine-containing anisole compounds such as
2,4-difluoroanisole,
2,5-difluoroanisole, and
2,6-difluoroanisole.

These overcharge protection agents can be used alone, or in any combination of two or more kinds thereof at any proportion.

The nonaqueous electrolyte according to the present invention can contain an overcharge protection agent at any concentration that does not significantly impair the advantages of the present invention, but contain in the range of typically 0.1% by weight or more and 5% by weight or less based on the entire nonaqueous electrolyte.

The nonaqueous electrolyte containing an overcharge protection agent is preferred because the safety of nonaqueous electrolyte secondary batteries is increased even if the overcharge protection circuit does not operate properly due to errors in usage or abnormality of battery chargers, resulting in overcharging.

Examples of the aids for improving capacity retention or cycle characteristics after storage at elevated temperatures include: anhydrides of dicarboxylic acids such as succinic acid, maleic acid, and phthalic acid;
carbonate compounds, other than those corresponding to the particular carbonates, such as
erythritan carbonate, and
spiro-bis-dimethylene carbonate;
sulfur-containing compounds such as
ethylene sulfite,
1,3-propane sultone,
1,4-butane sultone,
methyl methanesulfonate,
busulfan,
sulfolane,
sulfolene,
dimethyl sulfone,
diphenyl sulfone,
methyl phenyl sulfone,
dibutyl disulfide,
dicyclohexyl disulfide,
tetramethylthiuram monosulfide,
N,N-dimethylmethanesulfonamide, and
N,N-diethylmethanesulfonamide;
nitrogen-containing compounds such as
1-methyl-2-pyrrolidinone,
1-methyl-2-piperidone,
3-methyl-2-oxazolidinone,
1,3-dimethyl-2-imidazolidinone, and
N-methylsuccinimide;
hydrocarbon compounds such as
heptane,
octane, and
cycloheptane;
fluorine-containing aromatic compounds such as
fluorobenzene,
difluorobenzene, and
benzotrifluoride.

### <<4-5. Production Process of Nonaqueous Electrolyte>>

The production process of the nonaqueous electrolyte according to the present invention is characterized by preparing from a mixture obtained by mixing at least one or more nonaqueous solvent, a hexafluorophosphate salt, and a particular structural compound (compound having a bond represented by the following formula (1)) (hereinafter abbreviated to as "mixing treatment"), and removing low-boiling components newly produced by the mixing treatment that have a lower boiling point than that of the compound having the bond represented by the formula (1) (hereinafter abbreviated to as "purification treatment"). The mixture as produced may be used as the nonaqueous electrolyte according to the present invention, or the nonaqueous electrolyte according to the present invention may be adjusted by adding a nonaqueous solvent to the mixture (hereinafter abbreviated to as "preparation treatment").
[Chemical Formula 73]

Si-O-Si (1)

### <4-5-1. Mixing Treatment>

It is believed that any reaction occurs in the step of the mixing treatment from the fact that the particular structural compound significantly decreases or disappears, but instead other compounds having a lower boiling point than that of the added particular structural compound (low-boiling components) are produced. This mechanism is not clear, but believed to be a mechanism similar to one inferred as the mechanism of the reaction according to the present invention described in detail in <3-3. Production Process of Lithium Difluorophosphate>. For example, it is believed that at least the reaction represented by the reaction scheme (I) occurs when the compound represented by the formula (2) is used as the particular structural compound.

The mixing treatment may be carried out by any procedure under any reaction condition. Preferred examples of the procedure and condition are as follows.

The hexafluorophosphate salts are described above, and may be used alone or in any combination thereof at any proportion.

The particular structural compounds are also described above, and may be used alone or in any combination of two or more kinds thereof at any proportion.

The nonaqueous solvents are also described above, and may be used alone or in any combination of two or more kinds thereof at any proportion.

During the mixing treatment, the hexafluorophosphate salt and the nonaqueous solvent may be used in any amount, but for example in the following amount:
That is, the nonaqueous solvent is preferably used in such an amount that the ratio of the molar number of the hexafluorophosphate salt to the volume of the nonaqueous solvent is typically 0.001 mol· dm⁻³ or more, preferably 0.01 mol·dm⁻³ or more, and more preferably 0.1 mol·dm⁻³ or more, and typically 10 mol·dm⁻³ or less, preferably 5 mol·dm⁻³ or less, and more preferably 3 mol·dm⁻³ or less.

Above the upper limit of the ratio of the nonaqueous solvent compared to the hexafluorophosphate salt, the hexafluorophosphate salt may be saturated to become insoluble in the reaction solution, or, if dissolved, cause an increase in the viscosity of the reaction solution. Below the lower limit of the ratio of the nonaqueous solvent compared to the hexafluorophosphate salt, the efficiency of the mixing treatment or the treatment rate may be reduced.

During the mixing treatment, the ratio of the total weight of O atoms in the sites represented by the particular compound fomula (1) to the weight of the nonaqueous electrolyte is typically 0.00001 or more, preferably 0.0001 or more, and more preferably 0.001 or more, and typically 0.02 or less, preferably 0.015 or less, and more preferably 0.01 or less.

Above the upper limit of the ratio of the nonaqueous solvent compared to the particular structural compound, the advantages of the present invention cannot be fully utilized. Below the lower limit of the ratio of the nonaqueous solvent compared to the particular structural compound, insoluble substances may be deposited.

The reactor used for the mixing treatment may be operated in any manner, for example, a batch, semi-batch, or flow manner.

The reactor that has any form can be used, for example, a microreactor capable of readily controlling heat transfer. However, a reactor that allows the reaction to progress under an air-tight condition, for example, a hermetic tank is preferably used that can prevent the raw material, hexafluorophosphate salt and other components in the reaction solution from being decomposed by moisture. For homogeneous reaction, reactors equipped with a stirrer inside the reaction tank are preferred.

Any mixing procedure may be carried out, but the reaction is typically started by bringing a hexafluorophosphate salt in contact with a particular structural compound and an optional nonaqueous solvent within a reactor. The hexafluorophosphate salt, the particular structural compound, and the nonaqueous solvent may be mixed in any order, that is simultaneously or separately in a discretionary order, but preferably in such a way that the hexafluorophosphate salt is mixed with the nonaqueous solvent in advance to prepare a mixture of part or all of the hexafluorophosphate salt dissolved in the nonaqueous solvent, and this mixture is mixed and brought in contact with the particular structural compound in the reactor.

Any atmosphere may be employed during the mixing treatment. However, the mixing treatment is preferably performed in such an air-tight atmosphere, and more preferably in an inert atmosphere such as nitrogen or argon atmosphere, which does not cause decomposition of the raw material hexafluorophosphate salt by moisture.

The mixing treatment may be performed in a nonaqueous electrolyte at any temperature, but typically at 0°C or higher, preferably 25°C or higher, and more preferably 30°C or higher, and typically 200°C or lower, preferably 150°C or lower, and more preferably 100°C or lower. Below the lower limit of the temperature during the mixing, deposition and following decomposition of the hexafluorophosphate salt may occur. This is not favorable from industrial viewpoint. Above the upper limit of the temperature during the mixing, the nonaqueous electrolyte may be decomposed.

The mixing treatment may be performed under any pressure, but typically at atmospheric pressure or more, and typically 10 MPa or less, and preferably 1 MPa or less. Above the upper limit of the pressure during the mixing, the reactor tends to suffer from overload despite no advantages in the reaction. This is not industrially favorable.

The time of the mixing treatment is not limited, but typically 30 minutes or longer and preferably one hour or longer, and typically 100 hours or shorter and preferably 75 hours or shorter. Below the lower limit of the reaction time, the predetermined advantages may not be obtained. Above the upper limit of the reaction time, the products and by-products may be decomposed.

During the reaction, the hexafluorophosphate salt may be completely dissolved in the nonaqueous solvent, or partially or completely separated. For enhanced reactivity, it is preferred that the substantially entire hexafluorophosphate salt be dissolved in the nonaqueous solvent.

The particular structural compound may also be completely dissolved in the nonaqueous solvent, or partially or completely separated.

The entire other components produced by the mixing treatment may be dissolved in the nonaqueous solvent, or partially or completely separated.

After the reaction, other components produced by the mixing treatment and by-products (for example, by-products (b2) and (b3) in the reaction scheme (I)) are present in the reaction mixture. Other components produced by the mixing treatment and by-products may be dissolved in the nonaqueous solvent after the reaction, or partially or completely deposited as a solid depending on various conditions such as their physical properties, the reaction temperature and the nonaqueous solvent.

### <4-5-2. Purification Treatment>

The mixture through the mixing treatment may be a homogeneous solution, or a suspension in which the deposit is suspended by agitation. The purification treatment removes at least low-boiling components from this mixture.

Low-boiling components are desirably distilled off at a normal pressure or reduced pressure. To prevent thermal decomposition of the other electrolyte components, the distilled temperature is preferably lower than or equal to the reaction temperature. During distillation, part of the solvent used may be distilled off depending on its boiling point in some cases. In such cases, the concentration of the distilland may be controlled by addition of the solvent. Alternatively, the concentration of the distilland can be made higher than that during the reaction by distilling off part of the solvent intentionally.

The by-products produced by the mixing treatment often have a low-boiling points especially when a compound represented by the formula (2), in particular a particular compound represented by any one of the formulae (4) to (6) is used as the particular structural compound. For this reason, the by-products can be vaporized through distillation, and removed from the reaction solvent. Therefore, distillation at a lower temperature than that during the reaction can readily remove the low-boiling components without decomposition of the other electrolyte components.

In applications that require a purer product, the product may be purified by known purification processes determined from physical properties of the product, as necessary.

### <4-5-3. Preparation Treatment>

In the production process of the nonaqueous electrolyte according to the present invention, the mixed solution as purified by the purification treatment may be prepared into an electrolyte, or a preparation treatment may be carried out by adding an electrolyte, a nonaqueous solvent, and/or an additive to control the composition of a nonaqueous solvent according to the present invention as necessary in order to achieve desired characteristics.

When any deposit is present in the mixed solution after the reaction, a nonaqueous electrolyte may be prepared by controlling the composition of the nonaqueous solvent so that the solution is homogeneous after it eventually has the composition used as the nonaqueous electrolyte and dissolving the deposits.

When the mixed solution after the reaction has a homogeneous and appropriate composition for a desired nonaqueous electrolyte, the solution as produced may be prepared into a nonaqueous electrolyte after removal of low-boiling components, or may be used by adding other additives described below. In need of controlling the composition of a nonaqueous electrolyte, a nonaqueous electrolyte may be prepared by further adding a nonaqueous solvent or a hexafluorophosphate salt to control the concentration of the electrolyte. Furthermore, components may be mixed such as an electrolyte salt other than the hexafluorophosphate salt or an appropriate additive.

### (4-5-3-1. Preparation Treatment with Nonaqueous Solvent)

The composition may be controlled by adding a nonaqueous solvent before or after or both before and after removal of low-boiling components. However, when a solvent having a boiling point as low as 150°C or lower is added, the solvent will concomitantly volatilize during the removal treatment of low-boiling components. Therefore, it is desirable that a nonaqueous solvent should be added after removing low-boiling components.

Any nonaqueous solvent may be added in any amount, and the solvent to be added may be the same as the nonaqueous solvent already used for the treatments or different. The solutions may also be added alone or in combination, and is preferably selected from the above-mentioned nonaqueous solvents that are controlled so as to produce the target performance and used as the nonaqueous electrolyte according to the present invention.

In particular, during the mixing treatment, the reaction is preferably carried out in a solvent system having a relatively low-dielectric constant such as linear ester compounds, for example, a solvent having a dielectric constant of less than 20 at room temperature, and preferably less than 10. The mixing treatment in such a low-dielectric constant solvent system may produce a mixture having not a sufficient performance to be used as a nonaqueous electrolyte. Therefore, when the mixing treatment is carried out in a low-dielectric constant solvent system, a relatively high-dielectric constant solvent such as cyclic ester compounds, for example, a solvent having a dielectric constant of 20 or more at room temperature and preferably 30 or more is preferably added during the preparation treatment.

These high-dielectric constant solvents are preferably selected from the nonaqueous solvents suitable for the nonaqueous electrolyte, and more preferably selected from cyclic carbonic esters and cyclic carboxylic esters. In particular, it is preferred to select from ethylene carbonate, propylene carbonate, and γ -butyrolactone.

Consequently, the solvent for the final nonaqueous electrolyte preferably include one or more selected from the preferred linear esters dimethyl carbonate, ethyl methyl carbonate, diethyl carbonate, ethyl acetate, methyl propionate, and ethyl propionate, and one or more selected from the preferred cyclic esters ethylene carbonate, propylene carbonate, and γ-butyrolactone.

As described above, for use in combination of both the linear ester and the cyclic ester as the nonaqueous solvent, these esters may be used at any proportion, but the preferred content of the linear ester to the nonaqueous solvent in the nonaqueous electrolyte according to the present invention is typically 1% by weight or more and preferably 3% by weight or more, and typically 95% by weight or less and preferably 90% by weight or less. On the other hand, the total content of the preferred cyclic ester to the nonaqueous solvent in the nonaqueous electrolyte according to the present invention is typically 5% by weight or more and preferably 10% by weight or more, and typically 99% by weight or less and preferably 97% by weight or less.

In addition, in the case of use of ethylene carbonate, the preferred total content of esters other than ethylene carbonate to the nonaqueous solvent in the nonaqueous electrolyte according to the present invention is typically 30% by weight or more and preferably 50% by weight or more, and typically 95% by weight or less and preferably 90% by weight or less. On the other hand, in the case of use of ethylene carbonate, the preferred content of the ethylene carbonate to the nonaqueous solvent in the nonaqueous electrolyte according to the present invention is typically 5% by weight or more and preferably 10% by weight or more, and typically 50% by weight or less and preferably 40% by weight or less.

In particular, in the case of use of ethylene carbonate, the preferred content of the linear ester to the nonaqueous solvent in the nonaqueous electrolyte according to the present invention is typically 30% by weight or more and preferably 50% by weight or more, and typically 95% by weight or less and preferably 90% by weight or less. On the other hand, in the case of use of ethylene carbonate, the total content of the cyclic ester including the preferred ethylene carbonate to the nonaqueous solvent in the nonaqueous electrolyte according to the present invention is typically 5% by weight or more and preferably 10% by weight or more, and typically 50% by weight or less and preferably 40% by weight or less. A content of the linear ester below the lower limit leads to an increase in viscosity of the nonaqueous electrolyte according to the present invention. A content of the linear ester above the upper limit leads to a decrease in the degree of dissociation of the electrolyte salt and thus a reduction in the electric conductivity of the nonaqueous electrolyte according to the present invention.

### (4-5-3-2. Preparation Treatment with Electrolyte)

The final composition of the nonaqueous electrolyte according to the present invention may contain any electrolytes, and the preparation treatment can be carried out by adding any known electrolytes used for the target nonaqueous electrolyte secondary batteries.

For lithium-ion secondary batteries containing the nonaqueous electrolyte according to the present invention, electrolyte lithium salts are preferably used.

Examples of the electrolytes include
inorganic lithium salts such as
LiClO₄,
LiAsF₆,
LiPF₆,
Li₂CO₃, and
LiBF₄;
fluorine-containing organolithium salts such as LiCF₃SO₃,
LiN(CF₃SO₂)₂,
LiN(C₂F₅SO₂)₂,
lithium 1,3-hexafluoropropane disulfonylimide,
lithium 1,2-tetrafluoroethane disulfonylimide,
LiN (CF₃SO₂) (C₄F₉SO₂),
LiC(CF₃SO₂)3,
LiPF₄(CF₃)₂,
LiPF₄(C₂F₅)₂,
LiPF₄(CF₃SO₂)₂,
LiPF₄(C₂F₅SO₂)₂,
LiBF₂(CF₃)₂,
LiBF₂(C₂F₅)₂,
LiBF₂(CF₃SO₂)₂, and
LiBF₂(C₂F₅SO₂)₂;
dicarboxylic acid complex-containing lithium salts such as lithium bis(oxalato)borate,
lithium tris(oxalato)phosphate, and
lithium difluorooxalatoborate; and
sodium or potassium salts such as KPF₆,
NaPF₆,
NaBF₄, and
CF₃SO₃Na.

Among these electrolytes preferred are LiPF₆, LiBF₄, LiCF₃SO₃, LiN(CF₃SO₂)₂, LiN(C₂F₅SO₂)₂, lithium 1,2-tetrafluoroethane disulfonylimide, lithium bis(oxalato)borate, and especially preferred are LiPF₆ and LiBF₄.

The electrolytes can be used alone, or in any combination of two or more kinds thereof at any proportion. In particular, use in combination of two of particular inorganic lithium salts or an inorganic lithium salt and a fluorine-containing organolithium salt is preferred because such use inhibits gas generation during trickle charging or degradation during storage at elevated temperature.

In particular, it is preferred to use both LiPF₆ and LiBF₄, or both an inorganic lithium salt such as LiPF₆ and LiBF₄ and a fluorine-containing organolithium salt such as LiCF₃SO₃, LiN(CF₃SO₂)₂, and LiN(C₂F₅SO₂)₂.

Furthermore, for use in combination of LiPF₆ and LiBF₄, LiBF₄ is preferably contained in a ratio of typically 0.01% by weight or more and typically 20% by weight or less of the entire electrolyte. LiBF₄ has a low degree of dissociation. Above the upper limit of the ratio of LiBF₄, LiBF₄ may increase the resistance of the nonaqueous electrolyte.

In contrast, for use in combination of an inorganic lithium salt such as LiPF₆ and LiBF₄ and a fluorine-containing organolithium salt such as LiCF₃SO₃, LiN(CF₃SO₂)₂, and LiN(C₂F₅SO₂)₂, the inorganic lithium salt is desirably contained in a proportion of typically 70% by weight or more and typically 99% by weight or less of the entire electrolyte. The fluorine-containing organolithium salt generally has a higher molecular weight than that of the inorganic lithium salt. Below the lower limit of the ratio of the fluorine-containing organolithium salt, the decreased proportion of the nonaqueous solvent to the nonaqueous electrolyte may increase the resistance of the solution.

The final composition of the nonaqueous electrolyte according to the present invention may contain the lithium salt in any concentration that does not significantly impair the advantages of the present invention, but in a concentration of typically 0.5 mol · dm⁻³ or more, preferably 0.6 mol·dm⁻³ or more, and more preferably 0.8 mol·dm⁻³ or more, and typically 3 mol·dm⁻³ or less, preferably 2 mol·dm⁻³ or less, and more preferably 1.5 mol·dm⁻³ or less.

Below the lower limit of the concentration, the nonaqueous electrolyte may have an insufficient electric conductivity, while above the upper limit of the concentration, an increased viscosity of the solution may cause a reduction in the electric conductivity, and then nonaqueous electrolyte secondary batteries containing the nonaqueous electrolyte according to the present invention may have an impaired performance.

### (4-5-3-3. Additives)

The additives are described above, and may be used alone or in any combination of two or more kinds thereof at any proportion. The amounts used (concentrations) of the additives are described above.

### [5. Nonaqueous Electrolyte Secondary Batteries]

The nonaqueous electrolyte secondary battery according to the present invention comprises a negative electrode and a positive electrode that can occlude and discharge ions, in addition to the above-mentioned nonaqueous electrolyte according to the present invention.

### <<5-1. Battery Constitution>>

Except for the negative electrode and the nonaqueous electrolyte, the nonaqueous electrolyte secondary battery according to the present invention may have any configuration similar to those of known nonaqueous electrolyte secondary batteries. Typically, the nonaqueous electrolyte secondary battery has a positive electrode and a negative electrode that are laminated separately by a porous membrane (a separator) impregnated with the nonaqueous electrolyte according to the present invention and are accommodated in a case (an external case). Therefore, the nonaqueous electrolyte secondary battery according to the present invention can be of any shape of cylindrical, rectangular, laminated, coin-shaped, and large-scaled.

### <<5-2. Nonaqueous Electrolyte>>

The nonaqueous electrolyte and/or lithium difluorophosphate-containing electrolyte according to the present invention is used as the nonaqueous electrolyte. Unless departing from the spirit of the present invention, other nonaqueous electrolytes can also be used together with the nonaqueous electrolyte and/or the lithium difluorophosphate-containing electrolyte according to the present invention.

### <<5-3. Negative Electrode>>

Negative-electrode active materials used for the negative electrodes will now be described.

The negative-electrode active material can be any material that can electrochemically occlude and discharge ions. Examples include carbonous materials, metal alloy materials, and lithium-containing metal complex oxide materials.

The metal alloy materials include metal oxides such as tin oxide or silicon oxide, metal complex oxides, elemental lithium and lithium alloys such as lithium aluminium alloy, and metals that can form an alloy with lithium, such as Sn and Si, and compounds thereof. These may be used alone or in any combination of two or more kinds thereof at any proportion.

The lithium-containing metal complex oxide materials can be any materials that can occlude and discharge lithium, but preferably contain titanium and lithium as constituents from the viewpoint of charge-discharge characteristics at high current density.

### <5-3-1. Carbonous Materials>

The carbonous materials used as the negative-electrode active materials are preferably selected from:
(1) natural graphite,
(2) carbonous materials obtained through one or more thermal processes of artificial carbonous substances and artificial graphitic substances at a temperature of 400°C to 3200°C,
(3) carbonous materials consisting of at least two carbonous substances having different crystallinities which have an interface or interfaces between the carbonous substances having different crystallinities in contact with each other, and
(4) carbonous materials consisting of at least two carbonous substances having different orientations and have an interface or interfaces between the carbonous substances having different orientations in contact with each other.
Since these materials have a good balance between the initial irreversible capacity and the charge-discharge characteristics at high current density. The carbonous materials (1) to (4) can be used alone or in any combination of two or more kinds thereof at any proportion.

Examples of the artificial carbonous substances and the artificial graphitic substances (2) include natural graphite, coal coke, petroleum coke, coal pitch, petroleum pitch, and oxidation products of these pitches; needle coke, pitch coke, and partially graphitized carbonous materials thereof; thermally cracked products of organic compounds, such as furnace black, acetylene black, and pitch carbon fiber; and carbonizable organic compounds, carbonized products thereof, solutions of the carbonizable organic compounds dissolved in low-molecular organic solvents such as benzene, toluene, xylenes, quinoline, and n-hexane, and carbonized products thereof.

Examples of the carbonizable organic compounds include coal heavy oils such as coal-tar pitch ranging from soft pitch to hard pitch; carbonization liquefied oil, straight run heavy oil such as atmospheric residue and vacuum residue, and cracking petroleum heavy oils such as ethylene tar that is produced as a by-product in thermal cracking of crude oil or naphtha; aromatic hydrocarbons such as acenaphthylene, decacyclene, anthracene, and phenanthrene; nitrogen atom-containing heterocyclic compounds such as phenazine and acridine; sulfur atom-containing heterocyclic compounds such as thiophene and bithiophene; polyphenylenes such as biphenyl and terphenyl; polyvinyl chloride, polyvinyl alcohol, polyvinyl butyral, and insolubilized products thereof; nitrogen-containing organic polymers such as polyacrylonitrile and polypyrrole; sulfur-containing organic polymers such as polythiophene and polystyrene; natural polymers such as cellulose, lignin, mannan, polygalacturonic acid, chitosan, and polysaccharides represented by saccharose; thermoplastic resins such as polyphenylene sulfide and polyphenylene oxide; and thermosetting resins such as resins of furfuryl alcohol, phenol-formaldehyde and imide.

### <5-3-2. Structure, Physical Properties and Preparation Process of Carbonous Negative Electrode>

Properties of the carbonous materials and negative electrodes containing carbonous materials and polarization approach, current collectors, and lithium-ion secondary batteries desirably satisfy any one or more of the following requirements (1) to (21) simultaneously.

### (1) X-Ray Parameters

The carbonous materials preferably have a d-value (interplanar spacing) between the lattice planes (002) of 0.335 nm or more, and typically 0.360 nm or less, preferably 0.350 nm or less, and more preferably 0.345 nm or less, as determined by X-ray diffractometry according to a method by Gakushin (the Japan Society for the Promotion of Science). Also, the carbonous material has a crystallite size (Lc) of preferably 1.0 nm or more and more preferably 1.5 nm or more, as determined by X-ray diffractometry according to the Gakushin method.

### (2) Ash Content

The carbonous material has an ash content of 1% by mass or less, preferably 0.5% by mass or less, and especially preferably 0.1% by mass or less based on the total mass of the carbonous material, and preferably 1 ppm or more as the lower limit.

Above the upper limit of the weight ratio of the ash content, battery characteristics may significantly degrade by a reaction with the nonaqueous electrolyte during the charging and discharging operations. Below the lower limit, production of the batteries takes much time and energy, and anti-pollution equipment, which may increase costs.

### (3) Volume Average Particle Size

The carbonous material has a volume average particle size (median diameter) of typically 1 µm or more, preferably 3 µm or more, more preferably 5 µm or more, and especially preferably 7 µm or more, and typically 100 µm or less, preferably 50 µm or less, more preferably 40 µm or less, even more preferably 30 µm or less, and especially preferably 25 µm or less as determined by a laser diffraction-scattering method.

Below the lower limit of the volume average particle size, the irreversible capacity may increase which causes loss of the initial battery capacity. Above the upper limit, in production of electrodes by application, the coated surface often becomes uneven. This may be disadvantageous for the production process of batteries.

The volume average particle size is measured by dispersing carbon powder in a 0.2 mass% aqueous surface-active agent polyoxyethylene (20) sorbitan monolaurate solution (about 10 mL) using a laser diffraction-scattering particle size analyzer (LA-700 from Horiba Seisakusho). The resulting median diameter is defined as the volume average particle size of the carbonous materials according to the present invention.

### (4) Raman value (R) and Raman Half-Width

The carbonous material has a Raman value R of typically 0.01 or more, preferably 0.03 or more and more preferably 0.1 or more, and typically 1.5 or less, preferably 1.2 or less, more preferably 1 or less and especially preferably 0.5 or less, as determined by argon ion laser Raman spectroscopy.

Below the lower limit of the Raman value (R), the particle surface has high crystallinity that causes a decrease in Li-intercalation site for charging and discharging. That is, the charge acceptance may decrease. In addition, when the carbonous material is applied on the current collector, and pressed to densify the negative-electrode, the crystals are readily orientated in parallel with the electrode plate, which causes a reduction in load characteristics. Above the upper limit, the crystallinity of the particle surface decreases and the reactivity with the nonaqueous electrolyte increases. This may lead to a reduction of efficiency and an increase in gas generation.

The Raman half-width of the carbonous materials at around 1580 cm⁻¹ is not limited, but is typically 10 cm⁻¹ or more and preferably 15 cm⁻¹ or more, and typically 100 cm⁻¹ or less, preferably 80 cm⁻¹ or less, more preferably 60 cm⁻¹ or less, and especially preferably 40 cm⁻¹ or less.

Below the lower limit of the Raman half-width, the particle surface has high crystallinity that causes a decrease in Li-intercalation site for charging and discharging. That is, the charge acceptance may decrease. In addition, when the carbonous material is applied on the current collector, and pressed to densify the negative-electrode, the crystals are readily orientated in parallel with the electrode plate, which causes a reduction in load characteristics. Above the upper limit, the crystallinity of the particle surface decreases and the reactivity with the nonaqueous electrolyte increases. This may lead to a reduction of efficiency and an increase in gas generation.

The Raman spectrum is measured by charging a sample into a measuring cell by free fall, and rotating the cell within a plane perpendicular to the laser beam path while irradiating the surface of the sample with an argon ion laser beam within the cell using a Raman spectrometer (a Raman spectrometer from Nippon Bunkousha). From the measured Raman spectrum, the intensity of the peak PA at around 1580 cm⁻¹ (IA) and the intensity of the peak PB at around 1360 cm⁻¹ (IB) are determined to calculate the ratio of these intensities (R) (R=IB/IA). The Raman value (R) calculated from this measurement is defined as the Raman value (R) of the carbonous material according to the present invention. The half-width of the peak PA at around 1580 cm⁻¹ is determined from the measured Raman spectrum. This is defined as the Raman half-width of the carbonous material according to the present invention.

The Raman measurement conditions are as follows.
- Argon ion laser wavelength: 514.5 nm
- Laser power at the sample: 15 to 25 mW
- Resolution: 10 to 20 cm⁻¹
- Wavelength range: 1100 cm⁻¹ to 1730 cm⁻¹
- Analysis of Raman value (R) and Raman half-width: background processing,
- Smoothing: simple average, 5 points convolution.

### (5) BET Specific Surface Area

The carbonous material has a BET specific surface area of typically 0.1 m²·g⁻¹ or more, preferably 0.7 m²·g⁻¹ or more, more preferably 1. 0 m²·g⁻¹ or more, and most preferably 1.5 m²·g⁻¹ or more, and typically 100 m²·g⁻¹ or less, preferably 25 m²·g⁻¹ or less, more preferably 15 m²·g⁻¹ or less, and most preferably 10 m²·g⁻¹ or less as determined by the BET method.

Below the lower limit of the BET specific surface area, when the carbonous material is used as a negative electrode material, lithium acceptance often deteriorates during charging, and lithium is often deposited on the surface of the electrode. This can decrease the stability. Above the upper limit, when the carbonous material is used as a negative electrode material, the reactivity with the nonaqueous electrolyte increases, and gas generation often occurs. This will preclude production of preferred batteries in some cases.

The measurement of the specific surface area by the BET method is carried out after pre-drying a sample under nitrogen stream at 350°C for 15 minutes, and then applying the nitrogen adsorption BET one-point method by nitrogen-helium mixed gas flow in which the relative pressure of the nitrogen to the atmospheric pressure is exactly adjusted to 0.3, with a surface area meter (Full Automatic Surface Area Measuring Instrument from Ookura Riken). The resulting specific surface area is defined as the BET specific surface area of the carbonous material according to the present invention.

### (6) Pore Size Distribution

The pore size distribution of the carbonous material is calculated by measuring the amount of the mercury intruded. Voids in the particulate carbonous material, roughness by steps of the particle surface, and pores by the contact surface between the particles that are determined by the mercury porosimetry (mercury intrusion) correspond to pores having a diameter of 0.01 µm or more and 1 µm or less. The carbonous material has a pore size distribution of typically 0.01 cm³·g⁻¹ or more, preferably 0.05 cm³·g⁻¹ or more, and more preferably 0.1 cm³·g⁻¹ or more, and typically 0.6 cm³·g⁻¹ or less, preferably 0.4 cm³·g⁻¹ or less, and more preferably 0.3 cm³· g⁻¹ or less.

Above the upper limit of the pore size distribution, forming polar plates may require a large amount of binders. Below the lower limit, charge-discharge characteristics at high current density may be impaired, and expansion and contraction of the electrode during charging and discharging electrode can not be moderated.

The total volume of pores having a diameter in the range of 0.01 µm to 100 µm as determined by the mercury porosimetry (mercury intrusion) is typically 0.1 cm³·g⁻¹ or more, preferably 0.25 cm³· g⁻¹ or more, and more preferably 0.4 cm³·g⁻¹ or more, and typically 10 cm³·g⁻¹ or less, preferably 5 cm³·g⁻¹ or less, and more preferably 2 cm³·g⁻¹ or less.

Above the upper limit of the total volume of pores, forming polar plates may require a large amount of binders. Below the lower limit, thickeners and binders can not be dispersed during the formation of the polar plates.

The average pore size is typically 0.05 µm or more, preferably 0.1 µm or more, and more preferably 0.5 µm or more, and typically 50 µm or less, preferably 20 µm or less, and more preferably 10 µm or less.

Above the upper limit of the average pore size, a large amount of binders may be required. Below the lower limit, charge-discharge characteristics at high current density may be impaired.

The measurement of the mercury intrusion is carried out with a mercury porosimeter (Autopore 9520: Micromeritics) as an instrument for mercury porosimetry. As the pretreatment, about 0.2 g of a sample is sealed into a cell for powder that is degassed at room temperature and under vacuum (50 µmHg or less) for 10 minutes. Subsequently, the pressure of the cell is reduced to 4 psia (about 28 kPa) to introduce mercury, and is raised from 4 psia (about 28 kPa) to 40000 psia (about 280 MPa) stepwise followed by being reduced to 25 psia (about 170 kPa). The number of the steps during pressure rising is 80 points or more, and at each step, the amount of the mercury intruded is measured after equilibrium for 10 seconds.

From the resulting mercury intrusion curve, the pore size distribution is calculated using the Washburn formula. The surface tension of mercury (y) is 485 dyne cm⁻¹ (1 dyne=10 µN), and contact angle (ψ) is 140°. The pore size at a cumulative pore volume of 50% is defined as the average pore size.

### (7) Circularity

The measurements of the circularity as the sphericity of the carbonous material preferably fall within the following range. The circularity is defined by the equation "circularity = (the perimeter of the corresponding circle having the same area as that of the particle projected shape)/(the actual perimeter of the projected particle shape) ", and a carbonous material is theoretically spheric at a circularity of 1.

For the carbonous material having a particle size in the range of 3 to 40 µm, the circularity of the particulate material is desirably close to 1, and preferably 0.1 or more, more preferably 0.5 or more, more preferably 0.8 or more, more preferably 0.85 or more, and most preferably 0.9 or more.

The charge-discharge characteristics at high current density are enhanced as the circularity becomes higher. Therefore, below the lower limit of the circularity, the packing capacity of the negative-electrode active material may decrease, while the resistance between particles may increase. This may impair the short-time charge-discharge characteristics at high current density.

The measurement of the circularity is carried out with a flow particle image analyzer (a FPIA from Sysmex). About 0.2 g of sample is dispersed in an aqueous solution of 0.2 mass% of the surface-active agent polyoxyethylene (20) sorbitan monolaurate (about 50 mL), and is agitated with the 28-kHz ultrasound of 60 W for one minute. After the detection range is set in the range of 0.6 to 400 µm, the circularity is measured for the particles having a particle size in the range of 3 to 40 µm. The resulting circularity is defined as the circularity of the carbonous material according to the present invention.

The circularity may be enhanced by any method, but it is preferred to apply spheronization treatment to make the carbonous material spherical because the voids between particles in the resultant electrode have a uniform shape. Examples of the spheronization treatments include a method of approximating the carbonous material to a spherical shape physically such as applying shear force or compressive force, and a method of mechanically and physically granulating multiple microparticles with a binder or by the particles' adhesion.

### (8) True Density

The carbonous material has a true density of typically 1.4 g· cm⁻³ or more, preferably 1.6 g·cm⁻³ or more, more preferably 1.8 g· cm⁻³ or more, and most preferably 2.0 g·cm⁻³ or more, and typically 2.26 g·cm⁻³ or less.

Below the lower limit of the true density, the crystallinity of carbon is so low that the initial irreversible capacity may increase. The upper limit is the theoretical value of the true density of graphite.

The true density of the carbonous material is measured by the liquid phase substitution (pycnometer method) using butanol. The resulting value is defined as the true density of the carbonous material according to the present invention.

### (9) Tap Density

The carbonous material has a tap density of typically 0.1 g· cm⁻³ or more, preferably 0.5 g·cm⁻³ or more, more preferably 0.7 g· cm⁻³ or more, and most preferably 1 g·cm⁻³ or more, and preferably 2 g·cm⁻³ or less, more preferably 1.8 g·cm⁻³ or less, and most preferably 1.6 g·cm⁻³ or less.

The use of the carbonous material having a tap density below the lower limit as the negative electrode cannot achieve a high packing density. This may lead to difficulty in high capacity of batteries. Above the upper limit, the number of the voids between particles in the electrode is too small to ensure conductivity between particles. This may preclude fabrication of batteries having preferred characteristics.

The measurement of the tap density is carried out by screening a sample with a sieve having a sieve aperture of 300 µm into a 20-cm³ tapping cell until the cell is filled with the sample to the top face, and tapping the cell 1000 times with a stroke length of 10 mm using a powder density measuring instrument (for example, a tap denser from Seishin Kigyo) following by calculation of the tap density from the volume and weight of the sample. The tap density calculated from the measurement is defined as the tap density of the carbonous material according to the present invention.

### (10) Orientation Ratio

The carbonous material has an orientation ratio of typically 0.005 or more, preferably 0.01 or more, more preferably 0.015 or more, and typically 0.67 or less.

Below the lower limit of the orientation ratio, the charge-discharge characteristics at high density may be impaired. The upper limit is the theoretical value of the orientation ratio of the carbonous material.

The orientation ratio is measured by X-ray diffractometry after compression molding of a sample. Into a molder having a diameter of 17 mm, 0.47 g of a sample is loaded and compressed at 58.8 MN· m⁻². The resultant compact is fixed to the face of a sample holder for measurement with clay, and is subjected to X-ray diffractometry. From the peak intensities obtained from diffraction lines (110) and (004) of carbon, the ratio expressed by the peak intensity of diffraction line (110) /the peak intensity of diffraction line (004) is calculated. The orientation ratio calculated from the measurement is defined as the orientation ratio of the carbonous material according to the present invention.

The X-ray diffractometry conditions are as follows, where "2θ" refers to a diffraction angle.
· Target: Cu (Kα radiation) graphite monochromator
· Slit:
   Divergence slit = 0.5°
   Receiving slit = 0.15 mm
   Scatter slit = 0.5°
· Measurement range and step angle/measurement time:
   (110) plane: 75° ≦ 2θ ≦ 80° 1°/60 seconds
   (004) plane: 52° ≦ 2θ ≦ 57° 1°/60 seconds

### (11) Aspect Ratio (powder)

The carbonous material has an aspect ratio of typically 1 or more, and typically 10 or less, preferably 8 or less, and more preferably 5 or less.

Above the upper limit of the aspect ratio, trails are generated during forming polar plates, and uniform coated surfaces can not be produced. This may impair the charge-discharge characteristics at high current density. The lower limit is the theoretical lower limit of the aspect ratio of the carbonous material.

The aspect ratio is measured using a magnified image by scanning electron microscopic observation of the particulate carbonous material. After selection of any 50 graphite particles that are fixed to the end face of metal having a thickness of 50 micron or less, the maximum diameter (A) of the particulate carbonous material and the minimum diameter (B) that is perpendicular to the maximum diameter are measured by the three-dimensional observation accompanying rotation and tilt of the stage for each fixed sample, followed by determination of the average value of A/B. The aspect ratio (A/B) of the carbonous material according to the present invention is thereby determined.

### (12) Combination with Auxiliary Material

The combination with an auxiliary material or auxiliary materials means that the negative electrode and/or the negative-electrode active material contain two or more carbonous materials having different characteristics. The term characteristics here refers to one or more characteristics selected from the group consisting of X-ray diffractometry parameters, median diameter, aspect ratio, BET specific surface area, orientation ratio, Raman value R, tap density, true density, pore distribution, circularity, and ash content.

Especially preferred examples of the combination with an auxiliary material are as follows: the volume-based particle size distribution is asymmetrical with respect to the median diameter; two or more carbonous materials having different Raman values (R) are contained; and the components have different X-ray parameters.

Examples of advantages of the combination with an auxiliary material include a reduction in electrical resistance by incorporation of carbonous materials such as graphite including natural graphite and artificial graphite, carbon black such as acetylene black, and amorphous carbon such as needle coke as a conductive agent.

In use of a conductive agent as the combination with an auxiliary material, the conductive agent may be mixed alone or in any combination of two or more kinds thereof at any proportion. The mixing ratio of the conductive agent to the carbonous material is typically 0.1 mass% or more, preferably 0. 5 mass% or more, and more preferably 0.6 mass% or more, and typically 45 mass% or less and preferably 40 mass%.

Below the lower limit of the mixing ratio, conductivity cannot be noticeably enhanced. Above the upper limit, the initial irreversible capacity may increase.

### (13) Electrode Fabrication

The electrodes can be produced by any known method that does not significantly impair the advantages of the present invention. For example, a binder, a solvent, and optional components such as thickener, conductive material, and filling material are added to the negative-electrode active material to make slurry, this slurry is applied on the current collector, and it is pressed after drying. A negative-electrode active material layer is thereby formed.

In the step immediately before an immersion process of a nonaqueous electrolyte for batteries, the thickness of the negative-electrode active material layer per side is typically 15 µm or more, preferably 20 µm or more, and more preferably 30 µm or more, and typically 150 µm or less, preferably 120 µm or less, and more preferably 100 µm or less. Above the upper limit of the thickness of the negative-electrode active material layer, the nonaqueous electrolyte cannot be satisfactorily penetrated toward the interface of the current collector. This may impair the charge-discharge characteristics at high current density. Below the lower limit, the volume ratio of the current collector to the negative-electrode active material increases. This may lead to a reduction in battery capacity. Furthermore, the negative-electrode active material is shaped into a sheet electrode through rollers or into a pellet electrode by compression molding.

### (14) Current Collector

The current collector that holds the negative-electrode active material includes any known collector. Examples of the current collector for the negative electrode include, for example, metal materials such as copper, nickel, stainless steel, and nickel-plated steel, and preferred is copper from the viewpoint of ease of processing and cost.

The current collector that is made of metal material has a form of, for example, metal foil, metal cylinder, metal coil, metal plate, metal thin film, expanded metal, perforated metal, and sponged metal. Among these forms preferred is a metal thin film, and more preferred is a copper foil, and further more preferred is a rolled copper foil by a rolling process and an electrolytic copper foil by electrolysis, which are suitable for the current collector.

The copper foil that has a thickness of less than 25 µm can be used as a copper alloy that is stronger than pure copper (for example, phosphor bronze, titanium copper, Corson alloy, and Cu-Cr-Zr alloy).

The current collector that is made of the copper foil produced by the rolling process is hardly broken even if the negative electrode is rolled up tightly or at an acute angle since copper crystals are oriented in the rolling direction, and therefore can be suitable for small cylindrical batteries.

The electrolytic copper foil can be obtained by, for example, immersing a metal drum in the nonaqueous electrolyte that dissolves copper ions, passing a current while rotating the drum followed by deposition of copper on the surface of the drum, and peeling this deposit off. Copper may be deposited on the surface of the rolled copper foil by electrolysis. One or both surfaces of the copper foil may be roughened or processed (for example, chromate treatment producing a thickness of several nm to 1 µm, and Ti substrate treatment).

Desirably, the current collector substrate further has the following physical properties.

### (14-1) Average Surface Roughness (Ra)

The current collector substrate of which the surface is provided with the negative-electrode active material thin film may have any average surface roughness (Ra), but the average surface roughness (Ra) is typically 0.05 µm or more, preferably 0.1 µm or more, and more preferably 0.15 µm or more, and typically 1.5 µm or less, preferably 1.3 µm or less, and more preferably 1.0 µm or less as specified by the method described in JIS B0601-1994.

Within the range, superior charge and discharge cycle characteristics can be expected. In addition, the larger area of the interface with the negative-electrode active material thin film leads to enhanced adhesiveness with the negative-electrode active material thin film. The upper limit of the average surface roughness (Ra) is not specified, but is typically 1.5 µm or less since the current collector substrate having an average surface roughness (Ra) of more than 1.5 µm is generally unavailable as a foil having a thickness practical for batteries.

### (14-2) Tensile Strength

The tensile strength is given by dividing the maximum tensile force at break of a test piece by the cross sectional area of the test piece. The tensile strength in the present invention is measured by equipment and a method similar to those described in JIS Z2241 (Method of Tensile Test for Metallic Materials).

The current collector substrate has any tensile strength, but the tensile strength is typically 100 N·mm⁻² or more, preferably 250 N·mm⁻² or more, more preferably 400 N·mm⁻² or more, and most preferably 500 N·mm⁻² or more. The higher tensile strength is more preferred, but is typically 1000 N·mm⁻² or less from the viewpoint of industrial availability.

Any current collector substrate having a high tensile strength can inhibit cracks caused by expansion and contraction of the negative-electrode active material thin film during charging and discharging, and can have superior cycle characteristics.

### (14-3) 0.2% Proof Strength

The 0.2% proof strength is a load required to give 0.2% plastic (permanent) strain meaning that 0.2 % of deformation remains after the load is released. The 0.2% proof strength is measured by the same equipment and method as those in the tensile strength.

The current collector substrate has any 0.2% proof strength, but desirably has a 0.2% proof strength of typically 30 N·mm⁻² or more, preferably 150 N·mm⁻² or more, and most preferably 300 N·mm⁻² or more. A higher 0.2% proof strength is more preferred, but is typically 900 N·mm⁻² or less from the viewpoint of industrial availability.

Any current collector substrate that has a high 0.2% proof strength can inhibit plastic deformation caused by expansion and contraction of the negative-electrode active material thin film during charging and discharging, and can have superior cycle characteristics.

### (14-4) Thickness of Metal Thin Film

The metal thin film has any thickness, but the thickness is typically 1 µm or more, preferably 3µm or more, and more preferably 5 µm or more, and typically 1 mm or less, preferably 100 µm or less, and more preferably 30 µm or less.

A thickness less than 1 µm causes decreased strength. This may lead to difficulties of coating. The metal thin film having a thickness of more than 100 µm may lead to deformation of the electrode such as curling. In addition, the metal thin film may also be in the form of mesh.

### (15) Thickness Ratio between Current Collector and Negative-Electrode Active Material Layer

The thickness ratio between the current collector and the negative-electrode active material layer is not limited, but the ratio "(the thickness of the negative-electrode active material layer on one side immediately before immersion of the nonaqueous electrolyte)/(the thickness of the current collector)" is preferably 150 or less, more preferably 20 or less, and most preferably 10 or less, and preferably 0.1 or more, more preferably 0.4 or more, and most preferably 1 or more.

Above the upper limit of the thickness ratio between the current collector and the negative-electrode active material layer, the current collector may generate Joule's heat during charging and discharging at high current density. Below the lower limit, the volume ratio of the current collector to the negative-electrode active material increases. This may lead to low battery capacity.

### (16) Electrode Density

The electrode made of the negative-electrode active material may have any structure. The negative-electrode active material on the current collector has a density of preferably 1 g·cm⁻³ or more, more preferably 1.2 g·cm⁻³ or more, and most preferably 1.3 g·cm⁻³ or more, and preferably 2 g·cm⁻³ or less, more preferably 1.9 g· cm⁻³ or less, more preferably 1.8 g·cm⁻³ or less, and most preferably 1.7g·cm⁻³ or less.

Above the upper limit of the density of the negative-electrode active material on the current collector, the particulate negative-electrode active material is destroyed. This may increase the initial irreversible capacity, or impair the charge-discharge characteristics at high current density due to insufficient penetration of the nonaqueous electrolyte toward the interface of the current collector/the negative-electrode active material. Below the lower limit, the conductivity between the negative-electrode active materials decreases while the electrical resistance increases. This may reduce the capacity per unit volume.

### (17) Binder

The binder that binds the negative-electrode active materials can be any material stable in solvents that are used in the nonaqueous electrolyte or during production of the electrode.

Examples include resinous polymers such as polyethylene, polypropylene, polyethylene terephthalate, polymethyl methacrylate, aromatic polyamide, cellulose, and nitrocellulose; rubbery polymers such as SBR (styrene-butadiene rubber), isoprene rubber, butadiene rubber, fluororubber, NBR (acrylonitrile-butadiene rubber), and ethylene-propylene rubber; styrene-butadiene-styrene block copolymers, and hydrogenated polymers thereof; thermoplastic elastomeric polymers such as EPDM (ethylene-propylene-diene terpolymer), styrene-ethylene-butadiene-styrene copolymers, styrene-isoprene-styrene block copolymers, and hydrogenated polymers thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, fluorinated polyvinylidene fluoride, and polytetrafluoroethylene-ethylene copolymers; and ion-conductivity polymer compositions of alkali metal ions (lithium ions, in particular). These binders may be used alone or in any combination of two or more kinds thereof at any proportion.

The solvent for forming slurry can be any solvent that can dissolve or disperse a negative-electrode active material, a binder, an optional thickener, and an optional conductive agent, and may be either aqueous or organic.

Examples of the aqueous solvents include water and alcohols, and examples of the organic solvents include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, and hexane.

In particular, in an aqueous solvent containing a thickener together with a dispersant, slurry is preferably made with a latex such as SBR. These solvents may be used alone or in any combination of two or more kinds thereof at any proportion.

The ratio of the binder to the negative-electrode active material is preferably 0.1 mass% or more, more preferably 0.5 mass% or more, most preferably 0.6 mass% or more, and preferably 20 mass% or less, more preferably 15 mass% or less, more preferably 10 mass% or less, and most preferably 8 mass% or less.

Above the upper limit of the ratio of the binder to the negative-electrode active material, the ratio of the amount of the binder that does not contribute to the battery capacity may decrease. Below the lower limit, the strength of the negative electrode may decrease.

In particular, in the binder containing a rubbery polymer represented by SBR as a primary component, the ratio of the binder to the negative-electrode active material is typically 0.1 mass% or more, preferably 0.5 mass% or more, and more preferably 0.6 mass% or more, and typically 5 mass% or less, preferably 3 mass% or less, and more preferably 2 mass% or less.

In a binder containing a fluoropolymer such as polyvinylidene fluoride as a primary component, the ratio of the binder to the negative-electrode active material is typically 1 mass% or more, preferably 2 mass% or more, and more preferably 3 mass% or more, and typically 15 mass% or less, preferably 10 mass% or less, and more preferably 8 mass% or less.

The thickener is typically used in order to control the viscosity of the slurry. Nonlimiting examples of usable thickeners include carboxymethylcellulose, methyl cellulose, hydroxymethyl cellulose, ethyl cellulose, polyvinyl alcohol, oxidized starch, phosphated starch, casein, and salts thereof. These thickeners may be used alone or in any combination of two or more kinds thereof at any proportion.

The ratio of the thickener, if used, to the negative-electrode active material is typically 0.1 mass% or more, preferably 0.5 mass% or more, and more preferably 0. 6 mass% or more, and typically 5 mass% or less, preferably 3 mass% or less, and more preferably 2 mass% or less.

Below the lower limit of the ratio of the thickener to the negative-electrode active material, the coating ability may significantly be impaired. Above the upper limit, the proportion of the negative-electrode active material in the negative-electrode active material layer decreases. This may lead to low battery capacity, and high resistance between the negative-electrode active materials.

### (18) Plate Orientation Ratio

The plate orientation ratio is typically 0.001 or more, preferably 0.005 or more, and more preferably 0.01 or more, and typically 0.67 or less.

Below the lower limit of the plate orientation ratio, the charge-discharge characteristics at high density may be impaired. The upper limit is the theoretical upper limit of the plate orientation ratio of the carbonous material.

The plate orientation ratio is measured through determination of the orientation ratio of the negative-electrode active material of the negative electrode which has been pressed into a target density by electrode by X-ray diffractometry. The actual approach for the measurement is not limited, and a standard method is carried out by separating the peaks of the (110) diffraction line and (004) diffraction line of carbon obtained by X-ray diffractometry through fitting with asymmetric Pearson VII as a profile function, and calculating the integrated intensity for each peak of the (110) diffraction line and (004) diffraction line. From the integrated intensities calculated, the ratio expressed by the integrated intensity of (110) diffraction line/the integrated intensity of (004) diffraction line is calculated. The orientation ratio of the negative-electrode active material in the electrode calculated from the measurement is defined as the plate orientation ratio in the electrode made from the carbonous material according to the present invention.

The X-ray diffractometry conditions are as follows, where "2θ" refers to a diffraction angle.
· Target: Cu (Kα radiation) graphite monochromator
· Slit: divergence slit = 1°, receiving slit = 0.1 mm, scatter slit = 1°
· Measurement range and step angle/measurement time:
   (110) plane: 76.5° ≤ 2θ ≤ 78.5° 0.01°/3 seconds
   (004) plane: 53.5° ≤ 2θ ≤ 56.0° 0.01°/3 seconds
· Sample preparation: fix an electrode to a glass plate with double faced adhesive tape having a thickness of 0.1 mm.

### (19) Impedance

After the battery is charged to 60% of its nominal capacity from the discharged state, the resistance of the negative electrode is preferably 100Ω or less, more preferably 50Ω or less, and most preferably 20Ω or less, and/or double-layer capacity is preferably 1 x 10⁻⁶ F or more, more preferably 1 x 10⁻⁵ F or more, and most preferably 1 x 10⁻⁴ F. Use of the negative electrode within the range is preferred because satisfactory output characteristics are produced.

The resistance and double-layer capacity of the negative electrode is measured for the lithium-ion secondary battery that has a capacity of at least 80% of the nominal capacity when charged at a current value at which the nominal capacity can be charged over 5 hours, kept in the state of being neither charged nor discharged for 20 minutes, and then discharged at a current value at which the nominal capacity can be discharged over 1 hour.

This lithium secondary battery in the discharged state is charged to 60% of the nominal capacity at a current value at which the nominal capacity can be charged over 5 hours, and immediately, the lithium secondary battery is transferred to a glove box in an argon atmosphere. In this glove box, the lithium secondary battery is rapidly dismantled and taken out such that the negative electrode does not discharge or short-circuit. In the case of a double coated electrode, the electrode active material on one side is stripped off without damaging the electrode active material on the other side. This negative electrode is punched into two sheets of 12.5 mmφ, and these sheets are isolated by a separator so that the negative-electrode active material surfaces do not misalign. Between the separator and each of the negative electrodes, 60 µL of nonaqueous electrolyte which has been used for the battery is added dropwise to bring the separator into close contact with each negative electrode. While this integrated entity blocked from the ambient air, the current collectors of the respective negative electrodes are connected electrically to each other and the alternating-current impedance method is carried out.

For the measurement, the complex impedance is measured at a temperature of 25°C in a frequency band of 10⁻² to 10⁵ Hz to determine a Nyquist plot. The circular arc for the negative-electrode resistance component in the plot is approximated to a semicircle to determine the surface resistance (R) and the double-layer capacity (Cdl).

### (20) Area of Negative-Electrode Plate

The area of the negative-electrode plate is not limited, and the negative-electrode plate is preferably designed to be slightly larger than the opposite positive-electrode plate so that the positive-electrode plate does not protrude outward from the negative-electrode plate. From the viewpoint of cycle life after repeated charging and discharging, and inhibition of degradation caused by storage at elevated temperatures, it is preferred to approximate the area of the negative electrode as close as possible to that of the positive electrode because the proportion of electrodes that work more uniformly and effectively increases to enhance characteristics. In particular, in the case of use at a high current, this design of the electrode area is important.

### (21) Thickness of Negative-Electrode Pilate

The thickness of the negative-electrode plate is designed together with the positive-electrode plate to be used, and is not limited. However, the thickness of the laminated layer, excluding the thickness of the core metal foil, is typically 15 µm or more, preferably 20 µm or more, and more preferably 30 µm or more, and typically 150 µm or less, preferably 120 µm or less, and more preferably 100 µm or less.

### <5-3-3. Metal Alloy Materials, and Configuration of Negative Electrode Containing Metal Alloy Materials, Physical Properties, and Preparation Process>

The metal alloy material used as the negative-electrode active material can be any compound that can occlude and discharge lithium, including elemental metals and metal alloys that form lithium alloys, or oxides, carbides, nitrides, silicides, sulfides, and phosphides thereof. However, among the elemental metals and metal alloys that form lithium metal alloys preferred are the materials containing metals and metalloid elements from Groups 13 and 14 (that is, except for carbon), and more preferred are elemental metals of aluminium, silicon, and tin (hereinafter referred to as "particular metal element"), and metal alloys and compounds containing these atoms.

Examples of the negative-electrode active materials containing at least one atom selected from the particular metal elements include any one elemental metal of the particular metal elements, metal alloys containing two or more of the particular metal elements, metal alloys containing one or more of the particular metal elements and one or more of other metal elements, and compounds containing one or more of the particular metal elements and complexes compounds such as oxides, carbides, nitrides, silicides, sulfides, and phosphides thereof. Use of such elemental metals, metal alloys or metal compounds as the negative-electrode active material can produce higher-capacity batteries.

Other examples include compounds containing these complex compounds binding complexly with elemental metals, metal alloys, or a few elements such as nonmetallic elements. More specifically, for silicon and tin, for example, metal alloys of these elements with metals that do not function as a negative electrode can be used. For tin, for example, complex compounds containing 5 to 6 elements in combination of tin with a metal other than silicon that functions as a negative electrode, a metal that does not function as a negative electrode, and a nonmetallic element can also be used.

Among these negative-electrode active materials preferred are single particular elemental metals, metal alloys of two or more particular metal elements, and oxides, carbides, and nitrides of the particular metal elements, which have a higher capacity per unit weight of the material in batteries. Especially preferred are elemental metals, metal alloys, oxides, carbides, and nitrides of silicon and/or tin from the viewpoint of the capacity per unit weight and the environment impact.

The following compounds containing silicon and/or tin are also preferably used, which are inferior in the capacity per unit weight but superior in the cycle characteristics to elemental metals or metal alloys.
· Oxides of silicon and/or tin having an elemental ratio of silicon and/or tin to oxygen of typically 0.5 or more, preferably 0.7 or more, and more preferably 0.9 or more, and typically 1.5 or less, preferably 1.3 or less, and more preferably 1.1 or less.
· Nitrides of silicon and/or tin having an elemental ratio of silicon and/or tin to nitrogen of typically 0.5 or more, preferably 0.7 or more, and more preferably 0.9 or more, and typically 1.5 or less, preferably 1.3 or less, and more preferably 1.1 or less.
· Carbides of silicon and/or tin having an elemental ratio of silicon and/or tin to carbon of typically 0.5 or more, preferably 0.7 or more, and more preferably 0.9 or more, and typically 1.5 or less, preferably 1.3 or less, and more preferably 1.1 or less.

The above-mentioned negative-electrode active materials can be used alone or in any combination of two or more kinds thereof at any proportion.

The negative electrode in the nonaqueous electrolyte secondary battery according to the present invention can be produced by any known method. Examples of the production process of the negative electrode include, for example, a method comprising adding a binder or a conductive material to the above-mentioned negative-electrode active material, and roll-forming directly into a sheet electrode, and a method comprising compression molding into a pellet electrode. A more typical method involves formation of a thin film layer (negative-electrode active material layer) containing the above-mentioned negative-electrode active material on a current collector for the negative electrode (hereinafter referred to as "negative electrode current collector") by coating, vapor deposition, sputtering, or plating, for example. In this case, a binder, thickener, conductive material, or solvent is added to the above-mentioned negative-electrode active material to make slurry, this slurry is applied on the negative electrode current collector, it is compressed to densify after drying, and a negative-electrode active material layer is formed.

The materials for a negative electrode current collector include steel, copper alloy, nickel, nickel alloy, and stainless steel. Among these materials preferred is a relatively inexpensive copper foil, which can readily be shaped into a thin film.

The negative electrode current collector has a thickness of typically 1 µm or more, preferably 5 µm or more, and typically 100 µm or less, and preferably 50 µm or less. Above the upper limit of the thickness of the negative electrode current collector, the entire capacity of the battery may significantly decrease, whereas below the lower limit, it may be hard to handle.

Furthermore, it is preferred to roughen a surface of the negative electrode current collector in advance for improvement in binding efficiency between the collector and the negative-electrode active material layer to be formed on the surface. Examples of the surface-roughening include blasting, rolling with rough rolls; mechanical polishing of the surface of the current collector with, for example, fabric coated with abrasive particles, grindstones, emery wheels, and wire brushes having steel wire; electropolishing; and chemical polishing.

Perforated collectors such as expanded metal and punching metal can be used for reduction in the weight of a negative electrode current collector to increase the energy density per weight of the battery. The weight of this type of negative electrode collector can be varied at discretion by changing in its opening ratio. When active material layers are formed on both sides of this type of negative electrode collector, the negative-electrode active material layers will barely be delaminated due to the rivet effect caused by these holes. However, significantly a high opening ratio of the collector will reduce the contact area between the negative-electrode active material layer and the negative electrode current collector, so that the adhesive strength may be decreased.

The slurry for forming the negative-electrode active material layer is typically made by adding a binder and thickener to the negative electrode material. The term "negative-electrode material" as used herein refers to a combined material of negative-electrode active material and conductive material.

The amount of the negative-electrode active material in the negative electrode material is typically 70% by weight or more and preferably 75% by weight or more, and typically 97% by weight or less and preferably 95% by weight or less. Below the lower limit of the amount of the negative-electrode active material, the capacity of the secondary battery containing the resultant negative electrode may often be insufficient, whereas above the upper limit, the strength of the resultant negative electrode may be insufficient due to relative lack of the binder. In the combined use of two or more negative-electrode active materials, the total amount of the negative-electrode active materials should satisfy the range.

The conductive materials used for the negative electrode include metallic materials such as copper and nickel; and carbonous materials such as black lead and carbon black. These conductive materials may be used alone or in any combination of two or more kinds thereof at any proportion. Especially preferred are carbonous materials because they serve as both conductive materials and active materials. The amount of the conductive materials in the negative electrode materials is typically 3% by weight or more and more preferably 5% by weight or more, and typically 30% by weight or less and more preferably 25% by weight or less. Below the lower limit of the amount of the conductive material, the conductivity may be insufficient, whereas above the upper limit of the amount of the conductive material, the battery capacity and strength may be insufficient due to relative lack of the negative-electrode active material. In the combined use of two or more conductive materials, the total amount of the conductive materials should satisfy the range.

Any material safe against solvents and electrolytes that are used in manufacture of electrodes can be used as a binder used for the negative electrode. Examples of such materials include polyvinylidene fluoride, polytetrafluoroethylene, polyethylene, polypropylene, styrene-butadiene rubber, isoprene rubber, butadiene rubber, ethylene-acrylic acid copolymer, and ethylene-methacrylic acid copolymer. These binders may be used alone or in any combination of two or more kinds thereof at any proportion. The amount of the binder is typically 0.5 parts by weight or more and preferably 1 parts by weight or more, and typically 10 parts by weight or less and preferably 8 parts by weight or less based on 100 parts by weight of the negative electrode material. Below the lower limit of the amount of the binder, the strength of the resultant negative electrode may be insufficient, whereas above the upper limit, the battery capacity and conductivity may be insufficient due to relative lack of the negative-electrode active material. In the combined use of two or more binders, the total amount of the binders should satisfy the range.

The thickeners used for the negative electrode include carboxymethylcellulose, methylcellulose, hydroxymethylcellulose, ethylcellulose, polyvinyl alcohol, oxidized starch, phosphated starch, and casein. These thickeners may be used alone or in any combination of two or more kinds thereof at any proportion. The thickener may be used as necessary, and the amount of the thickener in the negative-electrode active material layer is typically 0.5% by weight or more and 5% by weight or less.

The slurry for forming the negative-electrode active material layer is prepared by mixing the above-mentioned negative-electrode active material with a conductive agent, a binder, or an optional thickener, and dispersing the mixture in an aqueous solvent or an organic solvent as a dispersion medium. Water is a typical aqueous solvent, but solvents other than water such as alcohols, e.g., ethanol or cyclic amides, e.g., N-methylpyrrolidone can be used in a proportion of about 30% by weight or less to water. The organic solvents typically include cyclic amides such as N-methylpyrolidone, straight chain amides such as N,N-dimethylformamide and N,N-dimethylacetamide, aromatic hydrocarbons such as anisole, toluene, and xylenes, and alcohols such as butanol and cyclohexanol. Among solvents preferred are cyclic amides such as N-methylpyrolidone, and straight chain amides such as N,N-dimethylformamide and N,N-dimethylacetamide. These solvents may be used alone or in any combination of two or more kinds thereof in any proportion.

The slurry may have any viscosity at which it can be applied on the current collector. Otherwise the amount of the solvent used may be varied to prepare slurry that have such a viscosity.

The resultant slurry is applied on the negative electrode current collector, dried, and then pressed to form a negative-electrode active material layer. The application can be performed by any known technique. The drying can be carried out by any known technique, including air drying, heating, and vacuum drying.

In forming the negative-electrode active material into an electrode by the above-mentioned technique, the electrode can have any structure, but the density of the active material on the current collector is preferably 1 g·cm⁻³ or more, more preferably 1.2 g· cm⁻³ or more, and most preferably 1.3 g·cm⁻³ or more, and preferably 2 g·cm⁻³ or less, more preferably 1.9 g·cm⁻³ or less, more preferably 1.8 g·cm⁻³ or less, and most preferably 1.7 g·cm⁻³ or less.

Above the upper limit of the density of the active material on the current collector, the particulate active material fails. This may increase the initial irreversible capacity, or impair the charge-discharge characteristics at high current density by a reduction in penetration of the nonaqueous electrolyte toward the interface of the current collector/the active material. Below the lower limit, the conductivity between the active materials decreases, and the electrical resistance increases. This may reduce the capacity per unit volume.

### <5-3-4. Lithium-containing Metal Complex Oxide Materials, and Configuration of Negative Electrode Containing Lithium-containing Metal Complex Oxide Materials, Physical Properties, and Preparation Process>

The lithium-containing metal complex oxide materials used as the negative-electrode active material can be any materials that can occlude and discharge lithium, but preferred are lithium-containing metal complex oxide materials that contain titanium, and more preferred are complex oxides of lithium and titanium (hereinafter abbreviated to as "lithium titanium complex oxide"). That is, the negative-electrode active material for lithium-ion secondary batteries containing a lithium titanium complex oxide having a spinel structure is most preferred due to a significant reduction in output resistance.

Also, lithium and titanium in the lithium titanium complex oxide may preferably be substituted with at least one element selected from the group consisting of other metal elements, for example, Na, K, Co, Al, Fe, Ti, Mg, Cr, Ga, Cu, Zn, and Nb.

The metal oxide is a lithium titanium complex oxide represented by the formula (7), wherein it is preferred to satisfy 0.7 ≤ x ≤ 1.5, 1.5 ≤ y ≤ 2.3, 0 ≤ z ≤ 1.6 due to its stable structure in intercalation and deintercalation of lithium ions.

[Chemical Formula 74]

LiₓTi_{y}M_{z}O₄ (7)

[wherein M represents at least one element selected from the group consisting of Na, K, Co, Al, Fe, Ti, Mg, Cr, Ga, Cu, Zn, and Nb.]

Among these compositions represented by the formula (7) preferred are
(a) 1.2 ≤ x ≤ 1.4, 1.5 ≤ y ≤ 1.7, z = 0
(b) 0.9 ≤ x ≤ 1.1, 1.9 ≤ y ≤ 2.1, z = 0, and
(c) 0.7 ≤ x ≤ 0.9, 2.1 ≤ y ≤ 2.3, z = 0
due to a good balance between battery characteristics.

Most preferred representative examples of these compounds are Li_{4/3}Ti_{5/3}O₄ for (a), Li₁Ti₂O₄ for (b), and Li_{4/5}Ti_{11/5}O₄ for (c). In the case of the structure wherein Z≠0, preferred is Li_{4/3}Ti_{4/3}Al_{1/3}O₄, for example.

In addition to the above-mentioned requirements, the negative-electrode active material according to the present invention further satisfies preferably at least one and most preferably two or more of the following physical properties and shape factors (1) to (16).

### (1) BET Specific Surface Area

The metal oxides that contain titanium used as the negative-electrode active material for lithium-ion secondary batteries according to the present invention (hereinafter referred to as "titanium-containing metal oxide") have a BET specific surface area of preferably 0.5 m²·g⁻¹ or more, more preferably 0.7 m²·g⁻¹ or more, more preferably 1.0 m²·g⁻¹ or more, and most preferably 1.5 m²·g⁻¹ or more, and preferably 200 m²·g⁻¹ or less, more preferably 100 m²·g⁻¹ or less, more preferably 50 m²·g⁻¹ or less, and most preferably 25 m²·g⁻¹ or less, as determined by the BET method.

Below the lower limit of the BET specific surface area, in the case of use of the metal oxide as the negative electrode material, the reaction area that is in contact with the nonaqueous electrolyte is decreased and the output resistance may increase. Above the upper limit, the surface and the end face of the titanium-containing metal oxide crystal are increased, thereby causing crystal strain. This may significantly increase the irreversible capacity, and barely produced preferred batteries.

The measurement of the specific surface area by the BET method is carried out after pre-drying a sample under a nitrogen stream at 350°C for 15 minutes, and then applying the nitrogen adsorption BET one-point method by nitrogen-helium mixed gas flow in which the relative pressure of the nitrogen to the atmospheric pressure is exactly adjusted to 0.3, with a surface area meter (Full Automatic Surface Area Measuring Instrument from Ookura Riken). The resulting specific surface area is defined as the BET specific surface area of the titanium-containing metal oxide according to the present invention.

### (2) Volume Average Particle Size

The volume average particle size of the titanium-containing metal oxide (when primary particles aggregate into secondary particles, the size of the secondary particles) is defined by the volume average particle size (median diameter) as determined a laser diffraction-scattering method.

The titanium-containing metal oxide has a volume average particle size of typically 0.1 µm or more, preferably 0.5 µm or more, and more preferably 0.7 µm or more, and typically 50 µm or less, preferably 40 µm or less, more preferably 30 µm or less, and most preferably 25 µm or less.

The volume average particle size is measured by dispersing carbon powder in a 0.2 mass% aqueous surface-active agent polyoxyethylene (20) sorbitan monolaurate solution (10 mL) using a laser diffraction-scattering particle size analyzer (LA-700 from Horiba Seisakusho). The resulting median diameter is defined as the volume average particle size of the carbonous materials according to the present invention.

Below the lower limit of the volume average particle size of the titanium-containing metal oxide, a large amount of binders may be required to fabricate electrodes, resulting in a reduction of battery capacity. Above the upper limit, the coated surface often becomes uneven in polar plating. This may be disadvantageous for the production process of batteries.

### (3) Average Primary Particle Size

When the primary particles aggregate into secondary particles, the titanium-containing metal oxide has an average primary particle size of typically 0.01 µm or more, preferably 0.05 µm or more, more preferably 0.1 µm or more, and most preferably 0.2 µm or more, and typically 2 µm or less, preferably 1.6 µm or less, more preferably 1.3 µm or less, and most preferably 1 µm or less.

The titanium-containing metal oxide above the upper limit of the average primary particle size cannot substantially form the particular secondary particles, and adversely affect the powder filling property, or significantly decrease the specific surface area. This may be likely to impair the battery characteristics such as output characteristics. The titanium-containing metal oxide below the lower limit typically may have poor reversibility of charging and discharging due to underdeveloped crystal, resulting in impaired secondary batteries.

The primary particle size is measured by scanning electron microscope (SEM) observation. Specifically, any 50 primary particles are selected in a photograph at a magnification that can make particles visible, for example, a magnification of 10,000 to 100, 000 times. For each primary particle, the longest value between the right and left intersections with a horizontal straight line is determined, and the average is calculated from the individual values to determine the primary particle size.

### (4) Shape

The particulate titanium-containing metal oxide has conventional shapes such as massive, polyhedral, spherical, spheroidal, plate, needle, and columnar shapes. Most preferably, the primary particles aggregate into spherical or spheroidal secondary particles.

Typically, in electrochemical devices, active materials in the electrode expand and contract during charging and discharging cycles. This stress often causes degradations such as failure of the active materials and breakage of the conductive path. Therefore, the secondary particles made of aggregated primary particles can moderate the stress caused by expansion and contraction to prevent the degradation, compared to single particulate active materials consisting of primary particles alone.

Furthermore, spherical or spheroidal particles, which cause little orientation during molding the electrode, preferably prevent expansion and contraction of the electrode during charging and discharging cycles, and are readily mixed homogeneously with a conductive agent in the production process, compared to axially oriented particles.

### (5) Tap Density

The titanium-containing metal oxide has a tap density of preferably 0.05 g·cm⁻³ or more, more preferably 0.1 g·cm⁻³ or more, more preferably 0.2 g·cm⁻³ or more, and most preferably 0.4 g·cm⁻³ or more, and preferably 2.8 g·cm⁻³ or less, more preferably 2.4g· cm⁻³ or less, and most preferably 2 g·cm⁻³ or less.

In the use of the titanium-containing metal oxide below the lower limit of the tap density as the negative electrode, the packing density does not substantially increase. Since the contact area between the particles also decreases, the resistance between the particles increases. This may lead to an increase in output resistance. Above the upper limit, the number of the voids between particles in the electrode is so small that flow channels for the nonaqueous electrolyte are decreased. This may lead to an increase in output resistance.

The measurement of the tap density is carried out by passing a sample through a sieve having a sieve aperture of 300 µm, dropping the sample in a 20-cm³ tapping cell to fill the cell up to the top face, and performing tapping 1000 times with a stroke length of 10 mm using a powder density measuring instrument (for example, a tap denser from Seishin Kigyo) followed by calculation of the tap density from the then volume and weight of the sample. The tap density calculated from the measurement is defined as the tap density of the titanium-containing metal oxide according to the present invention.

### (6) Circularity

The measurements of the circularity as the sphericity of the titanium-containing metal oxide preferably fall within the following range. The circularity is defined by the equation "circularity = (the perimeter of the corresponding circle having the same area as that of the particle projected shape) / (the actual perimeter of the projected particle shape)", and a titanium-containing metal oxide is theoretically spheric at a circularity of 1.

The circularity of the titanium-containing metal oxide is desirably close to 1, and typically 0.10 or more, preferably 0.80 or more, more preferably 0.85 or more, and most preferably 0.90 or more.

The charge-discharge characteristics at high current density are enhanced as the circularity increases. Therefore, below the lower limit of the circularity, the packing capacity of the negative-electrode active material may decrease, while the resistance between particles may increase. This may impair the short-time charge-discharge characteristics at high current density.

The measurement of the circularity is carried out with a flow particle image analyzer (a FPIA from Sysmex). About 0.2 g of sample is dispersed in an aqueous solution of 0.2 mass% of the surface-active agent polyoxyethylene (20) sorbitan monolaurate (about 50 mL), and is agitated with 28-kHz ultrasound of 60 W for one minute. After the detection range is set in the range of 0.6 to 400 µm, the circularity is measured for the particles having a particle size in the range of 3 to 40 µm. The resulting circularity is defined as the circularity of the titanium-containing metal oxide according to the present invention.

### (7) Aspect Ratio

The titanium-containing metal oxide has an aspect ratio of typically 1 or more, and typically 5 or less, preferably 4 or less, more preferably 3 or less, and most preferably 2 or less.

Above the upper limit of the aspect ratio, trails are generated during forming polar plates, and uniform coated surfaces can not be produced. This may impair the short-term charge-discharge characteristics at high current density. The lower limit is the theoretical lower limit of the aspect ratio of the titanium-containing metal oxide.

The aspect ratio is measured using a magnified image by scanning electron microscopic observation of the particulate carbonous material. After selection of any 50 graphite particles that are fixed to the end face of metal having a thickness of 50 µm or less, the maximum diameter (A) of the particulate carbonous material and the minimum diameter (B) that is perpendicular to the maximum diameter are measured by the three-dimensional observation accompanying rotation and tilt of the stage for each fixed sample, followed by determination of the average value of A/B. The aspect ratio (A/B) of the titanium-containing metal oxide according to the present invention is thereby determined.

### (8) Production process of Negative-Electrode Active Material

The titanium-containing metal oxide can be produced by any methods that do not depart from the spirit of the present invention, but examples of the methods include conventional production processes of inorganic compounds.

For example, an active material is produced by homogeneously mixing a titanium raw material such as titanium oxide with optional other elements as the raw material and Li sources such as LiOH, Li₂CO₃, and LiNO₃, and baking at elevated temperature.

Various methods can be envisaged in order to form spherical or spheroidal active materials, in particular. For example, an active material is produced by dissolving or grinding and dispersing a titanium raw material such as titanium oxide, and optional other materials as the raw materials in a solvent such as water, adjusting the pH with stirring to produce and collect a spherical precursor, and, as necessary, drying this precursor, followed by addition of Li sources such as LiOH, Li₂CO₃, and LiNO₃, and baking at elevated temperature.

In another exemplary method, an active material is produced by dissolving or grinding and dispersing a titanium raw material such as titanium oxide, and optional other materials as the raw materials in a solvent such as water, dry-molding with a spray dryer to form a spherical or spheroidal precursor, and adding Li sources such as LiOH, Li₂CO₃, and LiNO₃ to this precursor, followed by baking at elevated temperature.

In another exemplary method, an active material is produced by dissolving or grinding and dispersing a titanium raw material such as titanium oxide, and Li sources such as LiOH, Li₂CO₃, and LiNO₃, and optional other elements as the raw materials in a solvent such as water, and dry molding with a spray dryer to form a spherical or spheroidal precursor, followed by baking this precursor at elevated temperature.

At these steps, elements other than Ti, for example, Al, Mn, Ti, V, Cr, Mn, Fe, Co, Li, Ni, Cu, Zn, Mg, Ga, Zr, C, Si, Sn, and Ag may be incorporated into and/or in contact with the titanium-containing metal oxide structure. Use of active materials containing such elements allows the operating voltage and capacity of the secondary batteries to be regulated.

### (9) Fabrication of electrodes

The electrodes can be produced by any known method. For example, a binder, a solvent, and optional components such as thickener, conductive material, and filling material are added to the negative-electrode active material to make slurry, this slurry is applied on the current collector, and it is pressed after drying. A negative-electrode active material layer is thereby formed.

In the step immediately before an immersion process of a nonaqueous electrolyte for batteries, the thickness of the negative-electrode active material layer per side is typically 15 µm or more, preferably 20 µm or more, and more preferably 30 µm or more, and typically 150 µm or less, preferably 120 µm or less, and more preferably 100 µm or less.

Above the upper limit, the nonaqueous electrolyte cannot be satisfactorily penetrated toward the interface of the current collector. This may impair the charge-discharge characteristics at high current density. Below the lower limit, the volume ratio of the current collector to the negative-electrode active material increases. This may lead to a reduction in battery capacity. Furthermore, the negative-electrode active material is shaped into a sheet electrode through rollers or into a pellet electrode by compression molding.

### (10) Current Collector

The current collector that holds the negative-electrode active material may be any known collector. Examples of materials for the current collector for the negative electrode include metal materials such as copper, nickel, stainless steel, and nickel-plated steel, and preferred is copper from the viewpoint of ease of processing and cost.

The current collector that is made of metal material has a form of, for example, metal foil, metal cylinder, metal coil, metal plate, metal thin film, expanded metal, perforated metal, and sponged metal. Among these forms preferred is a metal foil, and more preferred are a copper foil and an aluminium foil, and most preferred are a rolled copper foil by a rolling process and an electrolytic copper foil by electrolysis, which are suitable for the current collector.

The copper foil that has a thickness of less than 25 µm can be used as a copper alloy that is stronger than pure copper (for example, phosphor bronze, titanium copper, Corson alloy, and Cu-Cr-Zr alloy). In addition, aluminium foil that has a low specific gravity can preferably be used as a current collector, which can reduce the weight of the battery.

The current collector that is made of the copper foil produced by the rolling process is hardly broken even if the negative electrode is rolled up tightly or at an acute angle since copper crystals are oriented in the rolling direction, and therefore is suitable for small cylindrical batteries.

The electrolytic copper foil can be produced by, for example, immersing a metal drum in the nonaqueous electrolyte that contains copper ions, applying a current while rotating the drum, copper being thereby deposited on the surface of the drum, and peeling this deposit off. Copper may be deposited on the surface of the rolled copper foil by electrolysis. One or two surfaces of the copper foil may be roughened or processed (for example, chromation treatment producing a thickness of several nm to 1 µm, and Ti substrate treatment).

Desirably, the current collector substrate further has the following physical properties.

### (10-1) Average Surface Roughness (Ra)

The current collector substrate of which the surface is provided with the negative-electrode active material thin film may have any average surface roughness (Ra), but the average surface roughness (Ra) is typically 0.01 µm or more and preferably 0.03 µm or more, and typically 1.5 µm or less and preferably 1.3 µm or less, and more preferably 1.0 µm or less as specified by the method described in JIS B0601-1994.

Within the range, superior charge and discharge cycle characteristics can be expected. In addition, the larger area of the interface with the active material thin film leads to enhanced adhesiveness with the negative-electrode active material thin film. The upper limit of the average surface roughness (Ra) is not specified, but is typically 1.5 µm or less since the current collector substrate having an average surface roughness (Ra) of more than 1.5 µm is generally unavailable as a foil having a thickness practical for batteries.

### (10-2) Tensile Strength

The tensile strength is given by dividing the maximum tensile force at break of a test piece by the cross sectional area of the test piece. The tensile strength in the present invention is measured by equipment and a method similar to those described in JIS Z2241 (Method of Tensile Test for Metallic Materials).

The current collector substrate has any tensile strength, but the tensile strength is typically 50 N·mm⁻² or more, preferably 100 N·mm⁻² or more, and more preferably 150 N·mm⁻² or more. A higher tensile strength is more preferred, but is typically 1000 N·mm⁻² or less from the viewpoint of industrial availability.

Any current collector substrate having a high tensile strength can inhibit cracks caused by expansion and contraction of the negative-electrode active material thin film during charging and discharging cycles, and can have superior cycle characteristics.

### (10-3) 0.2% Proof Strength

The 0.2% proof strength is a load required to give 0.2% plastic (permanent) strain meaning that 0.2 % of deformation remains after the load is released. The 0.2% proof strength is measured by the same equipment and method as those in the tensile strength.

The current collector substrate has any 0.2% proof strength, but desirably has a 0.2% proof strength of typically 30 N·mm⁻² or more, preferably 100 N·mm⁻² or more, and most preferably 150 N·mm⁻² or more. A higher 0.2% proof strength is more preferred, but is typically 900 N·mm⁻² or less from the viewpoint of industrial availability.

Any current collector substrate that has a high 0.2% proof strength can inhibit plastic deformation caused by expansion and contraction of the negative-electrode active material thin film during charging and discharging, and can have superior cycle characteristics.

### (10-4 Thickness of Metal Thin Film)

The metal thin film has any thickness, but the thickness is typically 1 µm or more, preferably 3µm or more, and more preferably 5 µm or more, and typically 1 mm or less, preferably 100 µm or less, and more preferably 30 µm or less.

At a thickness of the metal coating below 1 µm, the strength decreases. This may lead to difficulties of coating. The metal thin film having a thickness of more than 100 µm may lead to deformation of the electrode such as curling. In addition, the metal thin film may also be in the form of mesh.

### (11) Thickness Ratio between Current Collector and Negative-Electrode Active Material Layer

The thickness ratio between the current collector and the negative-electrode active material layer is not limited, but the ratio "(the thickness of the negative-electrode active material layer on one side immediately before immersion of the nonaqueous electrolyte)/(the thickness of the current collector)" is preferably 150 or less, more preferably 20 or less, and most preferably 10 or less, and preferably 0.1 or more, more preferably 0.4 or more, and most preferably 1 or more.

Above the upper limit of the thickness ratio between the current collector and the negative-electrode active material layer, the current collector may generate Joule's heat during charging and discharging at high current density. Below the lower limit, the volume ratio of the current collector to the negative-electrode active material increases. This may lead to low battery capacity.

### (12) Electrode Density

The electrode made of the negative-electrode active material may have any structure. The negative-electrode active material on the current collector has a density of preferably 1 g·cm⁻³ or more, more preferably 1.2 g·cm⁻³ or more, more preferably 1.3 g·cm⁻³ or more, and most preferably 1.5 g·cm⁻³ or more, and preferably 3 g· cm⁻³ or less, more preferably 2.5 g·cm⁻³ or less, more preferably 2.2 g·cm⁻³ or less, and most preferably 2 g·cm⁻³ or less.

Above the upper limit of the density of the active material on the current collector, the binding between the current collector and the negative-electrode active material is weak, and the electrode may be detached from the active material. Below the lower limit, the conductivity between the negative-electrode active materials decreases while the electrical resistance increases.

### (13) Binder

The binder that binds the negative-electrode active materials can be any material stable in solvents that are used in the nonaqueous electrolyte or during production of the electrode.

Examples include resinous polymers such as polyethylene, polypropylene, polyethylene terephthalate, polymethyl methacrylate, polyimides, aromatic polyamides, cellulose, and nitrocellulose; rubbery polymers such as SBR (styrene-butadiene rubber), isoprene rubber, butadiene rubber, fluororubber, NBR (acrylonitrile-butadiene rubber), and ethylene-propylene rubber; styrene-butadiene-styrene block copolymers, and hydrogenated polymers thereof; thermoplastic elastomeric polymers such as EPDM (ethylene-propylene-diene terpolymer), styrene-ethylene-butadiene-styrene copolymers, styrene-isoprene-styrene block copolymers, and hydrogenated polymers thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride, polytetrafluoroethylene, fluorinated polyvinylidene fluoride, and polytetrafluoroethylene-ethylene copolymers; and ion-conductivity polymer compositions of alkali metal ions (lithium ions, in particular). These binders may be used alone or in any combination of two or more kinds thereof at any proportion.

The solvent for forming slurry may be any solvent that can dissolve or disperse a negative-electrode active material, a binder, an optional thickener, and an optional conductive agent, and may be either aqueous or organic.

Examples of the aqueous solvents include water and alcohols, and examples of the organic solvents include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, dimethyl ether, dimethylacetamide, hexamethylphosphoramide, dimethyl sulfoxide, benzene, xylene, quinoline, pyridine, methylnaphthalene, and hexane. In particular, in an aqueous solvent containing a thickener together with a dispersant, slurry is made with a latex such as SBR. These solvents may be used alone or in any combination of two or more kinds thereof at any proportion.

The ratio of the binder to the negative-electrode active material is preferably 0.1 mass% or more, more preferably 0.5 mass% or more, most preferably 0.6 mass% or more, and preferably 20 mass% or less, more preferably 15 mass% or less, more preferably 10 mass% or less, and most preferably 8 mass% or less.

Above the upper limit of the ratio of the binder to the negative-electrode active material, the amount of the binder that does not contribute to the battery capacity may decrease. Below the lower limit, the strength of the negative electrode may decrease, which is not favorable in the step of fabricating batteries.

In particular, in the binder containing a rubbery polymer represented by SBR as a primary component, the ratio of the binder to the negative-electrode active material is typically 0.1 mass% or more, preferably 0.5 mass% or more, and more preferably 0.6 mass% or more, and typically 5 mass% or less, preferably 3 mass% or less, and more preferably 2 mass% or less.

In a binder containing a fluoropolymer such as polyvinylidene fluoride as a primary component, the ratio of the binder to the negative-electrode active material is typically 1 mass% or more, preferably 2 mass% or more, and more preferably 3 mass% or more, and typically 15 mass% or less, preferably 10 mass% or less, and more preferably 8 mass% or less.

The thickener is typically used in order to control the viscosity of the slurry. Nonlimiting examples of usable thickeners include carboxymethylcellulose, methyl cellulose, hydroxymethyl cellulose, ethyl cellulose, polyvinyl alcohol, oxidized starch, phosphated starch, casein, and salts thereof. These thickeners may be used alone or in any combination of two or more kinds thereof at any proportion.

The ratio of the thickener, if used, to the negative-electrode active material is 0.1 mass% or more, preferably 0.5 mass% or more, and more preferably 0.6 mass% or more, and typically 5 mass% or less, preferably 3 mass% or less, and more preferably 2 mass% or less.

If the ratio of the thickener to the negative-electrode active material is below the lower limit, the coating ability may significantly be impaired. Above the upper limit, the proportion of the negative-electrode active material in the negative-electrode active material layer decreases. This may lead to low battery capacity, and high resistance between the negative-electrode active materials.

### (14) Impedance

After the battery is charged from the discharged state to 60% of its nominal capacity, the resistance of the negative electrode is preferably 500Ω or less, more preferably 100Ω or less, and most preferably 50Ω or less, and/or double-layer capacity is preferably 1 x 10⁻⁶ F or more, more preferably 1 x 10⁻⁵ F or more, and most preferably 3 x 10⁻⁵ F or more. Use of the negative electrode within the range is preferred because satisfactory output characteristics are produced.

The lithium-ion secondary battery used for measurement of the resistance and double-layer capacity of the negative electrode has a capacity of at least 80% of the nominal capacity after the battery is charged at a current value at which the nominal capacity can be charged for 5 hours, kept in the state of being neither charged nor discharged for 20 minutes, and then discharged at a current value at which the nominal capacity can be discharged for 1 hour.

This lithium secondary battery in the discharged state is charged to 60% of the nominal capacity at a current value at which the nominal capacity can be charged for 5 hours, and immediately, the lithium secondary battery is transferred to a glove box in an argon atmosphere. In this glove box, the lithium secondary battery is rapidly dismantled and taken out such that the negative electrode does not discharge or short-circuit. In the case of a double coated electrode, the electrode active material on one side is stripped off without damaging the electrode active material on the other side. This negative electrode is punched into two sheets of 12.5 mmφ, and these sheets are isolated by a separator so that the active material surfaces do not misalign. Between the separator and each of the negative electrodes, 60 µL of nonaqueous electrolyte which has been used for the battery is added dropwise to bring the separator into close contact with each negative electrode. While this integrated entity blocked from the ambient air, the current collectors of the respective negative electrodes are connected electrically to each other and the alternating-current impedance method is carried out.

For the measurement, the complex impedance is measured at a temperature of 25°C in a frequency band of 10⁻² to 10⁵ Hz to determine a Nyquist plot. The circular arc for the negative-electrode resistance component in the plot is approximated to a semicircle to determine the surface resistance (Impedance Rct) and the double-layer capacity (Impedance Cdl).

### (15) Area of Negative-Electrode Plate

The area of the negative-electrode plate is not limited, and the negative-electrode plate is preferably designed to be slightly larger than the opposite positive-electrode plate so that the positive-electrode plate does not protrude outward from the negative-electrode plate. From the viewpoint of cycle life after repeated charging and discharging, and inhibition of degradation caused by storage at elevated temperatures, it is preferred to approximate the area of the negative electrode as close as possible to that of the positive electrode because the proportion of electrodes that work more uniformly and effectively increases to enhance characteristics. In particular, in the case of use at a high current, this design of the electrode area is important.

### (16) Thickness of Negative-Electrode Plate

The thickness of the negative-electrode plate is designed together with the positive-electrode plate to be used, and is not limited. However, the thickness of the laminate, excluding the thickness of the core metal foil, is typically 15 µm or more, preferably 20 µm or more, and more preferably 30 µm or more, and typically 150 µm or less, preferably 120 µm or less, and more preferably 100 µm or less.

### «5-4 Positive electrode»

Positive electrodes used for nonaqueous electrolyte secondary batteries according to the present invention will now be described.

### <5-4-1 Positive-Electrode Active Material>

Positive-electrode active materials used for the positive electrodes will now be described.

### (1) Composition

The positive-electrode active material can be any material that can electrochemically occlude and discharge ions, but substances containing lithium and at least one transition metal are preferred. Examples include lithium-transition metal complex oxides and lithium-containing transition metal phosphate compounds.

The lithium-transition metal complex oxides contain transition metals, preferably including V, Ti, Cr, Mn, Fe, Co, Ni, and Cu. Examples of the complex oxides include lithium-cobalt complex oxides such as LiCoO₂, lithium-nickel complex oxides such as LiNiO₂, lithium-manganese complex oxides such as LiMnO₂, LiMn₂O₄, and Li₂MnO₄, and substitution products thereof in which part of primary transition metal atoms in these lithium transition metal complex oxides is substituted by other metals such as Al, Ti, V, Cr, Mn, Fe, Co, Li, Ni, Cu, Zn, Mg, Ga, Zr, and Si.

Examples of the substitution products include, for example, LiNi_{0.5}Mn_{0.5}O₂, LiNi_{0.85}Co_{0.10}Al_{0.05}O₂, LiNi_{0.33}Co_{0.33}Mn_{0.33}O₂, LiMn_{1.8}Al_{0.2}O₄, and LiMn_{1.5}Ni_{0.5}O₄.

The lithium-containing transition metal phosphate compounds contain transition metals, preferably including V, Ti, Cr, Mn, Fe, Co, Ni, and Cu. Examples of the compounds include, for example, iron phosphates such as LiFePO₄, Li₃Fe₂ (PO₄)₃, and LiFeP₂O₇, cobalt phosphates such as LiCoPO₄, and substitution products thereof in which part of primary transition metal atoms in these lithium transition metal phosphate compounds is substituted by other metals such as Al, Ti, V, Cr, Mn, Fe, Co, Li, Ni, Cu, Zn, Mg, Ga, Zr, Nb, and Si.

### (2) Surface Coating

A substance having a composition different from the substance that comprises the main positive electrode active material (hereinafter referred to as "surface adhesion substance") may be fixed to the surface of the positive electrode active material. Examples of the surface adhesion substance include oxides such as aluminum oxide, silicon oxide, titanium oxide, zirconium oxide, magnesium oxide, calcium oxide, boron oxide, antimony oxide, and bismuth oxide, sulfate salts such as lithium sulfate, sodium sulfate, potassium sulfate, magnesium sulfate, calcium sulfate, and aluminium sulfate, and carbonate salts such as lithium carbonate, calcium carbonate, and magnesium carbonate.

These surface adhesion substances can be fixed to the positive electrode active material surface, for example, by a method of dissolving or suspending the substance in a solvent to be impregnate and add into the positive electrode active material followed by drying, a method of dissolving or suspending a precursor of the surface adhesion substance in a solvent positive electrode active material and penetrating the precursor into the positive electrode active material to be reacted by heating, and a method of adding the substance to a precursor of the positive electrode active material while baking it simultaneously.

The surface adhesion substance that is fixed to the surface of the positive electrode active material has a mass of typically 0.1 ppm or more, preferably 1 ppm or more, and more preferably 10 ppm or more and typically 20% or less, preferably 10% or less, and more preferably 5% or less based on the positive electrode active material.

The surface adhesion substance can inhibit oxidation of the nonaqueous electrolyte on the surface of the positive electrode active material, resulting in an improved battery life. However, a surface adhesion substance below the lower limit leads to unsatisfactory results, whereas a surface adhesion substance above the upper limit inhibits blocks flowing-in or flowing-out of lithium ions, resulting in an increase in resistance. Therefore the above-mentioned range is preferred.

### (3) Shape

The particulate positive electrode active material has conventional shapes such as massive, polyhedral, spherical, spheroidal, plate, needle, and columnar shapes. Most preferably, the primary particles aggregate into spherical or spheroidal secondary particles.

Typically, in electrochemical devices, active materials in the electrode expand and contract during charging and discharging cycles. This stress often causes degradations such as failure of the active materials and breakage of the conductive path. Therefore, the secondary particles made of aggregated primary particles can moderate the stress caused by expansion and contraction to prevent the degradation, compared to single particulate active materials consisting of primary particles alone.

Furthermore, spherical or spheroidal particles, which cause little orientation during molding the electrode, preferably prevent expansion and contraction of the electrode during charging and discharging cycles, and are readily mixed homogeneously with a conductive agent in the production process, compared to axially oriented particles.

### (4) Tap Density

The positive electrode active material has a tap density of typically 1.3 g·cm⁻³ or more, preferably 1.5 g·cm⁻³ or more, more preferably 1. 6 g·cm⁻³ or more, and most preferably 1.7 g·cm⁻³ or more, and typically 2.5 g·cm⁻³ or less, and preferably 2.4 g·cm⁻³ or less.

Use of a powdery metal complex oxide having a high tap density can allow a highly dense positive electrode active material layer to be formed. Below the lower limit of the tap density of the positive electrode active material, an amount of a dispersion medium required for forming the positive electrode active material layer is increased, and a required amount of the conductive material and the binder is also increased. This may lead to a restricted packing rate of the positive electrode active material into the electrode active material layer and thus the battery capacity in some cases. In addition, a higher tap density is generally preferred, without the upper limit. Below the lower limit, diffusion of lithium ions within the positive electrode active material layer with a nonaqueous electrolyte as a medium is rate-controlling, and the load characteristics may be impaired.

The measurement of the tap density is carried out by passing a sample through a sieve having a sieve aperture of 300 µm, dropping the sample in a 20-cm³ tapping cell to fill the cell volume, and performing tapping 1000 times with a stroke length of 10 mm using a powder density measuring instrument (for example, a tap denser from Seishin Kigyo) followed by calculation of the tap density from the volume and weight of the sample. The resulting tap density is defined as the tap density of the positive electrode active material according to the present invention.

### (5) Median Diameter d50

The median diameter d50 of the particulate positive-electrode active material (when the primary particles aggregate into secondary particles, the size of the secondary particles) can also be determined by a laser diffraction-scattering particle size analyzer.

The median diameter d50 is typically 0.1 µm or more, preferably 0.5 µm or more, more preferably 1 µm or more, and most preferably 3 µm or more, and typically 20 µm or less, preferably 18 µm or less, more preferably 16 µm or less, and most preferably 15 µm or less.

Below the lower limit of the median diameters d50, products having a high bulk density may barely be obtained. On the other hand, above the upper limit, it takes much time to diffuse lithium in the particles, resulting in impaired battery performances, or trails in the fabrication of the positive electrode for batteries, that is, application of a slurry of the active material, additives, such as conductive agents and binders, and a solvent into a thin film.

In addition, any combination of two or more positive electrode active materials that have different median diameters d50 at any proportion can also improve the filling property in the fabrication of the positive electrode.

The median diameter d50 is measured at a refractive index of 1.24 using a laser diffraction-scattering particle size analyzer LA-920 from Horiba Seisakusho after a 5-minutes ultrasonic dispersion in a dispersion medium of an aqueous solution of 0.1 mass% hexametaphosphate.

### (6) Average Primary Particle Size

When the primary particles aggregate into secondary particles, the positive-electrode active materials have an average primary particle size of typically 0.01 µm or more, preferably 0.05 µm or more, more preferably 0.08 µm or more, and most preferably 0.1 µm or more, and typically 3 µm or less, preferably 2 µm or less, more preferably 1 µm or less, and most preferably 0.6 µm or less.

The positive-electrode active material above the upper limit cannot substantially form the particular secondary particles, and adversely affect the powder filling property, or significantly decrease the specific surface area. This may be likely to impair the battery performance such as output characteristics. The positive-electrode active material below the lower limit typically may have poor reversibility of charging and discharging due to underdeveloped crystal, resulting in impaired secondary batteries.

The primary particle size is measured by scanning electron microscope (SEM) observation. Specifically, any 50 primary particles are selected in a photograph at a magnification of 10, 000 times. For each primary particle, the longest value between the right and left intersections with a horizontal straight line is determined, and the average is calculated from the individual values to determine the primary particle size.

### (7) BET Specific Surface Area

The positive electrode active material has a BET specific surface area of typically 0.2 m²·g⁻¹ or more, preferably 0.3 m²·g⁻¹ or more, and more preferably 0.4 m²·g⁻¹ or more, and typically 4.0 m²·g⁻¹ or less, preferably 2.5 m²·g⁻¹ or less, and more preferably 1.5 m²·g⁻¹ or less as determined by the BET method.

Below the lower limit of the BET specific surface area, the battery performance may readily be impaired. Above the upper limit, the tap density is barely increased, and the coating ability may be impaired in forming the positive electrode active material.

The BET specific surface area is measured with a surface area meter (Full Automatic Surface Area Measuring Instrument from Ookura Riken). The measurement is carried out after pre-drying a sample under nitrogen stream at 150°C for 30 minutes, and then applying the nitrogen adsorption BET one-point method by nitrogen-helium mixed gas flow in which the relative pressure of the nitrogen to the atmospheric pressure is exactly adjusted to 0.3. The resulting specific surface area is defined as the BET specific surface area of the positive electrode active material according to the present invention.

### (8) Production Process of Positive-Electrode Active Material

The positive electrode active material can be produced by any methods that do not depart from the spirit of the present invention, but examples of the methods include conventional production processes of inorganic compounds.

Various methods can be envisaged in order to form spherical or spheroidal active materials, in particular. For example, an active material is produced by dissolving or grinding and dispersing a transition metal raw material such as a transition metal nitrate or sulfate salt, and optional other materials as the raw materials in a solvent such as water, adjusting the pH with stirring to produce and collect a spherical precursor, and, as necessary, drying this precursor, followed by addition of Li sources such as LiOH, Li₂CO₃, and LiNO₃, and baking at elevated temperature.

In another exemplary method, an active material is produced by dissolving or grinding and dispersing a transition metal raw material such as a transition metal nitrate salt, sulfate salt, hydroxide, or oxide, and optional other elements as the raw materials in a solvent such as water, dry molding with a spray dryer to form a spherical or spheroidal precursor, and baking this precursor together with a Li source such as LiOH, Li₂CO₃, or LiNO₃ at elevated temperature.

In another exemplary method, an active material is produced by dissolving or grinding and dispersing a transition metal raw material such as a transition metal nitrate salt, sulfate salt, hydroxide, or oxide, a Li source such as LiOH, Li₂CO₃, or LiNO₃, and optional other elements as the raw materials in a solvent such as water, and dry molding with a spray dryer to form a spherical or spheroidal precursor, followed by baking this precursor at elevated temperature.

### <5-4-2 Structure and Fabrication Process of Electrode>

The configuration and fabrication process of the positive electrode used for the present invention will now be described.

### (1) Fabrication Process of Positive Electrode

The positive electrode is fabricated by forming a positive electrode active material layer containing a particulate positive electrode active material and a binder on a current collector. The positive electrode containing the positive electrode active material is produced by any known method. That is, a positive electrode active material, a binder, and optional components such as conductive material and thickener are dry mixed and shaped into a sheet, which is pressed on the positive electrode current collector, or these materials are dissolved or dispersed in a liquid medium to make slurry, this slurry is applied on the positive electrode current collector and it is dried. A positive electrode active material layer can thus be formed on the current collector to produce a positive electrode.

The amount of the positive electrode active material in the positive electrode active material layer is typically 10 mass% or more, preferably 30 mass% or more, and most preferably 50 mass% or more, and typically 99.9 mass% or less, and preferably 99 mass% or less. In a positive electrode below the lower limit of the amount of the positive electrode active material in the positive electrode active material layer, the electric capacity may be not satisfactory. In a positive electrode above the upper limit, the strength of the positive electrode may be not satisfactory. The powdery positive electrode active material according to the present invention may be used alone or in any combination of two or more kinds thereof having different compositions or different powder properties at any proportion.

### (2) Conductive Material

Any known conductive materials can be used as the conductive material. Examples include metal materials such as copper and nickel; carbonous materials such as graphites including natural graphite and artificial graphite; carbon blacks such as acetylene black; and amorphous carbon such as needle coke. These conductive materials can be used alone, or in any combination of two or more kinds thereof at any proportion.

The positive electrode active material layer contains a conductive material in an amount of typically 0.01 mass% or more, preferably 0.1 mass% or more, and more preferably 1 mass% or more, and typically 50 mass% or less, preferably 30 mass% or less, and more preferably 15 mass% or less.

In a positive electrode below the lower limit of the amount of the conductive material in the positive electrode active material layer, the conductivity may be not satisfactory. In a positive electrode above the upper limit, the battery capacity will be decreased.

### (3) Binder

The binder used for producing the positive electrode active material layer manufacture may be any material that is stable against a nonaqueous electrolyte or a solvent used for production of electrodes.

In the case of coating, the binder may be any material that can be dissolved or dispersed in a liquid medium used for production of electrodes. Examples include resinous polymers such as polyethylene, polypropylene, polyethylene terephthalate, polymethyl methacrylate, aromatic polyamides, cellulose, and nitrocellulose; rubbery polymers such as SBR (styrene-butadiene rubber), NBR (acrylonitrile-butadiene rubber), fluororubber, isoprene rubber, butadiene rubber, and ethylene-propylene rubber; thermoplastic elastomeric polymers such as styrene-butadiene-styrene block copolymer, and hydrogenated polymers thereof, EPDM (ethylene-propylene-diene tercopolymer), styrene-ethylene-butadiene-ethylene copolymer, styrene-isoprene-styrene block copolymer, and hydrogenated polymers thereof; soft resin polymers such as syndiotactic -1,2-polybutadiene, polyvinyl acetate, ethylene-vinyl acetate copolymers, and propylene-α-olefin copolymer; fluoropolymers such as polyvinylidene fluoride (PVdF), polytetrafluoroethylene, fluorinated polyvinylidene fluoride, and polytetrafluoroethylene-ethylene copolymers; and ion-conductivity polymer compositions of alkali metal ions (lithium ions, in particular). These binders may be used alone or in any combination of two or more kinds thereof at any proportion.

The amount of the binder in the positive electrode active material layer is typically 0.1 mass% or more, preferably 1 mass% or more, and more preferably 3 mass% or more, and typically 80 mass% or less, preferably 60 mass% or less, more preferably 40 mass% or less, and most preferably 10 mass% or less.

Below the lower limit of the ratio of the binder, the positive electrode active material cannot satisfactorily be held to cause an insufficient mechanical strength of the positive electrode, and the battery performance such as cycle characteristics may be impaired. Above the upper limit, the battery capacity and conductivity may be reduced.

### (4) Liquid Medium

The solvent for forming slurry can be any solvent that can dissolve or disperse a positive-electrode active material, a conductive agent, a binder, and a thickener that is used as necessary, and can be either aqueous or organic.

Examples of the aqueous media include, for example, water, and mixed media of alcohol and water. Examples of the organic media include aliphatic hydrocarbons such as hexane; aromatic hydrocarbons such as benzene, toluene, xylenes, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether and tetrahydrofuran (THF); amides such as N-methylpyrolidone (NMP), dimethylformamide, and dimethylacetamide; and aprotic polar solvents such as hexamethylphosphoramide and dimethyl sulfoxide. These media can be used alone, or in any combination of two or more kinds thereof at any proportion.

### (5) Thickener

In use of an aqueous medium as a liquid medium for forming slurry, it is preferred to form slurry with a thickener and latex such as styrene-butadiene rubber (SBR). The thickener is typically used in order to control the viscosity of the slurry.

Any thickeners that do not significantly impair the advantages of the present invention can be used, but include carboxymethylcellulose, methyl cellulose, hydroxymethyl cellulose, ethyl cellulose, polyvinyl alcohol, oxidized starch, phosphated starch, casein, and salts thereof. These thickeners may be used alone or in any combination thereof at any proportion.

The ratio of the thickener, if used, to the active material is typically 0.1 mass% or more, preferably 0.5 mass% or more, and more preferably 0.6 mass% or more, and typically 5 mass% or less, preferably 3 mass% or less, and more preferably 2 mass% or less.

Below the lower limit, the coating ability may significantly be impaired. Above the upper limit, the proportion of the active material in the positive-electrode active material layer decreases. This may lead to low battery capacity, and high resistance between the positive-electrode active materials.

### (6) Compaction

The positive electrode active material layer obtained by coating and drying is preferably compacted with a press such as a hand press and a roller press in order to increase the packing density of the positive electrode active material. The positive electrode active material layer has a density of preferably 1 g·cm⁻³ or more, more preferably 1.5 g·cm⁻³ or more, and most preferably 2 g·cm⁻³ or more, and preferably 4 g·cm⁻³ or less, more preferably 3.5 g·cm⁻³ or less, and most preferably 3 g·cm⁻³ or less.

Above the upper limit of the density of the positive electrode active material layer, penetration of the nonaqueous electrolyte toward the interface of the current collector/the active material is reduced to impair charge-discharge characteristics at high current density, in particular. Below the lower limit, the conductivity between active materials may be reduced, and the battery resistance may be increased.

### (7) Current Collector

Any known material can be used for the positive electrode current collector. Examples include metal materials such as aluminium, stainless steel, nickel plate, titanium, and tantalum; and carbonous materials such as carbon cloth and carbon paper. Among these materials preferred are metal materials, in particular aluminium.

Examples of the forms of the current collector include metal foil, metal cylinder, metal coil, metal plate, metal thin film, expanded metal, perforated metal, and sponged metal for metal materials, and carbon plate, carbon thin film, and carbon cylinder for carbonous materials. Among these forms preferred is a metal thin film. In addition, the thin film may also be in the form of mesh.

The metal thin film has any thickness, but the thickness is typically 1 µm or more, preferably 3 µm or more, and more preferably 5 µm or more, and typically 1 mm or less, preferably 100 µm or less, and most preferably 50 µm or less.

Below the lower limit of the thickness of the thin film, the strength required for the current collector may be insufficient. Above the upper limit of the thickness of the thin film, the handling of the current collector may be impaired.

The thickness ratio between the current collector and the positive electrode active material layer is not limited, but the ratio "(the thickness of the negative-electrode active material layer on one side immediately before immersion of the nonaqueous electrolyte) / (the thickness of the current collector) " is typically 150 or less, preferably 20 or less, and most preferably 10 or less, and typically 0.1 or more, preferably 0.4 or more, and most preferably 1 or more.

Above the upper limit of the thickness ratio between the current collector and the positive-electrode active material layer, the current collector may generate Joule's heat during charging and discharging at high current density. Below the lower limit, the volume ratio of the current collector to the positive-electrode active material increases. This may lead to low battery capacity.

### (8) Electrode Area

It is preferred that the area of the positive electrode active material layer be larger than the outer surface area of the battery case for improving the stability at high power and elevated temperature. Particularly, the ratio of the total electrode area of the positive electrode to the surface area of the case for the secondary battery may be preferably 20 or more, and more preferably 40 or more. The outer surface area of the case, which is of a shape of bottomed square, refers to the total area obtained through calculation from the dimensions of length, width, and height of the pack portion which houses power generating elements other than the projection portion of the terminal. The outer surface area of the case, which is of a shape of bottomed cylinder, refers to the geometrical surface area obtained by approximating the pack portion which houses power generating elements other than the projection portion of the terminal to a cylinder. The total electrode area of the positive electrode refers to the geometrical surface area of the laminated layer of the positive electrode that faces the laminated layer containing the negative-electrode active material. For the structure formed by the laminated layers of the positive electrode on both sides of the current collector foil, it refers to the sum of the areas of the sides individually calculated.

### (9) Discharge Capacity

In the case of use of a nonaqueous electrolyte for secondary batteries according to the present invention, it is preferred that a battery element housed in one battery case of the secondary battery have an electric capacity of 3 ampere hour (Ah) or more (the electric capacity when the battery is discharged from the full-charge state to the discharged state) since the low-temperature discharge characteristics is significantly improved. Therefore, positive electrode plates are designed so that the discharge capacity at full charge is typically 3 Ah (ampere hour) and preferably 4 Ah or more, and typically 20 Ah or less and preferably 10 Ah or less.

Below the lower limit, an electrode reaction resistance may cause a larger voltage drop during a high current extraction, resulting in an impaired electrical power efficiency. Above the upper limit, the electrode reaction resistance decreases and the electrical power efficiency increases, whereas the temperature distribution is wide by the internal heat generation of the battery during pulse charging and discharging, durability under repetition of charging and discharging cycles, and the heat dissipation efficiency may also be impaired for drastic heat generation in abnormal situations such as overcharge and internal short circuiting.

### (10) Thickness of Positive Electrode Plate

The thickness of the positive electrode plate is not limited, but the thickness of the laminated layer, excluding the thickness of the core metal foil, is preferably 10 µm or more and more preferably 20 µm or more, and preferably 200 µm or less and more preferably 100 µm or less to each side of the current collector for achieving high capacity, and high power, and high rate characteristics.

### <<5-5. Separator>>

A separator is typically interposed between the positive and negative electrodes in order to prevent short circuiting therebetween. In this case, the separator is typically impregnated with a nonaqueous electrolyte according to the present invention.

The separator can be any material and shape that do not significantly impair the advantages of the present invention. In particular, resin, fiber glass, and inorganic separators that are made from a material stable against the nonaqueous electrolyte according to the present invention are preferably used in the form of porous sheet or nonwoven fabric that has excellent liquid retention properties.

Examples of the materials for the resin and fiber glass separators can include polyolefins such as polyethylene and polypropylene, polytetrafluoroethylene, polyethersulfone, and glass filter. Among these materials preferred are glass filter and polyolefins, and more preferred are polyolefins. These materials may be used alone or in any combination of two or more kinds thereof at any proportion.

The separator has any thickness, but the thickness is typically 1 µm or more, preferably 5 µm or more, and more preferably 10 µm or more, and typically 50 µm or less, preferably 40 µm or less, and more preferably 30 µm or less.

A significantly thin separator below the lower limit may have impaired insulating properties and reduced mechanical strength. A nonaqueous electrolyte secondary battery containing a significantly thick separator above the upper limit may not only impair battery characteristics such as discharge rate characteristics, but also decreased energy density as a whole.

The separators in the form of porous film such as porous sheet or nonwoven fabric have any porosity, but the porosity is typically 20% or more, preferably 35% or more, and more preferably 45% or more, and typically 90% or less, preferably 85% or less, and more preferably 75% or less.

A separator having a significantly low porosity below the lower limit tends to have such an increased film resistance that the battery containing the separator will have impaired rate characteristics. A separator having a significantly high porosity above the upper limit tends to have reduced mechanical strength and impaired insulating properties.

The separator have any average pore size, but the size is typically 0.5 µm or less and preferably 0. 2 µm or less, and typically 0.05 µm or more.

A separator with a significantly large average pore size above the upper limit may tend to cause short circuiting. A separator with a significantly small average pore size below the lower limit may have such an increased film resistance that the battery containing the separator will have impaired rate characteristics.

Examples of the materials for the inorganic separators can include oxides such as alumina and silicon dioxide, nitrides such as aluminium nitride and silicon nitride, sulfate salts such as barium sulfate and calcium sulfate in the shape of a particle or a fiber.

Examples of the shape of the separator include thin film such as nonwoven fabrics, woven fabrics, and microporous membrane. The separator having a pore size of 0.01 to 1 µm and a thickness of 5 to 50 µm is preferably used in the shape of a thin film. Besides the shape of the independent thin film described above, separators produced by forming a composite porous layer containing the inorganic particles on the surface layers of the positive electrode and/or the negative electrode with a resinous binder can be used. For example, porous layers are formed using particulate alumina that has a 90% particle size of less than 1 µm and a fluorinated resin binder which are fixed on both sides of the positive electrode.

### «5-6. Battery Design»

### (Electrode Assembly)

The electrode assembly can be either of a laminated structure interposing the separator between the positive electrode plate and the negative electrode plate and a spiral-wound structure interposing the separator between the positive electrode plate and the negative electrode plate. The rate of the volume of the electrode assembly to the internal volume of the battery (hereinafter referred to as electrode assembly occupancy) is typically 40% or more and preferably 50% or more, and typically 90% or less, and preferably 80% or less.

Below the lower limit of the electrode assembly occupancy, the battery capacity is reduced. Above the upper limit, the void space is insufficient. This leads to expansion of the members of the battery with a rise of the battery temperature or an increased vapor pressure of the liquid electrolyte components, to cause the internal pressure to increase, the battery characteristics such as the repetition characteristics of charging and discharging cycles or storage at elevated temperature to be impaired, and a gas discharge valve that releases the internal pressure to escape outwards to be operated.

### (Current Collecting Structure)

The current collecting structure is not limited, but the structure preferably reduces the resistance at the wiring or joint portions in order to improve low-temperature discharge characteristics given by the nonaqueous electrolyte according to the present invention more efficiently. In such low internal resistance, the nonaqueous electrolyte according to the present invention can be especially noticeable advantages.

In the electrode assembly in the above-mentioned laminated structure, a bundle of the metal core portions of individual electrode layers are preferably welded to a terminal. Since a larger area of one electrode causes higher internal resistance, a plurality of terminals are preferably provided in the electrode to reduce the resistance. In the electrode assembly in the wound structure, the positive electrode and the negative electrode each can be provided with a plurality of lead structures to bundle into terminals, resulting in a decrease in the internal resistance.

The optimization of the structures can minimize the internal resistance. In use of the battery at high current, the impedance (hereinafter abbreviated to as "direct current component") is preferably 10 milliohm (mΩ) or less, and more preferably 5 milliohm (mΩ) or less, as determined by the 10 kHz alternating current method.

The battery having a direct current component of 0.1 milliohm or less has improved high power characteristics, but the proportion of the current collecting structure materials used may increase, resulting in a decrease in the battery capacity.

The nonaqueous electrolyte according to the present invention has effects on the decrease in the reaction resistance associated with lithium detaching from and entering the electrode active material. This contributes to excellent low-temperature discharge characteristics. However, in the battery typically having a direct current resistance of more than 10 milliohm (mΩ), the reduction of the reaction resistance is impaired by such a high direct current resistance and thus cannot be completely reflected to the low-temperature discharge characteristics. Use of the battery having a lower direct current resistance component can solve this disadvantage, and can satisfactorily exhibit the advantages of the nonaqueous electrolyte according to the present invention.

For fabricating the battery that can allow the nonaqueous electrolyte to exhibit its advantages, and have high low-temperature discharge characteristics, it is most preferred to simultaneously satisfy both this requirement and the above-mentioned requirement that a battery element housed in one battery case of the secondary battery has an electric capacity of 3 ampere hour (Ah) or more (the electric capacity when the battery discharges from the full charge state up to the discharged state).

### (Case)

The materials for the case can be any substance that is stable against the nonaqueous electrolyte. Particularly, metals such as nickel-plated steel plate, stainless, aluminium or aluminium alloy, magnesium alloy, or laminated films (laminate film) of a resin and an aluminum foil. For a reduction in the weight, metals of aluminium or aluminium alloy, and laminate films can favorably be used.

Examples of the cases made from the metals include those that have a hermetically sealed structure formed by depositing metals each other through laser welding, resistance welding, and ultrasonic welding, or have a caulk structure with the metals via a resinous gasket. The case made from the laminate film may have a hermetically sealed structure by heat-sealing the resinous layers each other. For improving the sealing properties, a resin different from that used for the laminate film may be interposed between the resinous layers. In particular, in the case of a hermetic structure formed by heat-sealing the current collector terminal, resins containing polar groups or modified resins in which polar groups are incorporated can preferably be used as the interposing resin for the joint of the metal and the resin,.

### (Protective Element)

Examples of the protective elements include PTC that increases the resistance during the abnormal heat generation or overcurrent (Positive Temperature Coefficient), a thermal fuse, a thermistor, and a valve that blocks the current flowing through the circuit caused by a sudden rise of the internal pressure and the internal temperature in the battery during the abnormal heat generation (current breaking valve). The protective element that cannot operate in a typical use at high current is preferably selected, and more preferred is a design that does not cause abnormal heat generation or thermal runaway without a protective element in view of high power output.

### (Case)

The nonaqueous electrolyte secondary battery according to the present invention is typically composed of the above-mentioned nonaqueous electrolyte, negative electrode, positive electrode, and separator housed in the case. This case can be any known case that does not significantly impair the advantages of the present invention.

Particularly, the case may be made from any materials, but examples of the material typically include nickel-plated iron, stainless steel, aluminium or its alloy, nickel, and titanium.

The case may also have various shapes, such as cylindrical, prismatic, laminated, coin, and large-scaled shapes.

### [Examples]

The present invention will now be described in more detail with reference to non-limiting Examples and Comparative Examples. The present invention can also include any modification of these examples within the scope of the invention.

### [Examples 1 to 23]

Examples 1 to 23 will now be described below.

### <Reactor and Reaction Atmosphere>

A reactor used was a stainless steel SUS316L airtight container of nominal 1L (actual capacity: 1. 3L) having a lid equipped with a valve, thermometer, a barometer, and a relief valve. After the reactor was thoroughly dried, it was placed into a chamber filled with inert gas (for example, nitrogen, argon, or helium). The reactor was charged with a hexafluorophosphate salt, a solvent, and a particular structural compound, and then a stirring bar for a magnetic stirrer was placed. The reactor was sealed with the lid and taken out from the chamber to perform the reaction of Examples 1 to 23.

### <Examples 1 to 17>

In Examples 1 to 17, lithium difluorophosphate was produced by the reaction based on a combination of experimental conditions described in Tables 1 to 3 for each example. The evaluated results of these examples are also shown in Tables 1 to 3.

In detail, the hexafluorophosphate salt and the particular structural compound were dissolved and were reacted with agitation by the magnetic stirrer in a reaction solvent in the reactor. In each example, the type and amount of the raw materials (the hexafluorophosphate salt and particular structural compound) and the reaction solvent used in the reaction, and the reaction temperature and the time are also shown in Tables 1 to 3.

After the reaction, the reaction solvent varied to a state "State after Reaction" shown in Tables 1 to 3. The solid precipitated in the reaction solvent was separated by the procedure shown in "Post-Processing" in Tables 1 to 3, was washed with a fresh reaction solvent of the same type, and was dried at 50°C under a reduced pressure of 1000 Pa.

"Filtering-out of Precipitate" of the column "Post-Processing" in Tables 1 to 3 represents separation of the precipitate through a membrane filter by filtration under reduced pressure.

The solid prepared by the reduced-pressure drying was analyzed by ion chromatography and the main product was identified as lithium difluorophosphate. Its purity was also determined. The ion chromatography was performed under known analytical conditions for metallic ions and inorganic anions recommended by the manufacturer using a column ICS-3000 made by Dionex.

Assuming that the all the protonic acid is HF, the concentration of the protonic acid determined by acid-base subtracted from the resulting F⁻ anion concentration titration was defined as the F⁻ anion concentration.

This is the same as the (1/nMⁿ⁺) F⁻ content.

### <Examples 18 to 23>

In Examples 18 to 23, lithium difluorophosphate was produced by the reaction based on a combination of experimental conditions described in Table 4 for each example. The evaluated results of these examples are also shown in Table 4.

In detail, the hexafluorophosphate salt and the particular structural compound were dissolved and were reacted with agitation by the magnetic stirrer in a reaction solvent in the reactor. In each example, the type and amount of the raw materials and the reaction solvent used in the reaction, and the reaction temperature and the time are also shown in Table 4.

The reaction solvent after the reaction was analyzed by gas chromatography. No remaining particular structural compound was observed and novel peaks were identified as byproducts that were theoretically predicted.

The low-boiling point components being the byproducts were removed from the reaction solution under reduced pressure. The removal of low-boiling point components under reduced pressure was carried out under such temperature and pressure conditions that the reaction solvent remained as much as possible, until the level of the low-boiling point components in the reaction solution reached the detection limit (0.1 mol ppm) of the gas chromatography.

After the removal of the low-boiling components under reduced pressure, the resulting reaction solution was analyzed by ¹H-NMR and ¹⁹F-NMR, and the product was identified as lithium difluorophosphate, which was quantitatively determined with the residual amount of the hexafluorophosphate salt.

No peak derived from theoretical byproducts or other unintended products was observed through the NMR and gas chromatography. The results show that no impurity was detected.

The NMR measurement was carried out using DMSO-d6 as a solvent and a CFCl₃ standard.

The gas chromatography was carried out at a heating rate of 5°C/min from 40°C using a TC-1 (inner diameter: 0.32 mm by 30m, layer thickness: 0.25 µm) column made by GL Science.

The reaction solution was analyzed by ion chromatography, acid-base titration to determine the F⁻ anion concentration, as in Examples 1 to 17. The lower limit of the reliable quantitative value was 1.0×10⁻² mol·kg⁻¹.

### <Results>

[Table 1]

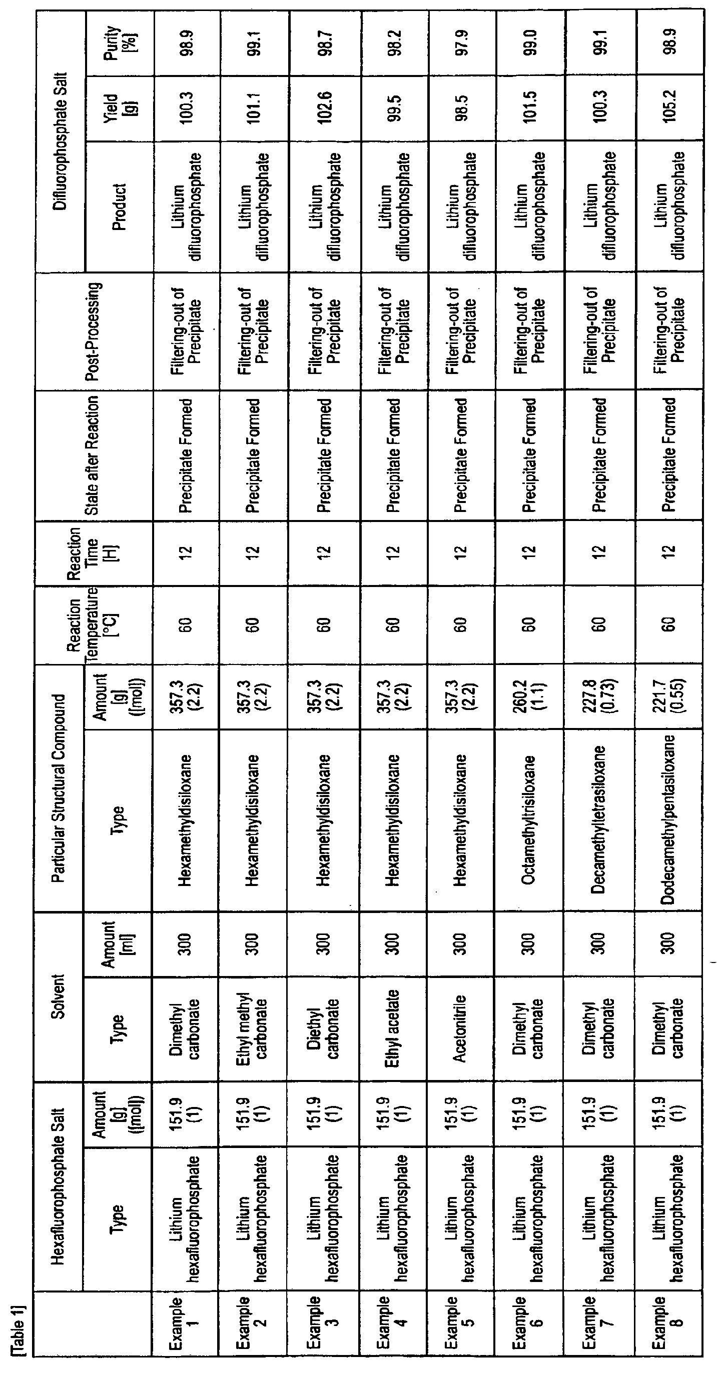

[Table 2]

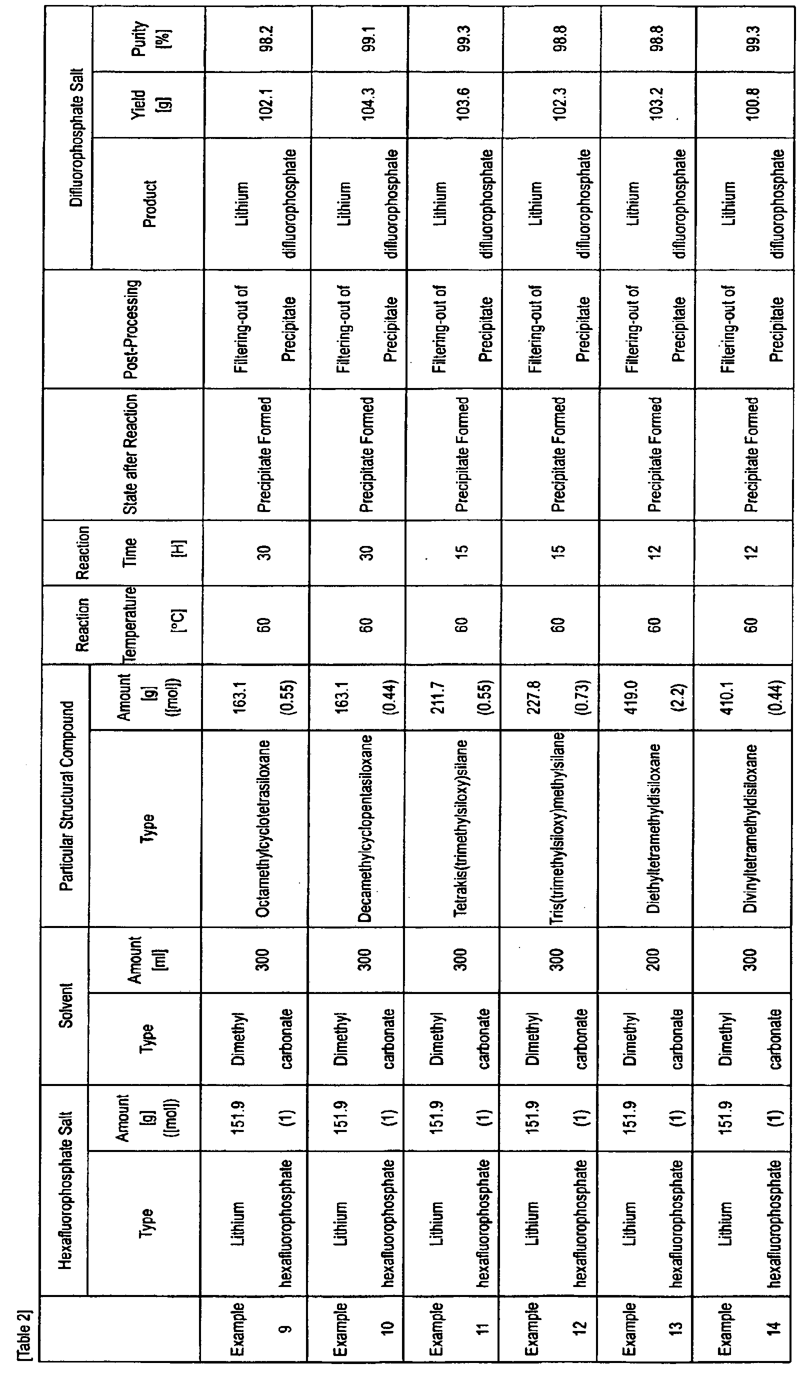

[Table 3]

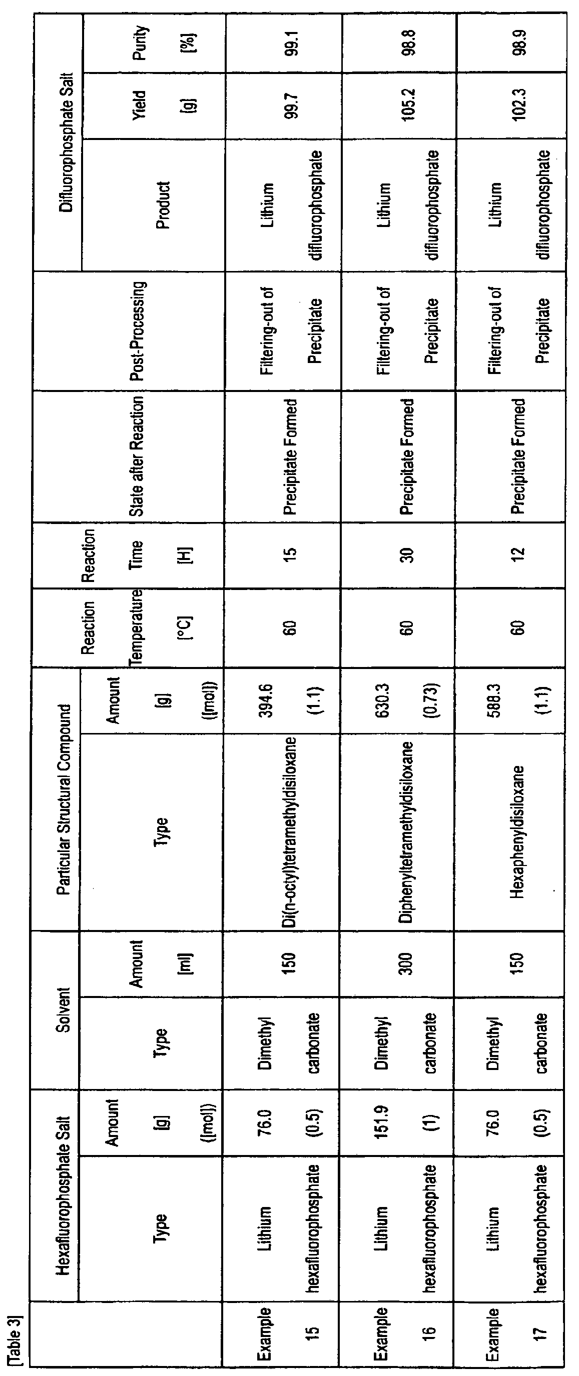

[Table 4]

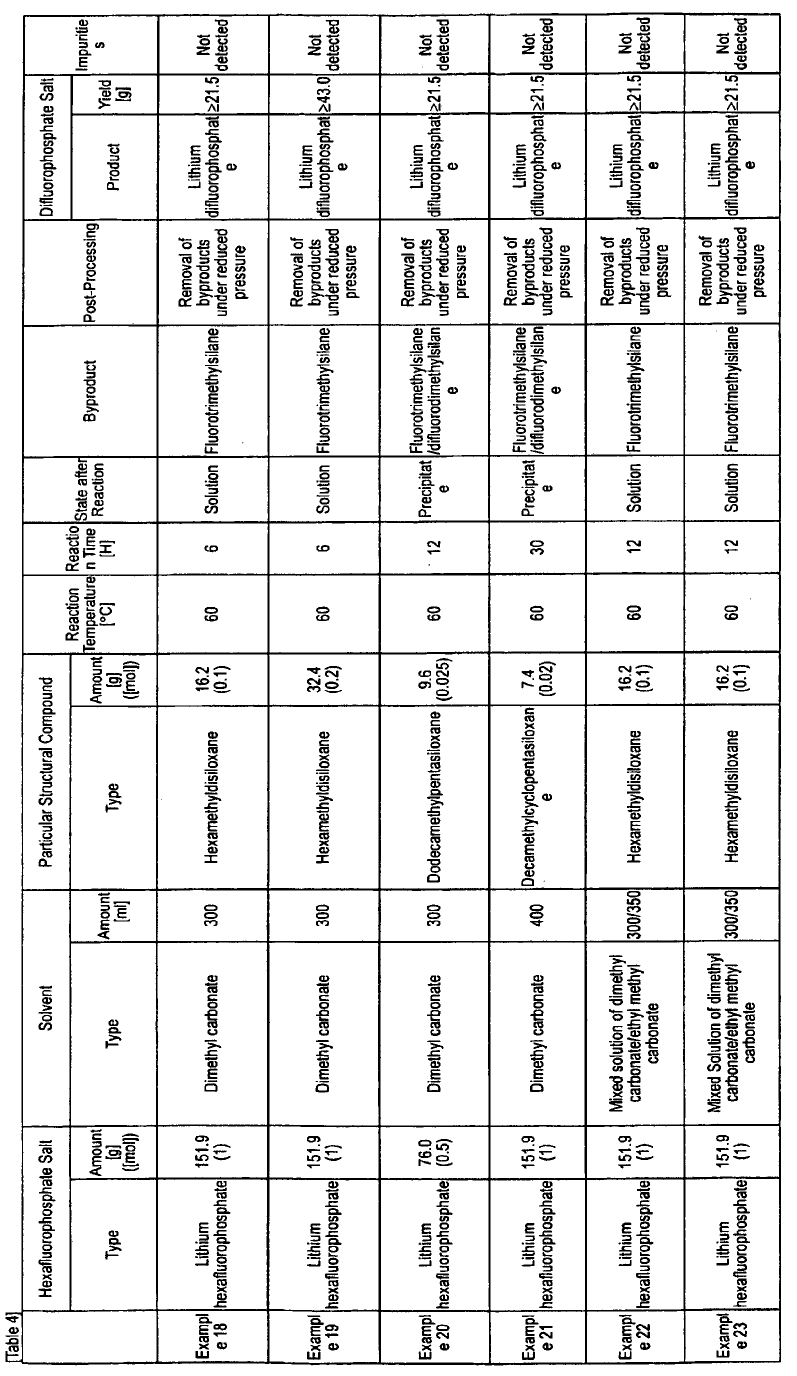

The results in Tables 1 to 3 demonstrate that high-purity lithium difluorophosphate can be prepared at a significantly high yield by the reaction of the hexafluorophosphate salt and the particular structural compound for a relatively short reaction time under mild conditions in Examples 1 to 17 according to the method of making lithium difluorophosphate of the present invention.

The results in Table 4 demonstrate that, a solution that contains a theoretical amount of lithium difluorophosphate but does not analytically contain impurities other than the residual hexafluorophosphate salt and the solvent can be prepared in Examples 18 to 23 according to the method of making a fluorophosphate solution of the present invention.

### [Examples 24 to 72 and Comparative Examples 1 to 20]

Examples 24 to 72 and Comparative Examples 1 to 20 will now be described below.

### <Preparation of Electrolyte>

A reactor used was a stainless steel SUS316L airtight container of nominal 1L (actual capacity: 1.3L) having a lid equipped with a valve, thermometer, a barometer, and a relief valve. After the reactor was thoroughly dried, it was placed into a chamber filled with inert gas (for example, nitrogen, argon, or helium). The reactor was charged with LiPF₆, a nonaqueous solvent and the particular structural compound listed in Tables 5 to 7, and then a stirring bar for a magnetic stirrer was placed. The reactor was sealed with the lid and taken out from the chamber to perform the treatment under the conditions (processing temperature and time) listed in Tables 5 to 7.

The solution after the treatment was analyzed by gas chromatography. No residual particular structural compound was observed while novel products were observed as shown in Tables 5 to 7.

The novel products were removed under reduced pressure from the solution after the treatment until the level of the product reached the detection limit (0.1 mol ppm) of the gas chromatography.

The spectra of the ¹H-NMR, ¹³C-NMR, and gas chromatography did not include peaks derived from theoretical impurities and other unintended products. Accordingly, no impurity was detected.

The ¹H-NMR and ¹³C-NMR measurement was carried out using DMSO-d6 as a solvent and a TMS standard.

The gas chromatography was carried out at a heating rate of 5°C/min from 40°C using a TC-1 (inner diameter: 0.25 µm by 30m) column made by GL Science.

A fresh solvent was added in a gas chromatographically analytical amount corresponding to the evaporated volume during the reduced pressure to complete the treatment of the present invention and post treatment.

Furthermore, salt, solvent, and additives (refer to Adjustment after Processing) were added, if necessary, to prepare electrolytes 1 to 23(nonaqueous electrolytes).

Electrolytes A to F that were prepared by mixing the electrolytes based on a composition listed in Table 8 were used in Examples 24 and 25 and Comparative Examples 1 to 18.

The electrolytes 1 to 25 and electrolytes A to F were analyzed by ion chromatography and acid-base titration as in Examples 1 to 17 to determine the F- anion level. The reliable lower limit of the quantitative value was 1.0x10⁻² mol•kg⁻¹.

The electrolyte G used in Comparative Example 19 was prepared from the electrolyte 1 and had a composition listed in Table 8.

The electrolyte H used in Comparative Example 20 was prepared as follows with reference to Example 1 in Japanese Unexamined Patent Application Publication No. 2007-035617:
Into a mixed solvent of 360 g of ethylene carbonate (EC), 310 g of dimethyl carbonate (DMC), and 400 g of diethyl carbonate (DEC) that were purified and mixed in a dried argon atmosphere was dissolved 151.9 g of well dried lithium hexafluorophosphate (LiPF6). The solution was mixed with 0.1 mol lithium carbonate for a reaction at 50°C for 72 hours. The solution was filtered out and the filtrate was used as a nonaqueous electrolyte. The fluoride salt in the filtrate was 2.0×10⁻² mol/kg.

### <Preparation of Secondary Batteries>

### <Preparation of Secondary Battery -1>

### (Preparation of Positive Electrode)

In a N-methylpyrrolidone solvent, 90 mass% lithium cobaltate (LiCoO₂) as a positive electrode active material, 5 mass% acetylene black as a conductive material, and 5 mass% poly(vinylidene fluoride) (PVdF) as a binder were mixed into slurry.

The resulting slurry was applied to two sides of a 15 µm thick aluminum foil and dried. The product was pressured into a thickness of 80 µm with a press, and trimmed into a shape of a positive electrode having an active material layer of a width of 100 mm and a length of 100 mm and an uncoating portion of a width of 30 mm.

### (Preparation of Negative Electrode)

Using a disperser, 98 parts by weight of artificial graphite powder KS-44 (commercial name by Timcal), 100 parts by weight of aqueous sodium carboxymethyl cellulose dispersion (concentration of sodium carboxymethyl cellulose: 1 mass%) as a thickener, and 2 parts by weight of aqueous dispersion of styrene-butadiene rubber (concentration of styrene-butadiene rubber: 50 mass%) as a binder were mixed into slurry.

The resulting slurry was applied to two sides of a 10 µm thick copper foil and was dried. The product was pressured into a thickness of 75 µm with a press, and trimmed into a shape of a negative electrode having an active material layer of a width of 104 mm and a length of 104 mm and an uncoating portion of a width of 30 mm.

### (Assembly of Battery)

The positive electrode and the negative electrode that were separated by a polyethylene separator were wound into an electrode unit. This was accommodated into a battery can such that the terminals of the positive electrode and negative electrode are exposed to the exterior. After 5 ml of electrolyte (described below) was injected, the can was caulked into a type 18650 cylindrical battery (referred to as secondary battery 1).

### <Preparation of Secondary Battery -2>

Secondary battery 2 was prepared as in secondary battery 1, except that the lithium cobaltate positive electrode active material was replaced with lithium nickelate manganate cobaltate (LiNi_{1/3}Mn_{1/3}Co_{1/3}O₂) and the charging voltage was 4.25 V.

### <Preparation of Secondary Battery -3>

Secondary battery 3 was prepared as in secondary battery 1, except that the lithium cobaltate positive electrode active material was replaced with lithium iron phosphate (LiFePO₄ and the charging voltage was 4.25 V.

### <Preparation of Secondary Battery -4>

As noncarbonaceous negative electrode active materials, 73.2 parts by weight of silicon, 8.1 parts by weight of copper, 12.2 parts by weight of artificial graphite powder KS-6 (commercial name by Timcal) were mixed with a 54.2 parts by weight of N-methylpyrrolidone solution containing 12 parts by weight of (poly(vinylidene fluoride): hereinafter abbreviated as "PVDF") and 50 parts by weight of N-methylpyrrolidone in a disperser into slurry.

The resulting slurry was uniformly applied onto an 18 µm thick copper foil as a negative electrode collector, was spontaneously dried, and was finally dried at 85°C over night under reduced pressure.

Secondary battery 4 was prepared as in secondary battery 1, except that the product was compressed into an electrode density of about 1.5 g·cm⁻³, and was punched out into a disk negative electrode (silicon alloy negative electrode) having a diameter of 12.5 mm negative electrode.

### <Preparation of Secondary Battery -5>

In a N-methylpyrrolidone solvent, 90 parts by weight of negative electrode active material (Li_{4/3}Ti_{5/3}O₄) was mixed with 5 mass% acetylene black as a conductive material, 5 mass percent poly(vinylidene fluoride) (PVdF) as a binder into slurry.

The resulting slurry was applied to one side of a 10 µm thick rolled copper foil and was dried. Secondary battery 5 was prepared as in secondary battery 1 except that the product was pressured into 90 µm with a press, and trimmed into a shape of a negative electrode having an active material layer of a width of 104 mm and a length of 104 mm and an uncoating portion of a width of 30 mm.

### Examples 24 to 72 and Comparative Examples 1 to 20

In Examples 24 to 72 and Comparative Examples 1 to 20, the following items were evaluated based on a combination of experimental conditions described in Tables 9 to 12 for each example and comparative example. The results are shown in Tables 9 to 12.

### <Evaluation of Secondary Battery>

Each secondary battery was evaluated under the following conditions.

### <Evaluation of secondary battery 1>

### (Cycle Retention Rate)

### ·Initial charge/discharge

The battery was charged to 4.2 V by a 0.2C pulse charging process at 25°C, and then discharged to 3.0 V at a 0.2C constant current. This cycle was repeated five times to stabilize the battery. The discharge capacity at the fifth cycle was defined as an initial capacity. The current when the rated capacity was discharged for 1 hour is defined as 1C.

### •Cycle test

The battery after initial charge/discharge was charged to 4.2 V at 60°C by a 1C pulse charging process, and then discharged to 3.0 V at a 1C constant current. This cycle was repeated 500 cycles. The ratio of the discharge capacity at the 500th cycle to that at the first cycle was defined as the cycle retention rate.

### (Initial low-temperature discharge rate)

### •Low-temperature test

The battery after the initial charge/discharge was charged by a 0.2C pulsed charge process to 4.2 V at 25°C, and was discharged by 0.2 constant current discharge at -30°C. The discharge capacity at this time was defined as the initial low-temperature capacity, and the rate of the initial low capacity to the initial capacity was defined as the initial low-temperature discharge rate.

### (Low-temperature discharge rate after cycles)

The battery after the cycle test was charged at a 0.2C pulsed charge process to 4.2 V at 25°C, and then was discharged at 0.2C constant current to 3.0 V. This cycle was repeated three times, and the discharge capacity at the third cycle was defined as the post-cycle capacity. This battery was charged at a 0.2C pulsed charge process to 4.2 V at 25°C, and then was discharged at 0.2C constant current at -30°C. The discharge capacity at this time was defined as the low-temperature discharge after cycles, and the rate of the low-temperature discharge after cycles to the post-cycle capacity was defined as the low-temperature discharge rate after cycles.

### <Evaluation of Secondary Battery 2>

Secondary battery 2 was evaluated as in secondary battery 1 except that the charge voltage in each test was varied from 4.2 V to 4.25 V.

### <Evaluation of Secondary Battery 3>

Secondary battery 3 was evaluated as in secondary battery 1 except that the charge voltage in each test was varied from 4.2 V to 3.8 V and the discharge voltage was varied from 3.0 V to 2.5 V.

### <Evaluation of Secondary Battery 4>

Secondary battery 4 was evaluated as in secondary battery 1 except that the discharge voltage was varied from 3.0 V to 2.5 V.

### <Evaluation of Secondary Battery 5>

Secondary battery 5 was evaluated as in secondary battery 1 except that the charge voltage in each test was varied from 4.2 V to 2.7 V and the discharge voltage was varied from 3.0 V to 1.9 V.

### <Results>

[Table 5]

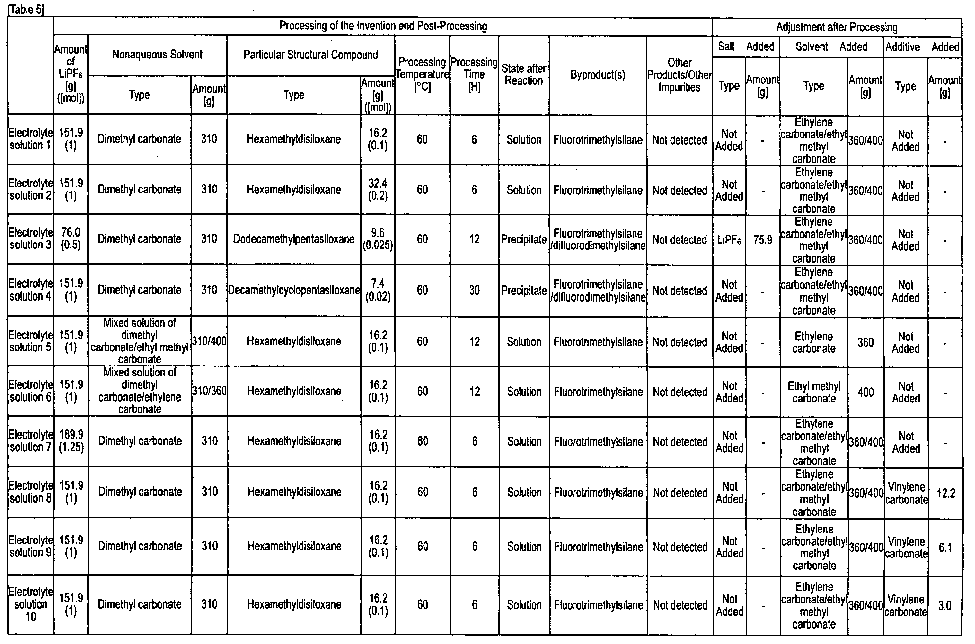

[Table 6]

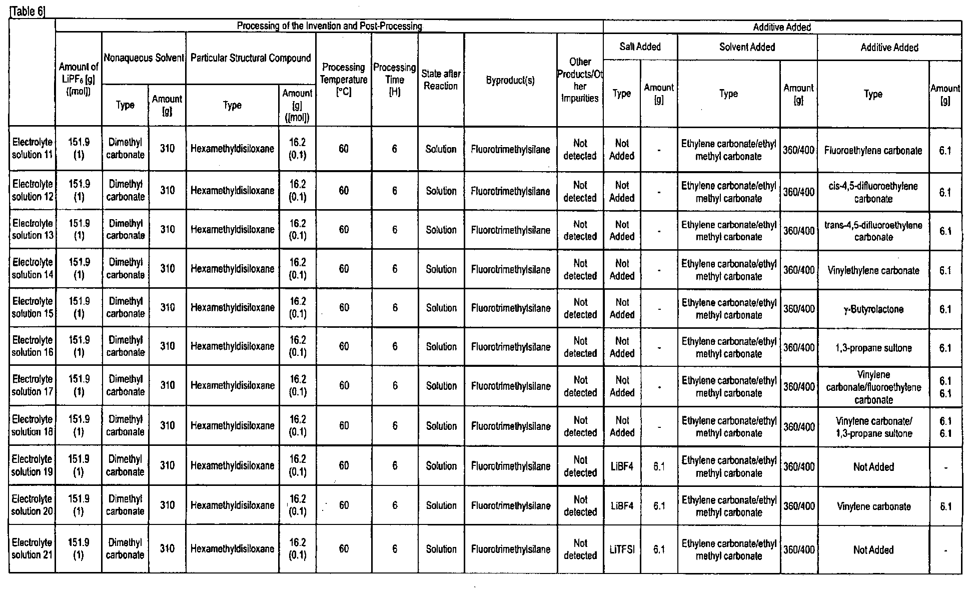

[Table 7]

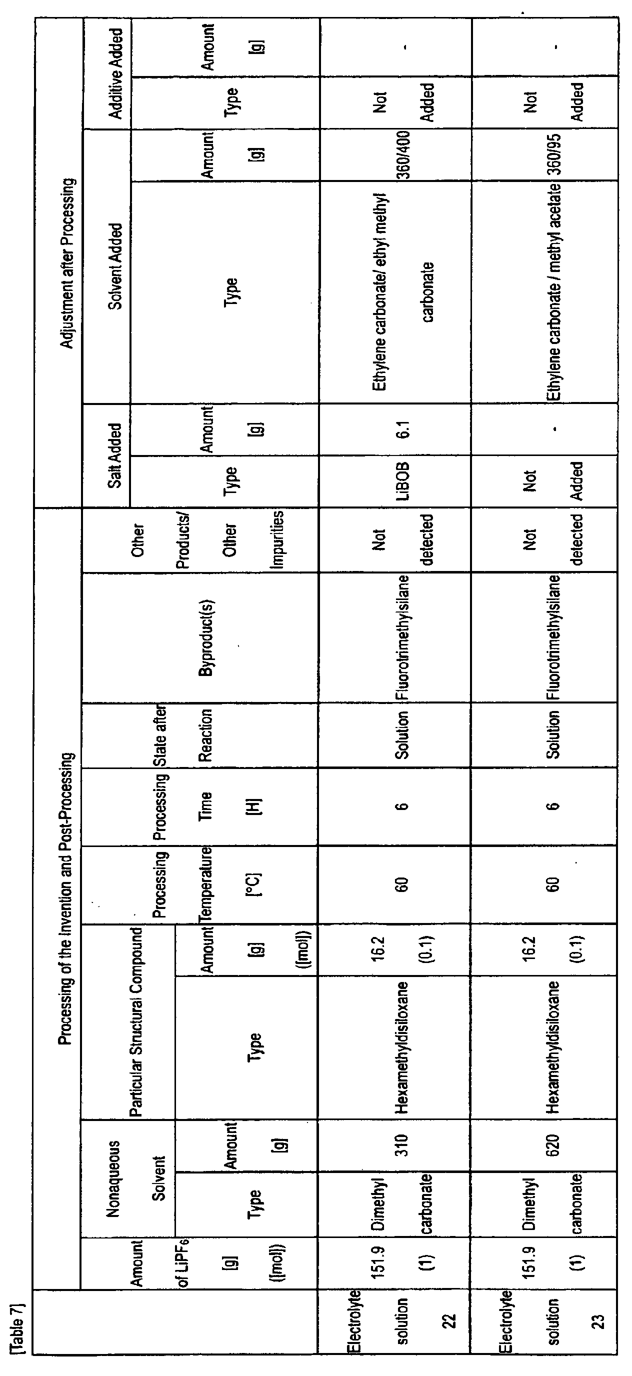

[Table 8]

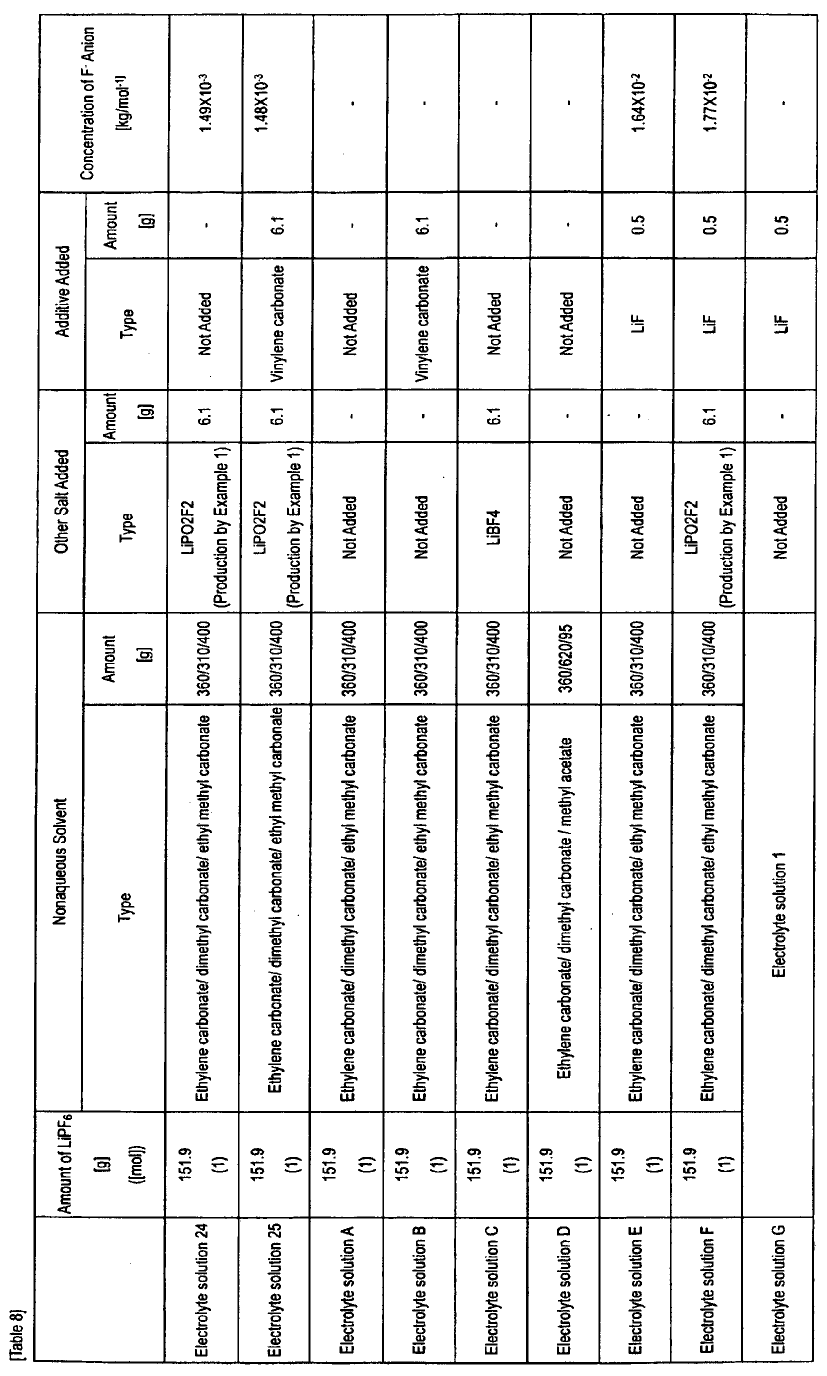

[Table 9]

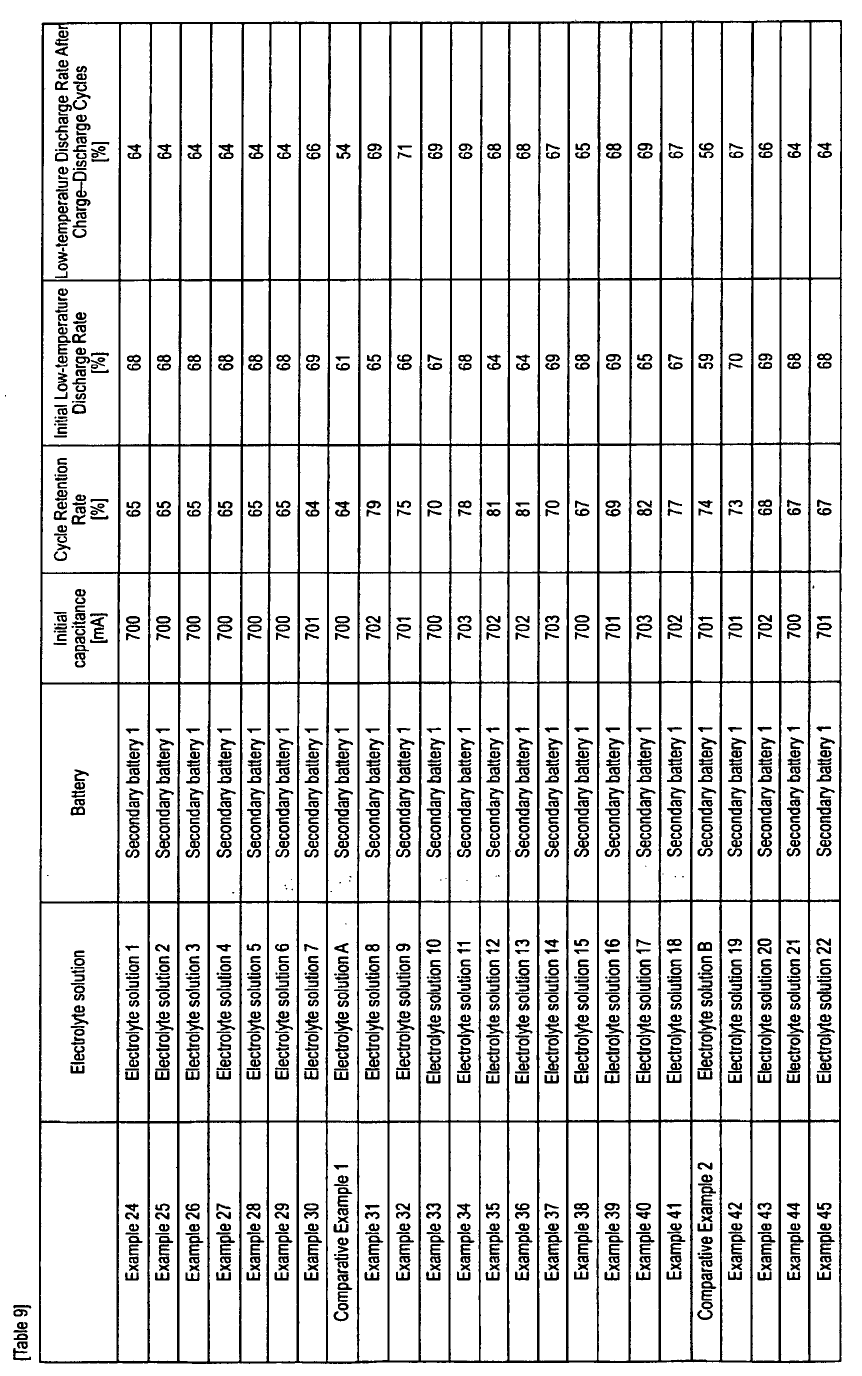

[Table 10]

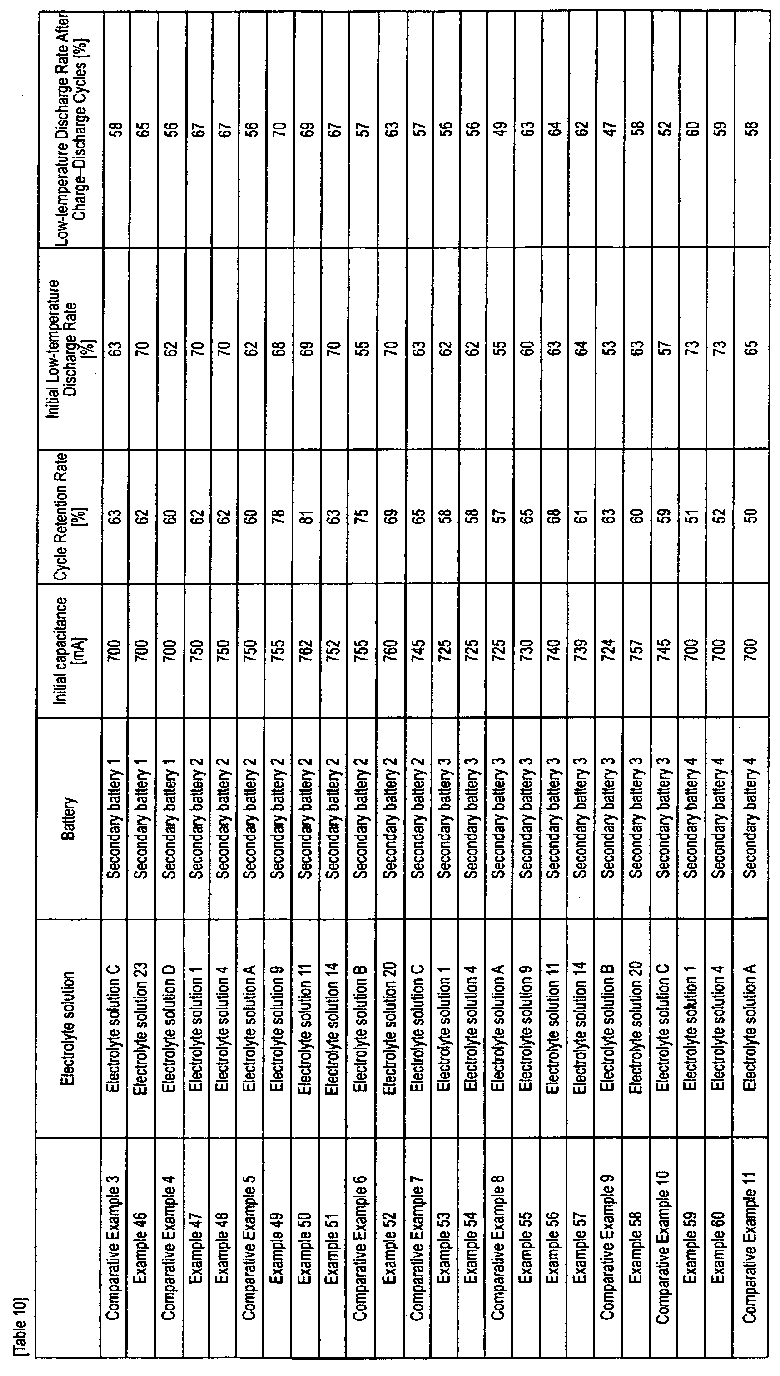

[Table 11]

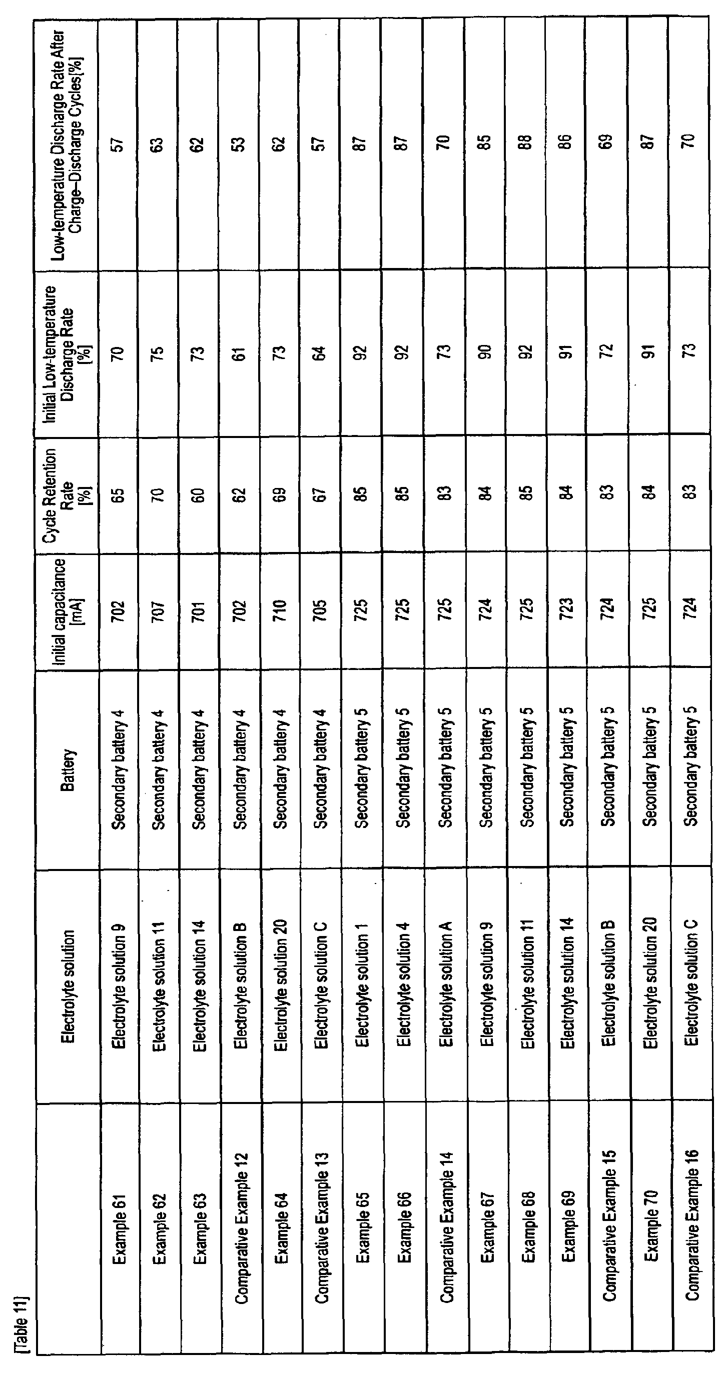

[Table 12]

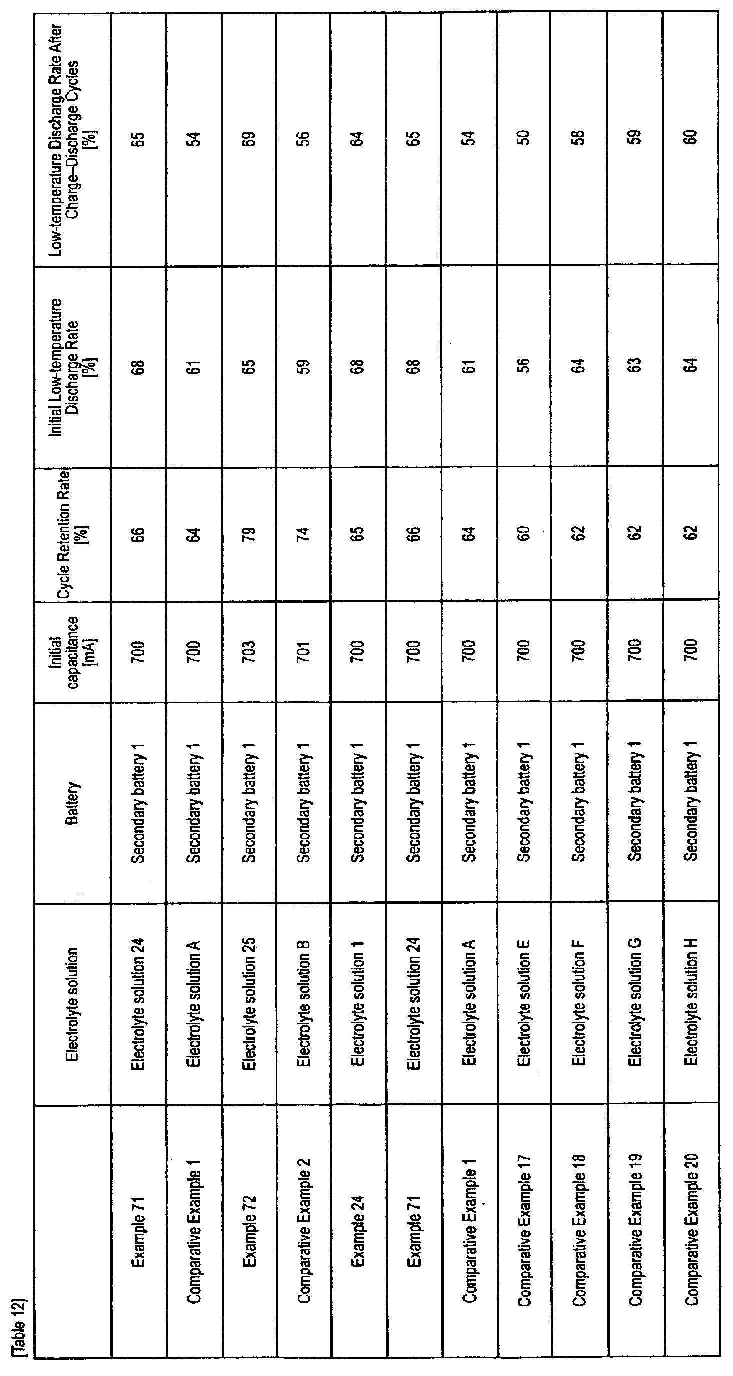

The results shown in Tables 5 to 12 demonstrate the following facts.

In comparison of Examples 24 to 30 with Comparative Example 1, Examples 24 to 30 using nonaqueous electrolytes of the present invention exhibit significantly improved initial low-temperature discharge rate and low-temperature discharge rate after cycles than Comparative Example 1.

In comparison of Examples 31 to 42 with Comparative Example 2, Examples 31 to 42 using nonaqueous electrolytes and particular structural compounds of the present invention exhibit significantly improved initial low-temperature discharge rate and low-temperature discharge rate after cycles than Comparative Example 2.

In comparison of Examples 42 to 45 with Comparative Example 3, Examples 42 to 45 using nonaqueous electrolytes and specific lithium salts of the present invention exhibit significantly improved initial low-temperature discharge rate and low-temperature discharge rate after cycles than Comparative Example 3.

In comparison of Example 46 with Comparative Example 4, Example 46 using nonaqueous electrolytes the present invention and other solvents exhibit significantly improved initial low-temperature discharge rate and low-temperature discharge rate after cycles than Comparative Example 4.

These results are effective even if configuration of the battery is modified.

In comparison of Examples 47 and 48 with Comparative Example 5, Examples 47 and 48 involving evaluation using secondary battery 2 instead of secondary battery 1 exhibit significantly improved initial low-temperature discharge rate, low-temperature discharge rate after cycles than Comparative Example 5.

In comparison of Examples 49 to 51 with Comparative Example 6, Examples 49 to 51 using nonaqueous electrolytes and particular structural compounds of the present invention exhibit significantly improved initial low-temperature discharge rate and low-temperature discharge rate after cycles than Comparative Example 6.

In comparison of Example 52 with Comparative Example 7, Example 52 using a nonaqueous electrolyte and a specific lithium salt of the present invention exhibit significantly improved initial low-temperature discharge rate and low-temperature discharge rate after cycles than Comparative Example 7.

In comparison of Examples 53 and 54 with Comparative Example 8, Examples 53 and 54 involving evaluation using secondary battery 3 instead of secondary battery 1 exhibit significantly improved initial low-temperature discharge rate, low-temperature discharge rate after cycles than Comparative Example 8.

In comparison of Examples 55 to 57 with Comparative Example 9, Examples 55 to 57 using nonaqueous electrolytes and particular structural compounds of the present invention exhibit significantly improved initial low-temperature discharge rate and low-temperature discharge rate after cycles than Comparative Example 9.

In comparison of Example 58 with Comparative Example 10, Example 58 using a nonaqueous electrolyte and a specific lithium salt of the present invention exhibit significantly improved initial low-temperature discharge rate and low-temperature discharge rate after cycles than Comparative Example 10.

In comparison of Examples 59 and 60 with Comparative Example 11, Examples 59 and 60 involving evaluation using secondary battery 4 instead of secondary battery 1 exhibit significantly improved initial low-temperature discharge rate, low-temperature discharge rate after cycles than Comparative Example 11.

In comparison of Examples 61 to 63 with Comparative Example 12, Examples 61 to 63 using nonaqueous electrolytes and particular structural compounds of the present invention exhibit significantly improved initial low-temperature discharge rate and low-temperature discharge rate after cycles than Comparative Example 12.

In comparison of Example 64 with Comparative Example 13, Example 64 using a nonaqueous electrolyte and a specific lithium salt of the present invention exhibit significantly improved initial low-temperature discharge rate and low-temperature discharge rate after cycles than Comparative Example 13.

In comparison of Examples 65 and 66 with Comparative Example 14, Examples 65 and 66 involving evaluation using secondary battery 5 instead of secondary battery 1 exhibit significantly improved initial low-temperature discharge rate, low-temperature discharge rate after cycles than Comparative Example 14.

In comparison of Examples 67 to 69 with Comparative Example 15, Examples 67 to 69 using nonaqueous electrolytes and particular structural compounds of the present invention exhibit significantly improved initial low-temperature discharge rate and low-temperature discharge rate after cycles than Comparative Example 15.

In comparison of Example 70 with Comparative Example 16, Example 70 using a nonaqueous electrolyte and a specific lithium salt of the present invention exhibit significantly improved initial low-temperature discharge rate and low-temperature discharge rate after cycles than Comparative Example 16.

In comparison of Example 71 with Comparative Example 1, Example 71 using a nonaqueous electrolyte to which lithium difluorophosphate produced in Example 1 was added later exhibit significantly improved initial low-temperature discharge rate and low-temperature discharge rate after cycles than Comparative Example 1.

In comparison of Example 72 with Comparative Example 2, Example 2 using a nonaqueous electrolyte and a particular structural compound exhibit significantly improved initial low-temperature discharge rate and low-temperature discharge rate after cycles than Comparative Example 2.

In comparison of Examples 24 and 71 to Comparative Example 1, Comparative Examples 17 to 19 using LiF being on of the (1/nMⁿ⁺) F-, Comparative Example 20 involving another process, Examples 24 and 71 exhibit significantly improved initial low-temperature discharge rate and low-temperature discharge rate after cycles than not only Comparative Example 1 but also Comparative Examples 17 to 20.

As described above, nonaqueous electrolyte secondary batteries including nonaqueous electrolytes of the present invention exhibit superior lot-temperature charge characteristics, high-current charge characteristics, high-temperature preservability, cycle characteristics, and safety.

### Industrial Applicability

The present invention can favorably be applied in any fields that use difluorophosphate salts, for examples, in the fields of stabilizing agents of chloroethylene polymers, catalysts of reaction lubricating oils, antibacterials for tooth pastes, and wood preserving agents. The present invention can favorably be used in the field of nonaqueous electrolyte secondary batteries.

The present invention has been described referring to specific embodiments, but it is apparent to a person skilled in the art that various modifications can be made without departing the spirit and scope of the present invention.

This application is based on Japanese Patent Application (Patent Application No. 2006-225409) filed on August 22, 2006, and Japanese Patent Application (Patent Application No. 2006-299360) filed on November 2, 2006, which are herein incorporated in their entireties by reference.

## Claims

1. A nonaqueous electrolyte comprising lithium difluorophosphate and one or more nonaqueous solvents and having a concentration of (1/nMⁿ⁺)F⁻ of less than or equal to 1.0 × 10⁻² mol·kg⁻¹,
wherein M represents a cation other than H and n represents an integer from one through ten,
wherein the lithium difluorophosphate is produced by a reaction of a hexafluorophosphate salt with a compound having a bond represented by the following formula (1) in the molecule:
Si-O-Si (1)
wherein the compound having the bond represented by the formula (1) is a compound represented by the following formula (2) : 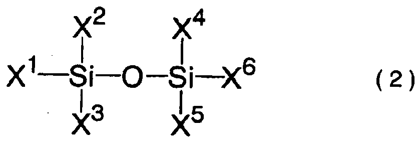 wherein X¹ to X⁶ each independently represent an optionally substituted hydrocarbon group or a group represented by the following formula (3), wherein any two or more of X¹ to X⁶ may be linked with each other to form a ring structure: 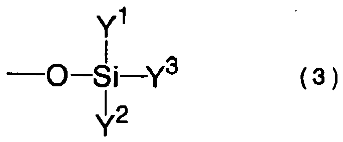 wherein Y¹ to Y³ each independently represent an optionally substituted hydrocarbon group, or one or more groups of Y¹ to Y³ may further be substituted by a group represented by the formula (3) to form a structure where a plurality of groups represented by the formula (3) are linked together.

2. The nonaqueous electrolyte according to claim 1, produced by mixing a nonaqueous solvent, a hexafluorophosphate salt, and the compound having the bond represented by formula (1), and removing, from the mixture, low-boiling components having a lower boiling point than that of the compound having the bond represented by formula (1).

3. A nonaqueous electrolyte secondary battery comprising:
a negative electrode and a positive electrode that can occlude and discharge ions, and a nonaqueous electrolyte, wherein the nonaqueous electrolyte is the nonaqueous electrolyte according to claim 1 or 2.

## Patentansprüche

1. Nichtwässriger Elektrolyt, der Lithiumdifluorphosphat und ein oder mehrere nichtwässrige Lösungsmittel umfasst und eine Konzentration von (i/nMⁿ⁺)F⁻ von weniger als oder gleich 1.0 × 10⁻² mol·kg⁻¹ aufweist,
worin M für ein anderes Kation als H steht und n für eine ganze Zahl von eins bis zehn steht,
wobei das Lithiumdifluorphosphat durch eine Reaktion eines Hexafluorphosphat-Salzes mit einer Verbindung, die eine durch die folgende Formel (1) wiedergegebene Bindung im Molekül aufweist, hergestellt wurde:
Si-O-Si (1)
wobei die Verbindung mit der durch die Formel (1) wiedergegebenen Bindung eine Verbindung ist, die durch die folgende Formel (2) wiedergegeben wird: 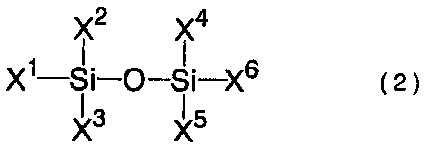 worin X¹ bis X⁶ jeweils unabhängig voneinander für eine optional substituierte Kohlenwasserstoffgruppe oder eine durch die folgende Formel (3) wiedergegebene Gruppe stehen, wobei zwei oder mehrere Vertreter von X¹ bis X⁶ miteinander verbunden sein können, um eine Ringstruktur zu bilden: 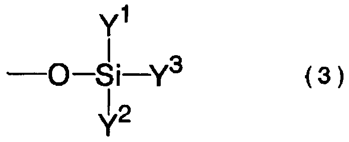 worin Y¹ bis Y³ jeweils unabhängig voneinander für eine optional substituierte Kohlenwasserstoffgruppe stehen oder eine oder mehrere Gruppen von Y¹ bis Y³ zusätzlich durch eine durch die Formel (3) wiedergegebene Gruppe substituiert sein können, um eine Struktur zu bilden, in der mehrere der durch die Formel (3) wiedergegebenen Gruppen miteinander verbunden sind.

2. Nichtwässriger Elektrolyt nach Anspruch 1, hergestellt durch das Vermischen eines nichtwässrigen Lösungsmittels, eines Hexafluorphosphat-Salzes und der Verbindung mit der durch die Formel (1) wiedergegebenen Bindung und das Entfernen von niedrigsiedenden Komponenten, die einen niedrigeren Siedepunkt als der von der Verbindung mit der durch die Formel (1) wiedergegebenen Bindung aufweisen, aus der Mischung.

3. Sekundärzelle mit nichtwässrigem Elektrolyt, umfassend: eine negative Elektrode und eine positive Elektrode, die Ionen okkludieren und entladen können, und einen nichtwässrigen Elektrolyt, wobei der nichtwässrige Elektrolyt ein nichtwässriger Elektrolyt nach Anspruch 1 oder 2 ist.

## Revendications

1. Électrolyte non aqueux comprenant du difluorophosphate de lithium et un ou plusieurs solvants non aqueux et ayant une concentration de (1/nMⁿ⁺F⁻ inférieure ou égale à 1,0 x 10⁻² mol·kg⁻¹,
dans lequel M représente un cation autre que H et n représente un entier de un à dix,
dans lequel le difluorophosphate de lithium est produit par une réaction d'un sel d'hexafluorophosphate avec un composé ayant une liaison représentée par la formule (1) suivante dans la molécule :
Si-O-Si (1)
dans lequel le composé ayant la liaison représentée par la formule (1) est un composé représenté par la formule suivante (2) : 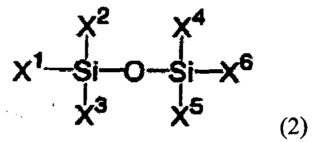 dans laquelle X¹ à X⁶ représentent chacun indépendamment un groupe hydrocarbure substitué optionnellement ou un groupe représenté par la formule (3) suivante, dans lequel deux quelconques ou plus de X¹ à X⁶ peuvent être liés les uns aux autres pour former une structure d'anneau : 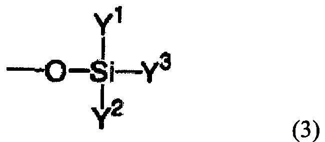 dans laquelle Y¹ à Y³ représentent chacun indépendamment un groupe hydrocarbure substitué optionnellement, ou un ou plusieurs groupes de Y¹ à Y³ peuvent en outre être substitués par un groupe représenté par la formule (3) pour former une structure où une pluralité de groupes représentés par la formule (3) sont liés ensemble.

2. Électrolyte non aqueux selon la revendication 1, produit en mélangeant un solvant non aqueux, un sel d'hexafluorophosphate, et le composé ayant la liaison représentée par la formule (1), et enlevant, du mélange, des composants à bas point d'ébullition ayant un point d'ébullition plus bas que celui du composé ayant la liaison représentée par la formule (1).

3. Batterie secondaire à électrolyte non aqueux comprenant :
une électrode négative et une électrode positive qui peuvent absorber et décharger des ions, et un électrolyte non aqueux, dans lequel l'électrolyte non aqueux est l'électrolyte non aqueux selon la revendication 1 ou 2.
